# EUROPÄISCHE PATENTSCHRIFT

(11) **EP 3 715 726 B1**
(45) Veröffentlichungstag und Bekanntmachung des Hinweises auf die Patenterteilung: **28.02.2024**
(21) Anmeldenummer: 20163030.8
(22) Anmeldetag: 13.03.2020
(51) Int. Cl.: F24D 3/08, F24D 10/00, F24D 17/00, F24D 17/02, F24D 19/10

(54) **WARMWASSERBEREITUNGSANLAGE UND VERFAHREN ZU DESSEN BETRIEB**
HOT WATER HEATING SYSTEM AND METHOD OF OPERATING THE SAME
INSTALLATION DE CHAUFFAGE DE L'EAU ET PROCÉDÉ POUR SON OPÉRATION

(30) Priorität: 20.03.2019 AT 502422019
(43) Veröffentlichungstag der Anmeldung: 30.09.2020
(73) Patentinhaber: Ortner Ges.m.b.H., 6020 Innsbruck (AT)
(72) Erfinder: ERHART, Harald, 6075 Tulfes (AT)
(74) Vertreter: Torggler & Hofmann Patentanwälte - Innsbruck

(56) Entgegenhaltungen:
- EP-A2- 1 895 241
- EP-A2- 2 151 637
- EP-A2- 2 375 175
- WO-A1-2016/075045
- DE-A1-102008 014 204
- GB-A- 2 534 608

## Beschreibung

Die vorliegende Erfindung betrifft eine Warmwasserbereitungsanlage mit den Merkmalen des Oberbegriffs des Anspruchs 1 und ein Verfahren zum Betreiben einer solchen Warmwasserbereitungsanlage.

Eine Warmwasserbereitungsanlage dient der Erwärmung von Trinkwasser eines mit der Warmwasserbereitungsanlage verbundenen Trinkwasserkreislaufs (siehe z.B. GB 2 534 608 A, EP 1 895 241 A2, WO 2016/075045 A1). Dazu ist die Warmwasserbereitungsanlage über eine Heizungs-Verbindung mit einem Heizwasserkreislauf verbunden und weist verschiedene Vorrichtungen auf, wie zumindest eine erste Puffervorrichtung zum Puffern von Erwärmungswasser, und eine mit dem Trinkwasserkreislauf verbundene Erwärmungsvorrichtung, welche zum Erwärmen des Trinkwassers durch die Wärme des Erwärmungswassers mit der ersten Puffervorrichtung verbunden ist. Je nach Last kann die erste Puffervorrichtung einen oder mehrere erste Pufferspeicher umfassen, die in Durchflussrichtung vorzugsweise parallel oder in Serie geschaltet sind.

Bei der Erwärmungsvorrichtung handelt es sich häufig um ein sogenanntes Frischwassermodul. Dieses dient zur Erwärmung des benötigten Trinkwassers im Durchflussprinzip. Ein Vorteil dabei ist, dass nur Wasser erwärmt wird, das auch benötigt wird und keine großen Trinkwasserpuffer notwendig sind. Große Mengen an gespeichertem warmen Trinkwasser stellen immer wieder ein hohes Hygienerisiko dar. Laut gängigen Normen und Vorschriften ist es tunlichst zu vermeiden Trinkwasserpufferanlagen im mittleren Temperaturniveau (25 bis 50 °C) zu betreiben. Das bedeutet, dass diese Pufferanlagen immer mindestens auf 60°C zu halten sind. Und das ist wieder mit Energieverlusten an die Umgebung verbunden.

Betreiber von Warmwasserbereitungsanlagen, insbesondere von solchen, die an einen Fernwärmeversorger angeschlossen sind, stehen vor der Aufgabe, die Vorlauftemperatur und die Rücklauftemperatur des Heizwasserkreislaufs so tief wie möglich zu halten und trotzdem noch hygienisch einwandfreies warmes Trinkwasser zu produzieren und eine thermische Desinfektion des erwärmten Trinkwassers noch zu ermöglichen.

Der Stand der Technik kämpft im Moment mit dem Problem, dass für die Warmwasserbereitung das Heizmedium mit mindestens 70°C Vorlauftemperatur zur Verfügung gestellt werden muss, um hygienisch einwandfreies Warmwasser zu produzieren und eine thermische Desinfektion zu ermöglichen. Dieses Problem trifft vorwiegend öffentliche Bereiche wie beispielsweise Krankenhäuser, Pflegeheime oder Hotelanlagen. Im privaten Bereich ist es unter Umständen durchaus zulässig, Warmwasser mit geringerem Heizungsvorlauf zu produzieren.

In diesem Zusammenhang ist es ein bekannter Nachteil, dass viele Fernwärmeversorger nur im Winter eine hohe Vorlauftemperatur zur Verfügung stellen. Im Sommer stehen oft nur bis zu 60°C Vorlauftemperatur im Fernwärmenetz zur Verfügung. Mit dieser Vorlauftemperatur kann kein normgerechtes und hygienisch einwandfreies Warmwasser hergestellt werden und eine thermische Desinfektion ist nicht möglich.

Ein weiterer bekannter Nachteil ist, dass in bestehenden Mittel- und Großanlagen die Vorlauftemperatur des Heizwasserkreislaufs nur wegen der Warmwasserbereitung und der Warmwasserzirkulation hoch gehalten werden muss. Die reine Gebäudeheizung würde eine maximale Vorlauftemperatur von bis zu 60°C zulassen. Durch die Warmwasserbereitung und die Warmwasserzirkulation muss jedoch der Heizungsvorlauf im Normalfall mindestens bei 70°C gehalten bzw. im thermischen Desinfektionsfall oder bei thermischen Desinfektionsstrecken in den Warmwasserbereitungsanlagen mindestens bei 80°C gehalten werden. Es wird somit sowohl im Sommer als auch im Winter ständig die gesamte Heizungsanlage im Hochtemperaturbereich gehalten, was hohe Energieverluste mit sich zieht. Im Sommer muss dieser Energieeintrag bei klimatisierten Gebäuden noch zusätzlich gekühlt werden.

Diesem Problem wird häufig dadurch entgegengewirkt, dass die Puffervorrichtungen mit Elektroheizeinsätzen versehen werden. Diese Art der Erhöhung der Vorlauftemperatur des Heizwasserkreislaufs ist jedoch unwirtschaftlich, da sie einen schlechten Wirkungsgrad hat.

Ein weiterer bekannter Nachteil ist, dass Warmwasserbereitungsanlagen, die in reinem Warmwasserzirkulationsbetrieb fahren, eine hohe Rücklauftemperatur im Heizwasserkreislauf bzw. in der Hauptheizungsanlage verursachen. Da die Warmwasserzirkulation aus hygienischen Gründen nicht tiefer als mit 55°C betrieben werden darf, ist somit der Heizungsrücklauf ständig höher als 55°C. Messungen und Erfahrungswerte haben gezeigt, dass dieser Zustand (reine Warmwasserzirkulation) mindestens für 14 bis 18 Stunden am Tag eintritt. Es ist daher nicht möglich, mit herkömmlichen, bis dato eingesetzten und dem Stand der Technik entsprechenden Anlagen dauerhaft eine tiefe Rücklauftemperatur unter 40°C zu liefern bzw. zu gewährleisten. Bestrebungen der Industrie gehen dahin, große Trinkwasserpuffer oder Heizungspuffer einzusetzen, um die bei der Warmwasserbereitung entstehenden tiefen Temperaturen zwischenzuspeichern und diese tiefen Temperaturen dann wieder für den reinen Warmwasserzirkulationsbetrieb zu nutzen. Das bedingt jedoch große Stellflächen für Pufferanlagen und oft eine komplizierte Regelung. Werden solche Anlagen dann im Teillastbetrieb gefahren (Warmwasserentnahme entspricht nicht der Auslegung wie z.B. durch geringe Belegung des Hotels oder durch Überdimensionierung der Warmwasserbereitung) reicht oft der zwischengespeicherte kühle Anteil nicht mehr aus, um dauerhaft tiefe Rücklauftemperaturen in der Hauptheizungsanlage zu gewährleisten. Werden die tiefen Temperaturen im Warmwasserpufferspeicher zwischengespeichert, entstehen in diesen Pufferanlagen Mischzonen mit Temperaturen, die wiederum das Wachstum von Legionellen oder Bakterien begünstigen. Daher ist von dieser Art der Speicherung von tiefen Temperaturen in hygienisch relevanten Anlagen abzuraten.

Aufgabe der Erfindung ist es, die vorbeschriebenen Nachteile zu vermeiden und eine gegenüber dem Stand der Technik verbesserte Warmwasserbereitungsanlage und ein gegenüber dem Stand der Technik verbessertes Verfahren zum Betreiben einer Warmwasserbereitungsanlage anzugeben.

Diese Aufgabe wird durch eine Warmwasserbereitungsanlage mit den Merkmalen des Anspruchs 1 und ein Verfahren zum Betreiben einer solchen Warmwasserbereitungsanlage gelöst. Vorteilhafte Ausführungsformen der Erfindung sind in den abhängigen Ansprüchen definiert.

Bei der Erfindung ist vorgesehen, dass die Warmwasserbereitungsanlage eine mit der Heizungs-Verbindung verbundene Wärmepumpenvorrichtung umfassend wenigstens eine Wärmepumpe umfasst, wobei die Wärmepumpenvorrichtung mit der ersten Puffervorrichtung verbunden ist.

Je nach Last kann die Wärmepumpenvorrichtung eine oder mehrere Wärmepumpen umfassen. Es ist auch möglich, Wärmepumpen mit unterschiedlichen Nennleistungen miteinander zu verschalten.

Üblicherweise umfasst eine Wärmepumpe die Komponenten Verdampfer, Verdichter, Kondensator und Expansionsventil, die einen geschlossenen Kreislauf bilden. Am Verdampfer wird einem der Wärmepumpe zugeführten Medium eines mit der Wärmepumpe verbundenen Eingangskreislaufs (häufig auch als Quellenseite bezeichnet), das eine Eingangstemperatur aufweist, Wärme entzogen (z.B. wird bei herkömmlichen Wärmepumpen häufig dem Erdreich oder der Luft Umweltwärme entzogen). Dabei geht ein flüssiges Arbeitsmedium (in der Regel ein Kältemittel) im Verdampfer vom flüssigen in den gasförmigen Zustand über. Der Verdichter (in der Regel elektrisch betrieben) komprimiert das gasförmige Arbeitsmedium und bringt es auf ein höheres Temperaturniveau. Am Kondensator gibt das erwärmte Arbeitsmedium seine Wärme an ein die Wärmepumpe verlassendes Medium eines mit der Wärmepumpe verbundenen Ausgangskreislaufs (häufig auch als Senkenseite bezeichnet) ab und wird dabei wieder flüssig. Dadurch wird das die Wärmepumpe verlassende Medium des Ausgangskreislaufs auf eine Ausgangstemperatur erwärmt. Danach wird das unter Druck stehende Arbeitsmedium über das Expansionsventil entspannt und der zuvor beschriebene Prozess kann von Neuem beginnen.

Mit der Wärmepumpenvorrichtung kann nun eine Eingangstemperatur (eines in die wenigstens eine Wärmepumpe einbringbaren Mediums des Eingangskreislaufs) unter zusätzlicher Einbringung von Arbeitsenergie (z.B. aus elektrischem Strom zum Betrieb des Verdichters) auf eine gegenüber der Eingangstemperatur höhere Ausgangstemperatur (eines die wenigstens eine Wärmepumpe verlassenden Mediums des Ausgangskreislaufs) gehoben werden. Insbesondere kann durch die Wärmepumpenvorrichtung eine verhältnismäßig niedrige Vorlauftemperatur des Heizwasserkreislaufs (der hierbei den mit der wenigstens einen Wärmepumpe verbundenen Eingangskreislauf darstellt) auf ein Temperaturniveau angehoben werden, das für eine hygienisch einwandfreie Warmwasserbereitung und thermische Desinfektion erforderlich ist.

Bei der vorgeschlagenen Warmwasserbereitungsanlage ist die Wärmepumpenvorrichtung, welche wenigstens eine Wärmepumpe umfasst, zwischen der Heizungs-Verbindung (welche die Warmwasserbereitungsanlage mit dem Heizwasserkreislauf verbindet) und der ersten Puffervorrichtung (welche das Erwärmungswasser zum Erwärmen des Trinkwassers mittels der Erwärmungsvorrichtung puffert) angeordnet. Bei dem in die wenigstens eine Wärmepumpe einbringbaren Medium, das eine Eingangstemperatur aufweist, handelt es sich daher um das Heizwasser aus dem Heizungsvorlauf des Heizwasserkreislaufs und bei dem die wenigstens eine Wärmepumpe verlassenden Medium, das eine Ausgangstemperatur aufweist, handelt es sich um das Erwärmungswasser, das in die erste Puffervorrichtung eingespeist wird.

Durch die hydraulische Verschaltung der Wärmepumpenvorrichtung zwischen der ersten Puffervorrichtung und der Heizungs-Verbindung ist es möglich, den Vorlauf des Heizwasserkreislaufs bzw. der Hauptheizungsanlage mit bis zu mindestens 35°C oder höher sehr wirtschaftlich zu betreiben. Dies ermöglicht in Mittel- oder Großanlagen den uneingeschränkten Einsatz von Wärmepumpenanlagen ohne weitere zusätzliche Energiequellen außer Strom. Auf fossile Brennstoffe oder unwirtschaftliche Energiequellen kann somit zur Gänze verzichtet werden. Des Weiteren sind Mittel- oder Großanlagen beim Betrieb mit Fernwärme von der zur Verfügung gestellten Vorlauftemperatur völlig unabhängig. Auch beim Betrieb mit Fernwärme wird somit dauerhaft eine niedere Rücklauftemperatur kleiner 40°C sichergestellt - auch wenn die Anlage im Sommer ohne weitere Heizungsverbraucher im reinen Warmwasserzirkulationsbetrieb fährt. Dabei ist der Zeitraum des reinen Warmwasserzirkulationsbetriebes völlig irrelevant. Die vorgeschlagene Warmwasserbereitungsanlage kann theoretisch über die gesamte Gebäudenutzungsdauer im Warmwasserzirkulationsbetrieb gefahren werden ohne die Rücklauftemperatur jemals negativ zu beeinflussen. Dies ist somit die erste Warmwasserbereitungsanlage, die eine dauerhaft tiefe Rücklauftemperatur des Heizwasserkreislaufs zuverlässig und ohne Einschränkungen ermöglicht.

Gemäß einer besonders bevorzugten Ausführungsform kann vorgesehen sein, dass die wenigstens eine Wärmepumpe als Hochtemperaturwärmepumpe ausgebildet ist. Eine sogenannte Hochtemperaturwärmepumpe zeichnet sich dadurch aus, dass sie verhältnismäßig hohe Eingangstemperaturen mit einem hohen Wirkungsgrad auf hohe Ausgangstemperaturen heben kann.

Ein Nachteil von herkömmlichen Wärmepumpen besteht nämlich darin, dass deren Ausgangstemperaturen meist mit 35-45°C limitiert sind. Bei höheren gewünschten Ausgangstemperaturen sinkt meist der Wirkungsgrad der Wärmepumpen bzw. sind Wärmepumpen mit alternativen, meist kostspieligen Kältemitteln notwendig. Die Warmwasserbereitung muss bei Verwendung herkömmlicher Wärmepumpen daher oft ausgekoppelt und durch andere Wärmequellen wie z.B. Gas, Strom oder Fernwärme sichergestellt werden.

Hochtemperaturwärmepumpen ermöglichen hingegen deutlich höhere Ausgangstemperaturen. Sie können bei relativ geringen Eingangstemperaturen (bis beispielsweise maximal 40°C) auf der Verdampferseite mit hohem Wirkungsgrad hohe Ausganstemperaturen (beispielsweise bis 85°C) auf der Kondensatorseite produzieren.

Vorzugsweise kann vorgesehen sein, dass die wenigstens eine Wärmepumpe derart ausgebildet ist, eine Eingangstemperatur von größer oder gleich 20°C, vorzugsweise 39°C, auf eine Ausgangstemperatur von größer oder gleich 70°C, vorzugsweise 80°C, zu heben.

Generell ist bei der Ansteuerung bzw. Regelung einer Wärmepumpe von einer Leittemperatur auszugehen. Die Leittemperatur ist jene Temperatur, die als Vorlauf die Kondensatorseite der Wärmepumpe verlässt. Über die Regelung kann der Wärmepumpe vorgegeben werden, welche Vorlauf-Temperatur (am Ausgang Kondensator) zu erreichen ist. Demensprechend kann leistungsoptimiert heizungsseitig die Eingangstemperatur in den Verdampfer der Wärmepumpe angepasst werden. Die Leittemperatur für den Normalbetrieb kann somit 70°C betragen und jene für den Desinfektionsbetrieb 80°C - die Quellentemperatur wird üblicherweise entsprechend leistungsoptimiert angepasst.

Vorzugsweise kann daher die wenigstens eine Wärmepumpe derart angesteuert oder geregelt werden, dass eine Ausgangstemperatur (Vorlauf am Ausgang Kondensator) in einem Bereich von etwa 70°C bis etwa 82°C liegt. Dementsprechend kann eine Eingangstemperatur (am Eingang Verdampfer) in einem Bereich von etwa 8°C bis etwa 42°C liegen.

Ein Beispiel einer geeigneten Hochtemperaturwärmepumpe ist die Wärmepumpe mit der Bezeichnung IWWHC 100 P2d der Firma OCHSNER Energie Technik GmbH. Diese weist einen Verdichter auf, der als sogenannter Scroll-Verdichter ausgebildet ist. Ein an sich bekannter Scroll-Verdichter umfasst zwei ineinander verschachtelte Spiralen, deren gegenläufige Bewegung das gasförmige Arbeitsmedium im Verdichter verdichtet.

Vorzugsweise kann daher vorgesehen sein, dass die wenigstens eine Wärmepumpe einen Verdichter umfasst, der als Scroll-Verdichter ausgebildet ist.

Als Arbeitsmittel kommt bei der erwähnten Hochtemperaturwärmepumpe IWWHC 100 P2d von OCHSNER Energie Technik GmbH das Arbeitsmittel 1,1,1,2-Tetrafluorethan mit dem Handelsnamen R134a zum Einsatz.

Vorzugweise kann daher vorgesehen sein, dass die wenigstens eine Wärmepumpe ein Arbeitsmittel umfasst, das zumindest teilweise, vorzugsweise im Wesentlichen vollständig, aus 1,1,1,2-Tetrafluorethan besteht.

Je nach Last kann die Wärmepumpenvorrichtung eine oder mehrere Hochtemperaturwärmepumpen umfassen. Es ist auch möglich, Hochtemperaturwärmepumpen mit unterschiedlichen Nennleistungen miteinander zu verschalten.

Gemäß einer bevorzugten Ausführungsform kann vorgesehen sein, dass die Erwärmungsvorrichtung wenigstens einen Wärmetauscher umfasst, wobei der wenigstens eine Wärmetauscher hochtemperaturseitig mit der ersten Puffervorrichtung verbunden ist und niedertemperaturseitig mit dem Trinkwasserkreislauf verbindbar oder verbunden ist. Mit anderen Worten ist also hierbei der wenigstens eine Wärmetauscher einerseits mit der Puffervorrichtung, welche Erwärmungswasser enthält, und andererseits mit dem Trinkwasserkreislauf verbunden, wodurch im wenigstens einen Wärmetauscher das Trinkwasser mit der Wärme des Erwärmungswassers erwärmt werden kann.

Der wenigstens eine Wärmetauscher ist dabei vorzugsweise in bekannter Art als Plattenwäremtauscher oder Rohrbündelwärmetauscher ausgebildet, sodass das vom wenigstens einen Wärmetauscher zu erwärmende Trinkwasser des Trinkwasserkreislaufs vom Erwärmungswasser aus der ersten Puffervorrichtung hydraulisch und stofflich entkoppelt ist.

In einer bevorzugten Ausführungsform kann vorgesehen sein, dass die Erwärmungsvorrichtung einen ersten Wärmetauscher umfasst, wobei der erste Wärmetauscher hochtemperaturseitig mit der ersten Puffervorrichtung verbunden ist, wobei der erste Wärmetauscher niedertemperaturseitig einen ersten Wärmetauschereingang und einen ersten Wärmetauscherausgang aufweist, wobei über den ersten Wärmetauschereingang zu erwärmendes Trinkwasser aus dem Trinkwasserkreislauf in den ersten Wärmetauscher einbringbar ist, wobei über den ersten Wärmetauscherausgang vom ersten Wärmetauscher erwärmtes Trinkwasser in den Trinkwasserkreislauf einspeisbar ist, wobei vorzugsweise der erste Wärmetauschereingang mit einem Zirkulationskreislauf verbindbar oder verbunden ist.

Gemäß einem besonders bevorzugten Ausführungsbeispiel kann vorgesehen sein, dass die Erwärmungsvorrichtung wenigstens einen zweiten Wärmetauscher umfasst, wobei der wenigstens eine zweite Wärmetauscher niedertemperaturseitig einen zweiten Wärmetauschereingang und einen zweiten Wärmetauscherausgang aufweist, wobei der wenigstens eine zweite Wärmetauschereingang mit dem Trinkwasserkreislauf verbindbar oder verbunden ist, wobei über den zweiten Wärmetauschereingang kaltes Trinkwasser aus dem Trinkwasserkreislauf in den wenigstens einen zweiten Wärmetauscher einbringbar ist, wobei der zweite Wärmetauscherausgang mit dem ersten Wärmetauschereingang verbunden ist, wobei über den ersten Wärmetauscherausgang vom ersten Wärmetauscher und vom wenigstens einen zweiten Wärmetauscher erwärmtes Trinkwasser in den Trinkwasserkreislauf einspeisbar ist. Mit anderen Worten enthält hierbei die Erwärmungsvorrichtung zwei Wärmetauscher, die in Durchflussrichtung des zu erwärmenden Trinkwassers hintereinander angeordnet sind.

Es können auch mehrere zweite Wärmetauscher vorgesehen sein, die in Durchflussrichtung des zu erwärmenden Trinkwassers vorzugsweise parallel oder in Serie geschaltet sind. Hierbei wird das zu erwärmende Trinkwasser gleichzeitig in die vorzugsweise parallel oder in Serie angeordneten zweiten Wärmetauscher geführt (über die jeweiligen zweiten Wärmetauschereingänge) und das in den zweiten Wärmetauschern erwärmte Trinkwasser wird in weiterer Folge zusammengeführt und in den ersten Wärmetauscher eingebracht (über den ersten Wärmetauschereingang des ersten Wärmetauschers). Durch den Einsatz mehrerer vorzugsweise parallel oder in Serie angeordneter zweiter Wärmetauscher kann eine sehr rasche und effiziente Vorerwärmung des Trinkwassers vorgenommen werden.

Besonders vorteilhaft ist jene Ausführungsform, bei der die Warmwasserbereitungsanlage eine zweite Puffervorrichtung zum Puffern von Erwärmungswasser umfasst, wobei die zweite Puffervorrichtung einerseits mit der Erwärmungsvorrichtung verbunden ist und andererseits mit der Heizungs-Verbindung verbunden ist.

Die erste Puffervorrichtung (oder Puffervorrichtung im Hochtemperaturbereich) dient zur Abdeckung der Spitzenlasten und zur Senkung der Schaltzeiten der Wärmepumpen der Wärmepumpenvorrichtung. Sie stellt einen Lastausgleich zwischen dem Energieverbraucher und dem Energieerzeuger her.

Die zweite Puffervorrichtung (oder Puffervorrichtung im Niedertemperaturbereich) dient ebenfalls zur Abdeckung der Spitzenlasten und stellt ebenfalls einen Lastausgleich her. Sie ist insbesondere dann wichtig, wenn der Heizwasserkreislauf bzw. die Hauptheizungsanlage nicht über genügend Lastreserven verfügt oder diese nicht rasch zur Verfügung stellen kann.

Je nach Last kann die zweite Puffervorrichtung einen oder mehrere zweite Pufferspeicher umfassen, die in Durchflussrichtung vorzugsweise parallel oder in Serie geschaltet sind.

Vorzugsweise kann dabei vorgesehen sein, dass der wenigstens eine zweite Wärmetauscher hochtemperaturseitig mit der zweiten Puffervorrichtung verbunden ist. Hierbei wird zur Erwärmung des Trinkwassers im wenigstens einen zweiten Wärmetauscher das Erwärmungswasser aus der zweiten Puffervorrichtung herangezogen.

In einer anderen Ausführungsform kann vorgesehen sein, dass der wenigstens eine zweite Wärmetauscher hochtemperaturseitig mit der Heizungs-Verbindung verbunden ist. Hierbei wird zur Erwärmung des Trinkwassers im wenigstens einen zweiten Wärmetauscher das Heizwasser der Heizungs-Verbindung (insbesondere das Heizwasser aus dem Heizungsvorlauf des Heizwasserkreislaufs) herangezogen.

In einer bevorzugten Ausführungsvariante kann vorgesehen sein, dass die Heizungs-Verbindung einen Heizungsvorlauf und einen Heizungsrücklauf umfasst, wobei vorzugsweise der Heizungsvorlauf über ein Temperier-Regelventil und/oder über ein Rückschlagventil mit dem Heizungsrücklauf verbunden ist. Über den Heizungsvorlauf kann heißes Heizwasser aus dem Heizwasserkreislauf in die Warmwasserbereitungsanlage eingebracht werden und über den Heizungsrücklauf kann das durch die Warmwasserbereitungsanlage durchgeflossene und entsprechend abgekühlte Heizwasser in den Heizwasserkreislauf zurückgespeist werden.

Vorzugsweise kann dabei vorgesehen sein, dass in der Heizungs-Verbindung, vorzugsweise im Heizungsvorlauf, wenigstens ein Verteil-Regelventil angeordnet ist.

Es kann vorgesehen sein, dass die Wärmepumpenvorrichtung über eine Wärmepumpen-Verbindung mit der Heizungs-Verbindung verbunden ist, wobei in der Wärmepumpen-Verbindung eine Wärmepumpen-Pumpe und ein Wärmepumpen-Regelventil angeordnet sind, wobei vorzugsweise in der Wärmepumpen-Verbindung zusätzlich ein Trenn-Regelventil angeordnet ist.

Vorzugsweise kann vorgesehen sein, dass die Wärmepumpenvorrichtung über eine erste Puffer-Verbindung mit der ersten Puffervorrichtung verbunden ist, wobei in der ersten Puffer-Verbindung eine erste Puffer-Pumpe und ein erstes Puffer-Regelventil angeordnet sind, wobei vorzugsweise in der ersten Puffer-Verbindung zusätzlich wenigstens ein Verteil-Regelventil angeordnet ist.

Vorzugsweise kann dabei vorgesehen sein, dass die erste Puffer-Verbindung über eine Verteil-Verbindung mit der Heizungs-Verbindung verbunden ist, wobei in der Verteil-Verbindung wenigstens ein Verteil-Regelventil angeordnet ist.

In einer bevorzugten Ausführungsform kann vorgesehen sein, dass die erste Puffervorrichtung über eine erste Erwärmungs-Verbindung mit der Erwärmungsvorrichtung verbunden ist, wobei in der ersten Erwärmungs-Verbindung eine erste Erwärmungs-Pumpe und ein erstes Erwärmungs-Regelventil angeordnet sind.

Vorzugsweise kann vorgesehen sein, dass der erste Wärmetauscher hochtemperaturseitig über die erste Erwärmungs-Verbindung mit der ersten Puffervorrichtung verbunden ist, wobei vorzugsweise der erste Wärmetauschereingang mit einem Zirkulationskreislauf umfassend eine Zirkulations-Pumpe verbindbar oder verbunden ist.

Gemäß einer besonders bevorzugten Ausführungsform kann vorgesehen sein, dass der wenigstens eine zweite Wärmetauscher hochtemperaturseitig über eine zweite Erwärmungs-Verbindung mit der zweiten Puffervorrichtung verbunden ist, wobei in der zweiten Erwärmungs-Verbindung wenigstens eine zweite Erwärmungs-Pumpe und wenigstens ein zweites Erwärmungs-Regelventil angeordnet sind.

In einer Ausführungsform kann vorgesehen sein, dass der wenigstens eine zweite Wärmetauscher hochtemperaturseitig mit der Heizungs-Verbindung verbunden ist, wobei in der Heizungs-Verbindung wenigstens eine dritte Erwärmungs-Pumpe und wenigstens ein Verteil-Regelventil angeordnet sind.

Besonders vorteilhaft ist jene Ausführungsform, bei der die Warmwasserbereitungsanlage eine Regelvorrichtung umfasst, wobei die Regelvorrichtung mit wenigstens einem Regelventil aus einer RegelventilGruppe umfassend eines oder mehrere der folgenden Regelventile: Temperier-Regelventil, wenigstens ein Verteil-Regelventil, Wärmepumpen-Regelventil, Trenn-Regelventil, erstes Puffer-Regelventil, erstes Erwärmungs-Regelventil, wenigstens ein zweites Erwärmungs-Regelventil signalleitend verbunden ist, und mit wenigstens einer Pumpe aus einer Pumpengruppe umfassend eine oder mehrere der folgenden Pumpen: Wärmepumpen-Pumpe, erste Puffer-Pumpe, erste Erwärmungs-Pumpe, Zirkulations-Pumpe, wenigstens eine zweite Erwärmungs-Pumpe, wenigstens eine dritte Erwärmungs-Pumpe signalleitend verbunden ist, wobei durch die Regelvorrichtung wenigstens ein Regelventil aus der Regelventilgruppe und/oder wenigstens eine Pumpe aus der Pumpengruppe ansteuerbar ist.

Vorzugsweise kann wenigstens ein Temperatursensor vorgesehen sein, der mit der Regelvorrichtung signalleitend verbunden ist, um die von dem wenigstens einen Temperatursensor gemessene Temperatur an die Regelvorrichtung zu melden. So können der erste Wärmetauscher und/oder der zweite Wärmetauscher Temperatursensoren aufweisen, um die Temperaturen des jeweiligen Mediums (Erwärmungswasser, Heizwasser) an den Anschlüssen (Vorlauf und Rücklauf) des jeweiligen Hochtemperaturbereichs des ersten Wärmetauschers und/oder des zweiten Wärmetauschers und/oder die Temperaturen des jeweiligen Mediums am ersten Wärmetauschereingang und am ersten Wärmetauscherausgang des ersten Wärmetauschers und/oder am zweiten Wärmetauschereingang und am zweiten Wärmetauscherausgang des zweiten Wärmetauschers an die Regelvorrichtung melden zu können. Auch die Wärmepumpenvorrichtung kann mit wenigstens einem Temperatursensor ausgestattet sein. Vorzugsweise kann ein Temperatursensor vorgesehen sein, um die Temperatur des über den Wärmepumpen-Verbindungs-Vorlauf der Wärmepumpen-Verbindung (welche die Wärmepumpenvorrichtung mit der Heizungs-Verbindung verbindet) in die Wärmepumpenvorrichtung eingebrachten Mediums (z.B. Heizwasser aus dem Heizwasserkreislauf) an die Regelvorrichtung zu melden. Auf Basis der von den Temperatursensoren gemeldeten Temperaturwerte kann die Regelvorrichtung entsprechende Regeleingriffe vornehmen.

Schutz wird auch begehrt für Verfahren zum Betreiben einer mit einem Trinkwasserkreislauf und mit einem Heizwasserkreislauf verbundenen Warmwasserbereitungsanlage gemäß 18 sowie Anspruch 19.

Bei diesen Verfahren wird der Wärmepumpenvorrichtung aus dem Heizwasserkreislauf Heizwasser mit einer Temperatur von mindestens etwa 20 °C, vorzugsweise etwa 28 °C bis etwa 65 °C, besonders bevorzugt etwa 60 °C, zugeführt.

Bei Vorhandensein einer Regelvorrichtung und Regelventilen in einer Regelventilgruppe und/oder Pumpen in einer Pumpengruppe wird bzw. werden durch die Regelvorrichtung wenigstens ein Regelventil aus der Regelventilgruppe und/oder wenigstens eine Pumpe aus der Pumpengruppe derart geregelt, dass an den Heizwasserkreislauf über den Heizungsrücklauf der Heizungs-Verbindung Heizwasser mit einer Temperatur kleiner gleich etwa 35 °C zurückgespeist wird.

Besonders bevorzugt kann dabei vorgesehen sein, dass durch die Regelvorrichtung wenigstens ein Regelventil aus der Regelventilgruppe und/oder wenigstens eine Pumpe aus der Pumpengruppe derart geregelt wird bzw. werden, dass an den Heizwasserkreislauf über den Heizungsrücklauf der Heizungs-Verbindung Heizwasser mit einer Temperatur von etwa 15 °C bis etwa 35 °C, vorzugsweise etwa 19 °C, zurückgespeist wird.

Hierzu kann vorgesehen sein, dass die Regelvorrichtung das im Wärmepumpen-Verbindungs-Vorlauf der Wärmepumpen-Verbindung (welche die Wärmepumpenvorrichtung mit der Heizungs-Verbindung verbindet) angeordnete Wärmepumpen-Regelventil auf Basis der von einem Temperatursensor der Wärmepumpenvorrichtung am Anschluss mit dem Wärmepumpen-Verbindungs-Vorlauf gemeldeten Temperatur derart regelt, dass sich an diesem Temperatursensor eine Temperatur im Bereich von etwa 20 °C bis etwa 45 °C einstellt. Hierbei kann vorgesehen sein, dass die im Wärmepumpen-Verbindungs-Rücklauf der Wärmepumpen-Verbindung angeordnete Wärmepumpen-Pumpe differenzdruckgeregelt ist und einen konstanten Volumenstrom über den Verdampfer der wenigstens einen Wärmepumpe der Wärmepumpenvorrichtung hält.

Darüber hinaus kann vorgesehen sein, dass die Regelvorrichtung auf Basis der von einem Temperatursensor am Rücklauf-Anschluss des Hochtemperaturbereichs des zweiten Wärmetauschers (am Anschluss des zweiten Wärmetauschers, der den zweiten Wärmetauscher mit dem Heizungsrücklauf der Heizungs-Verbindung verbindet) gemeldeten Temperatur die im Heizungsrücklauf angeordnete dritte Erwärmungs-Pumpe und das im Heizungsvorlauf der Heizungs-Verbindung angeordnete zweite Verteil-Regelventil derart ansteuert oder regelt, dass sich an diesem Temperatursensor eine Temperatur im Bereich von etwa 10 °C bis etwa 20 °C einstellt. Es kann auch vorgesehen sein, dass zusätzlich die von einem Temperatursensor am zweiten Wärmetauscher-Ausgang gemeldete Temperatur berücksichtigt wird, wobei die dritte Erwärmungs-Pumpe und das zweite Verteil-Regelventil derart angesteuert oder geregelt werden, dass sich an diesem Temperatursensor eine Temperatur im Bereich von etwa 45 °C bis etwa 55 °C einstellt. Es kann somit eine Regelung von dritter Erwärmungs-Pumpe und zweitem Verteil-Regelventil erfolgen, sodass die Temperatur am zweiten Wärmetauscher-Ausgang einen vorgebbaren Wert von z.B. 50 °C beträgt und die Temperatur am hochtemperaturseitigen Rücklauf-Anschluss des zweiten Wärmetauschers einen weiteren vorgebbaren Wert von z.B. 15 °C beträgt. Eine derartige Regelung kann zusätzlich unter der Vorgabe erfolgen, mit einem möglichst geringen Volumenstrom den vorgebbaren Wert für die Temperatur am zweiten Wärmetauscher-Ausgang zu erzielen.

Bei Vorhandensein einer zweiten Puffervorrichtung kann auch vorgesehen sein, dass die Regelvorrichtung auf Basis der von einem Temperatursensor am Rücklauf-Anschluss des Hochtemperaturbereichs des zweiten Wärmetauschers (am Anschluss des zweiten Wärmetauschers, der den zweiten Wärmetauscher über den zweiten Erwärmungs-Verbindungs-Rücklauf der zweiten Erwärmungs-Verbindung mit der zweiten Puffervorrichtung verbindet) gemeldeten Temperatur die im zweiten Erwärmungs-Verbindungs-Rücklauf angeordnete zweite Erwärmungs-Pumpe und das im zweiten Erwärmungs-Verbindungs-Vorlauf der zweiten Erwärmungs-Verbindung angeordnete zweite Erwärmungs-Regelventil derart ansteuert oder regelt, dass sich an diesem Temperatursensor eine Temperatur im Bereich von etwa 10 °C bis etwa 20 °C einstellt. Es kann auch vorgesehen sein, dass zusätzlich die von einem Temperatursensor am zweiten Wärmetauscher-Ausgang gemeldete Temperatur berücksichtigt wird, wobei die zweite Erwärmungs-Pumpe und das zweite Erwärmungs-Regelventil derart angesteuert oder geregelt werden, dass sich an diesem Temperatursensor eine Temperatur im Bereich von etwa 45 °C bis etwa 55 °C einstellt. Es kann somit eine Regelung von zweiter Erwärmungs-Pumpe und zweitem Erwärmungs-Regelventil erfolgen, sodass die Temperatur am zweiten Wärmetauscher-Ausgang einen vorgebbaren Wert von z.B. 50 °C beträgt und die Temperatur am hochtemperaturseitigen Rücklauf-Anschluss des zweiten Wärmetauschers einen weiteren vorgebbaren Wert von z.B. 15 °C beträgt. Eine derartige Regelung kann zusätzlich unter der Vorgabe erfolgen, mit einem möglichst geringen Volumenstrom den vorgebbaren Wert für die Temperatur am zweiten Wärmetauscher-Ausgang zu erzielen.

Dadurch ist es möglich, dass auf etwa 15 °C bis etwa 35 °C, vorzugsweise etwa 19 °C, abgekühltes Heizwasser über den Heizungsrücklauf an den Heizwasserkreislauf zurückgespeist wird.

Im Standardbetrieb kann also durch eine - wie vorstehen beispielhaft angegebene - entsprechende Ansteuerung und/oder Regelung der Regelventile in der Regelventilgruppe und/oder der Pumpen in der Pumpengruppe erreicht werden, dass an den Heizwasserkreislauf über den Heizungsrücklauf der Heizungs-Verbindung Heizwasser mit einer Temperatur von etwa 19°C bis etwa 35°C zurückgespeist wird.

Mit der vorgeschlagenen Warmwasserbereitungsanlage stehen auch die Türen für alternative Energiegewinnungsprozesse aus der Umwelt oder aus Wärmerückgewinnungsprozessen offen. Die vorgeschlagene Warmwasserbereitungsanlage ist mit jeder Energiequelle kombinierbar und bestehende Heizungsanlagen oder Anlagen zur Warmwasserbereitung sind zu einer vorgeschlagenen Warmwasserbereitungsanlage nachrüstbar.

Im Falle, dass Energiequellen nur mit niederen Temperaturen zur Verfügung stehen, können die Wärmepumpen der Wärmepumpenvorrichtung kaskadiert und somit diese Energiequellen ebenfalls genutzt werden.

In öffentlichen Gebäuden ist die Redundanz und Anlagenverfügbarkeit oft ein großes Thema. Aus diesem Grund wurde die vorgeschlagene Warmwasserbereitungsanlage so konzipiert, dass auch bei Ausfall einer Wärmepumpe ohne eine weitere redundante Wärmepumpe ein Notbetrieb auf Basis der Versorgung der Warmwasserbereitungsanlage mit der nötigen Grundwärme aus dem Heizwasserkreislauf bzw. aus der Hauptheizungsanlage sichergestellt werden kann.

Für die Planung und Auslegung kann die vorgeschlagene Warmwasserbereitungsanlage über einen Erhebungsbogen und ein Auslegungsdatenblatt kundenspezifisch zusammengestellt werden. Dabei können grundlegende Parameter wie die benötigte Warmwasserleistung, Platzbedarf, vorhandene Wärmequelle, etc. erfasst und zusammengeführt werden und daraus kann eine für den Kundenbedarf optimale Warmwasserbereitungsanlage konzipiert werden.

Bei der Nachrüstung einer Bestandsanlage zu einer vorgeschlagenen Warmwasserbereitungsanlage ist es wichtig, vorher die grundlegenden Parameter wie Warmwasserleistung und Warmwasserzirkulationsleistung durch Messungen direkt an der Bestandsanlage zu erheben.

Weitere Einzelheiten und Vorteile der vorliegenden Erfindung werden anhand der nachfolgenden Figurenbeschreibung erläutert. Dabei zeigen:
- Fig. 1: ein Ausführungsbeispiel einer vorgeschlagenen Warmwasserbereitungsanlage in einer schematischen Darstellung,
- Fig. 2: ein weiteres Ausführungsbeispiel einer vorgeschlagenen Warmwasserbereitungsanlage in einer schematischen Darstellung,
- Fig. 3: ein weiteres Ausführungsbeispiel einer vorgeschlagenen Warmwasserbereitungsanlage in einer schematischen Darstellung,
- Fig. 4: die Warmwasserbereitungsanlage gemäß Fig. 3 im eigentlichen Regelzustand (Normalbetriebszustand),
- Fig. 5 - 11: die Warmwasserbereitungsanlage gemäß Fig. 3 in verschiedenen Betriebszuständen,
- Fig. 12: ein weiteres Ausführungsbeispiel einer vorgeschlagenen Warmwasserbereitungsanlage in einer schematischen Darstellung,
- Fig. 13: ein weiteres Ausführungsbeispiel einer vorgeschlagenen Warmwasserbereitungsanlage in einer schematischen Darstellung,
- Fig. 14: die Warmwasserbereitungsanlage gemäß Fig. 13 im eigentlichen Regelzustand (Normalbetriebszustand),
- Fig. 15 - 22: die Warmwasserbereitungsanlage gemäß Fig. 13 in verschiedenen Betriebszuständen,
- Fig. 23: ein weiteres Ausführungsbeispiel einer vorgeschlagenen Warmwasserbereitungsanlage in einer schematischen Darstellung,
- Fig. 24: ein Temperaturdiagramm einer Hochtemperaturwärmepumpe,
- Fig. 25: eine herkömmliche Warmwasserbereitungsanlage in einer schematischen Darstellung,
- Fig. 26: eine Ausführungsvariante zur Nachrüstung der herkömmlichen Warmwasserbereitungsanlage gemäß Fig. 25 zu einer vorgeschlagenen Warmwasserbereitungsanlage in einer schematischen Darstellung, und
- Fig. 27: eine weitere Ausführungsvariante zur Nachrüstung der herkömmlichen Warmwasserbereitungsanlage gemäß Fig. 25 zu einer vorgeschlagenen Warmwasserbereitungsanlage in einer schematischen Darstellung.

In der nachfolgenden Figurenbeschreibung werden ein jeweiliger Vorlauf einer Verbindung zwischen Komponenten der vorgeschlagenen Warmwasserbereitungsanlage für den Fachmann verständlich mit der Bezeichnung VL und ein jeweiliger Rücklauf einer Verbindung zwischen Komponenten der vorgeschlagenen Warmwasserbereitungsanlage mit der Bezeichnung RL abgekürzt.

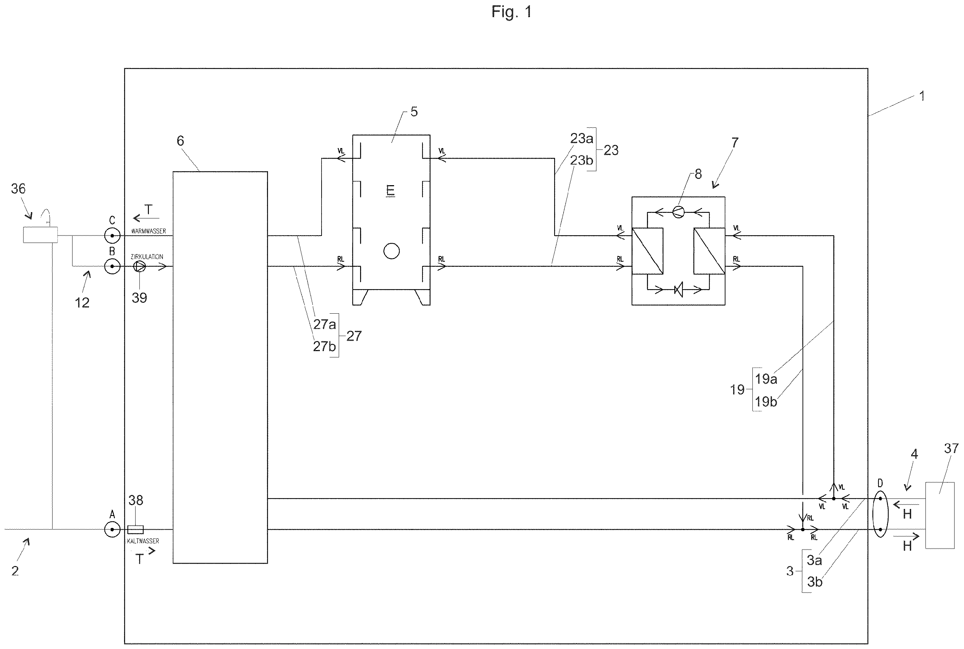

Figur 1 zeigt ein Ausführungsbeispiel einer vorgeschlagenen Warmwasserbereitungsanlage 1. Die Warmwasserbereitungsanlage 1 ist über eine Kaltwasseranschluss A und einen Warmwasseranschluss C mit einem Trinkwasserkreislauf 2 verbunden. Die Warmwasserbereitungsanlage 1 ist mittels einer Heizungs-Verbindung 3 über einen Heizkreislaufanschluss D mit einem Heizwasserkreislauf 4 verbunden, indem ein Heizungsvorlauf 3a der Heizungs-Verbindung 3 mit einem Vorlauf des Heizwasserkreislaufs 4 verbunden ist und ein Heizungsrücklauf 3b der Heizungs-Verbindung 3 mit einem Rücklauf des Heizwasserkreislaufs 4 verbunden ist. Der Heizwasserkreislauf 4 wird in diesem Beispiel von einem Fernwärmeversorger 37 bereitgestellt, er könnte aber beispielsweise auch über eine Hauptheizungsanlage bereitgestellt werden. Über den Heizungsvorlauf 3a wird heißes Heizwasser H aus dem Heizwasserkreislauf 4 in die Warmwasserbereitungsanlage 1 eingebracht und über den Heizungsrücklauf 3b wird das durch die Warmwasserbereitungsanlage 1 durchgeflossene und entsprechend abgekühlte Heizwasser H in den Heizwasserkreislauf 4 zurückgespeist.

Die Warmwasserbereitungsanlage 1 umfasst eine Wärmepumpenvorrichtung 7 mit einer Wärmepumpe 8, die eingangsseitig (auf der Quellenseite) über eine Wärmepumpen-Verbindung 19 mit der Heizungs-Verbindung 3 verbunden ist. Die Wärmepumpen-Verbindung 19 umfasst einen Wärmepumpen-Verbindungs-Vorlauf 19a, der mit dem Heizungsvorlauf 3a verbunden ist, und einen Wärmepumpen-Verbindungs-Rücklauf 19b, der mit dem Heizungsrücklauf 3b verbunden ist. Der Heizungskreislauf 4 stellt somit auch den mit der Wärmepumpe 8 verbundenen Eingangskreislauf dar, dessen Temperatur von der Wärmepumpe 8 zur Erwärmung eines mit der Wärmepumpe 8 verbundenen Ausgangskreislaufs herangezogen wird. Ausgangsseitig (auf der Senkenseite) ist die Wärmepumpenvorrichtung 7 bzw. deren Wärmepumpe 8 über eine erste Puffer-Verbindung 23 mit einer ersten Puffervorrichtung 5 in Form eines einzigen ersten Pufferspeichers verbunden (je nach Lastanforderung könnte die erste Puffervorrichtung 5 mehrere erste Pufferspeicher umfassen). Die erste Puffer-Verbindung 23 umfasst einen ersten Puffer-Verbindungs-Vorlauf 23a und einen ersten Puffer-Verbindungs-Rücklauf 23b. Das durch die Puffer-Verbindung 23 zirkulierende Erwärmungswasser E stellt somit den mit der Wärmepumpe 8 verbundenen Ausgangskreislauf dar, dessen Temperatur durch die Wärmepumpe 8 angehoben wird. Über den ersten Puffer-Verbindungs-Vorlauf 23a wird von der Wärmepumpe 8 erwärmtes Erwärmungswasser E in die erste Puffervorrichtung 5 eingebracht und über den ersten Puffer-Verbindungs-Rücklauf 23b gelangt zu erwärmendes Erwärmungswasser E von der ersten Puffervorrichtung 5 zur Wärmepumpe 8.

Mit anderen Worten wird über die Wärmepumpen-Verbindung 19 bzw. deren Wärmepumpen-Verbindungs-Vorlauf 19a vom Heizwasserkreislauf 4 bereitgestelltes Heizwasser H mit einer Eingangstemperatur eingangsseitig in die Wärmepumpe 8 eingebracht. Ausgangsseitig verlässt ein von der Wärmepumpe 8 erwärmtes Erwärmungswasser E mit einer Ausgangstemperatur größer der Eingangstemperatur die Wärmepumpe 8 und wird über die Puffer-Verbindung 23 in die erste Puffervorrichtung 5 eingespeist.

Die erste Puffervorrichtung 5 dient als Lastausgleichspuffer und als Trennung zwischen Verbraucherseite (die Komponenten links von der ersten Puffervorrichtung 5) und Erzeugerseite (die Komponenten rechts von der ersten Puffervorrichtung 5), also als hydraulische Weiche. Es sind damit unterschiedliche Volumenströme auf der Verbraucherseite und der Erzeugerseite zulässig.

Die Warmwasserbereitungsanlage 1 umfasst eine Erwärmungsvorrichtung 6, die über den Kaltwasseranschluss A und den Warmwasseranschluss C mit dem Trinkwasserkreislauf 2 verbunden ist. In der Verbindung der Erwärmungsvorrichtung 6 mit dem Kaltwasseranschluss A ist ein Wasserzähler 38 angeordnet. Zur Erwärmung des Trinkwassers T des Trinkwasserkreislaufs 2 ist die erste Puffervorrichtung 5 über eine erste Erwärmungs-Verbindung 27 umfassend einen ersten Erwärmungs-Verbindungs-Vorlauf 27a und einen ersten Erwärmungs-Verbindungs-Rücklauf 27b mit der Erwärmungsvorrichtung 6 verbunden. Zusätzlich ist die Erwärmungsvorrichtung 6 mit der Heizungs-Verbindung 3 und somit mit dem Heizwasserkreislauf 4 verbunden. Die Erwärmungsvorrichtung 6 umfasst zwei hier nicht näher dargestellte Wärmetauscher, die einerseits die Temperatur des Heizwassers H des Heizwasserkreislauf 4 und andererseits die Temperatur des Erwärmungswassers E (bereitgestellt über die erste Erwärmungs-Verbindung 27) nutzen, um das die Erwärmungsvorrichtung 6 durchlaufende Trinkwasser T zu erwärmen. Das durch die Erwärmungsvorrichtung 6 erwärmte Trinkwasser T wird über den Warmwasseranschluss C einem Warmwasserverbraucher 36 bereitgestellt. Damit rasch erwärmtes Trinkwasser T bereitgestellt werden kann, ist in bekannter Art und Weise ein Zirkulationskreislauf 12 vorgesehen, der den Warmwasserverbraucher 36 mit der Erwärmungsvorrichtung 6 verbindet und dessen Zirkulation über eine Zirkulations-Pumpe 39 erzwungen werden kann. Zur Einstellung einer gewünschten Wassertemperatur ist der Warmwasserverbraucher 36 auch direkt mit der Trinkwasseranspeisung bzw. Kaltwasserversorgung (die über den Kaltwasseranschluss A mit der Warmwasserbereitungsanlage 1 verbunden ist) verbunden.

Die Wärmepumpe 8 ist als Hochtemperaturwärmepumpe ausgebildet. Konkret ist die Wärmepumpe 8 derart ausgebildet, eine Eingangstemperatur von größer oder gleich 20°C, vorzugsweise 39°C, auf eine Ausgangstemperatur von größer oder gleich 70°C zu heben. Im Regelbetrieb wird eine Ausgangstemperatur von etwa 70 °C angestrebt und z.B. bei einer thermischen Desinfektion wird mit einer höheren Ausgangstemperatur von beispielsweise etwa 80 °C gearbeitet. Ein Beispiel einer derartigen Hochtemperaturwärmepumpe ist die Wärmepumpe mit der Bezeichnung IWWHC 100 P2d der Firma OCHSNER Energie Technik GmbH.

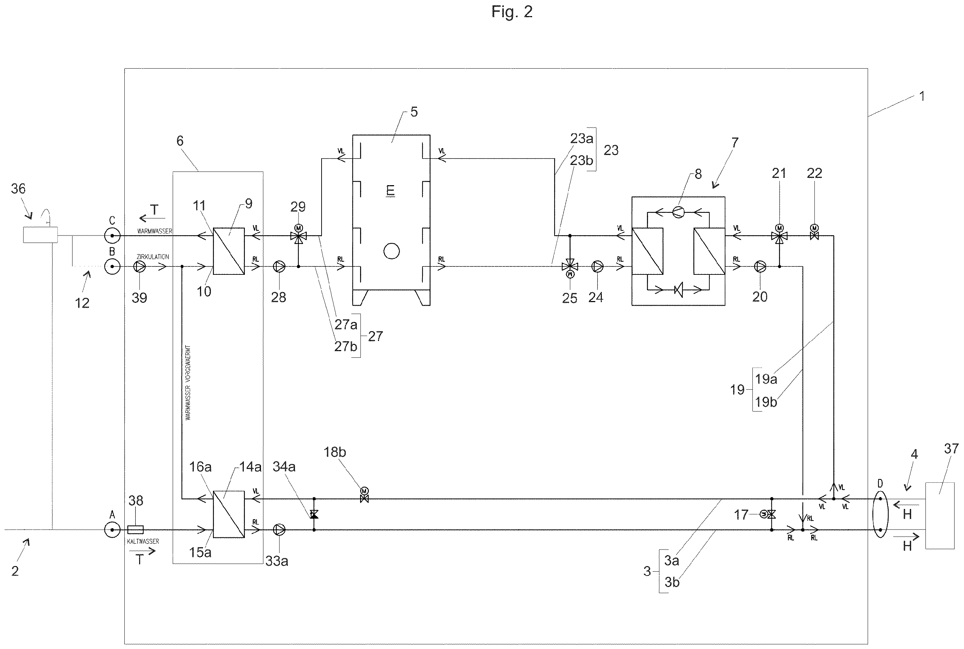

Figur 2 zeigt ein weiteres Ausführungsbeispiel einer vorgeschlagenen Warmwasserbereitungsanlage 1, die ausgehend von der Warmwasserbereitungsanlage 1 der Figur 1 weitere Komponenten umfasst.

Die hier gezeigte Erwärmungsvorrichtung 6 umfasst einen ersten Wärmetauscher 9 und einen zweiten Wärmetauscher 14a. Jeder der Wärmetauscher 9, 14a weist einen von einem Medium durchströmten Hochtemperaturbereich und einen von einem Medium durchströmten Niedertemperaturbereich auf, wobei in an sich bekannter Weise Wärme vom Medium im Hochtemperaturbereich auf das Medium im Niedertemperaturbereich abgegeben wird und somit das Medium im Niedertemperaturbereich erwärmt wird. Die Wärmetauscher 9, 14a sind als Plattenwärmetauscher oder als Rohrbündelwärmetauscher ausgebildet, sodass die jeweiligen Medien im Hochtemperaturbereich und im Niedertemperaturbereich hydraulisch und stofflich entkoppelt sind.

Der zweite Wärmetauscher 14a ist hochtemperaturseitig mit der Heizungs-Verbindung 3 verbunden, indem der Heizungsvorlauf 3a und der Heizungsrücklauf 3b mit entsprechenden Anschlüssen des Hochtemperaturbereichs des zweiten Wärmetauschers 14a verbunden sind. Durch den Hochtemperaturbereich des zweiten Wärmetauschers 14a strömt somit Heizwasser H des Heizwasserkreislaufs 4.

Der erste Wärmetauscher 9 ist hochtemperaturseitig über die erste Erwärmungs-Verbindung 27 mit der ersten Puffervorrichtung 5 verbunden, indem der erste Erwärmungs-Verbindungs-Vorlauf 27a und der erste Erwärmungs-Verbindungs-Rücklauf 27b mit entsprechenden Anschlüssen des Hochtemperaturbereichs des ersten Wärmetauschers 9 verbunden sind. Durch den Hochtemperaturbereich des ersten Wärmetauschers 9 strömt somit von der ersten Puffervorrichtung 5 bereitgestelltes Erwärmungswasser E.

Niedertemperaturseitig weist der zweite Wärmetauscher 14a einen zweiten Wärmetauschereingang 15a und einen zweiten Wärmetauscherausgang 16a auf und der erste Wärmetauscher 9 weist niedertemperaturseitig einen ersten Wärmetauschereingang 10 und einen ersten Wärmetauscherausgang 11 auf.

Der zweite Wärmetauschereingang 15a ist über den Kaltwasseranschluss A mit dem Trinkwasserkreislauf 2 verbunden, sodass kaltes Trinkwasser T über den zweiten Wärmetauschereingang 15a in den Niedertemperaturbereich des zweiten Wärmetauschers 14a gelangt und im zweiten Wärmetauscher 14a durch die Wärme des Heizwassers H im Hochtemperaturbereich des zweiten Wärmetauschers 14a erwärmt wird. Das erwärmte Trinkwasser T verlässt über den zweiten Wärmetauscherausgang 16a den zweiten Wärmetauscher 14a.

Der zweite Wärmetauscherausgang 16a des zweiten Wärmetauschers 14a ist mit dem ersten Wärmetauschereingang 10 des ersten Wärmetauschers 9 verbunden, sodass das im zweiten Wärmetauscher 14a vorerwärmte Trinkwasser T über den ersten Wärmetauschereingang 10 in den Niedertemperaturbereich des ersten Wärmetauschers 9 gelangt und im ersten Wärmetauscher 9 durch die Wärme des Erwärmungswassers E im Hochtemperaturbereich des ersten Wärmetauschers 9 weiter erwärmt wird. Das weiter erwärmte Trinkwasser T verlässt über den ersten Wärmetauscherausgang 11 den ersten Wärmetauscher 9. Der erste Wärmetauscherausgang 11 ist über den Warmwasseranschluss C mit dem Trinkwasserkreislauf 2 verbunden, sodass das in den Wärmetauschern 9, 14a der Erwärmungsvorrichtung 6 erwärmte Trinkwasser T dem Warmwasserverbraucher 36 bereitgestellt werden kann.

Der erste Wärmetauschereingang 10 ist über einen Zirkulationsanschluss B mit einem Zirkulationskreislauf 12 verbunden. Eine Zirkulations-Pumpe 39 in der Verbindung zwischen Zirkulationsanschluss B und dem ersten Wärmetauschereingang 10 sorgt in bekannter Weise für die Zirkulation des Trinkwassers T durch den Niedertemperaturbereich des ersten Wärmetauschers 9, um wenn nötig sehr rasch erwärmtes Trinkwasser T bereitstellen zu können. Im gezeigten Beispiel liefert die Zirkulations-Pumpe 39 permanent und ohne Unterbrechung den benötigten Warmwasserzirkulationsvolumenstrom zum ersten Wärmetauscher 9.

Der Heizungsvorlauf 3a ist über ein Temperier-Regelventil 17 mit dem Heizungsrücklauf 3b verbunden. Das Temperier-Regelventil 17 sorgt dafür, dass eine einstellbare oder voreingestellte Vorlauftemperatur des Heizwassers H an der Warmwasserbereitungsanlage 1 ansteht. Das senkt die Reaktionszeit des Heizwasserkreislaufs 4 insbesondere bei Bereitstellung durch eine Hauptheizungsanlage und vermeidet, dass in der Rohrleitung abgekühltes Heizwasser H in die erste Puffervorrichtung 5 und/oder zum zweiten Wärmetauscher 14a gelangt.

Zudem ist der Heizungsvorlauf 3a über ein Rückschlagventil 34a mit dem Heizungsrücklauf 3b verbunden. Über das Rückschlagventil 34a kann ein Medium (Heizwasser H) nur vom Heizungsrücklauf 3b zum Heizungsvorlauf 3a fließen, ein Durchfluss von Heizungsvorlauf 3a zu Heizungsrücklauf 3b ist unterbunden.

Die Wärmepumpen-Verbindung 19 ist zwischen dem Temperier-Regelventil 17 und dem Heizkreislaufanschluss D mit der Heizungs-Verbindung 3 verbunden. In der Wärmepumpen-Verbindung 19 sind eine Wärmepumpen-Pumpe 20, ein Wärmepumpen-Regelventil 21 und ein Trenn-Regelventil 22 angeordnet, wobei die Wärmepumpen-Pumpe 20 zwischen der Wärmepumpenvorrichtung 7 und dem Wärmepumpen-Regelventil 21 angeordnet ist und wobei das Wärmepumpen-Regelventil 21 zwischen der Wärmepumpen-Pumpe 20 und dem Trenn-Regelventil 22 angeordnet ist. Die Wärmepumpen-Pumpe 20 ist im Wärmepumpen-Verbindungs-Rücklauf 19b angeordnet und das Trenn-Regelventil 22 ist im Wärmepumpen-Verbindungs-Vorlauf 19a angeordnet. Das Trenn-Regelventil 22 dient zum Trennen der Wärmepumpenvorrichtung 7 vom Heizwasserkreislauf 4 bzw. von einer Hauptheizungsanlage. Dies vermeidet Fehlzirkulationsströme im Falle, dass die Wärmepumpenvorrichtung 7 nicht aktiv ist. Das Wärmepumpen-Regelventil 21 ist im Wärmepumpen-Verbindungs-Vorlauf 19a angeordnet und hat zur Temperatureinstellung des der Wärmepumpe 8 über den Wärmepumpen-Verbindungs-Vorlauf 19a zuzuführenden Heizwassers H zusätzlich eine Verbindung zum Wärmepumpen-Verbindungs-Rücklauf 19b. Eingangsseitig (auf der Quellenseite der Wärmepumpe 8) wird die Wärmepumpe 8 über die Wärmepumpen-Pumpe 20 und das Wärmepumpen-Regelventil 21 mit Wärmeenergie des Heizwassers H versorgt. Die Wärmepumpen-Pumpe 20 sorgt für einen konstanten Durchfluss auf der Quellenseite. Das Wärmepumpen-Regelventil 21 sorgt dafür, dass die Quellenseite stets mit der korrekten bzw. geeigneten Vorlauftemperatur versorgt wird.

In der ersten Puffer-Verbindung 23 sind eine erste Puffer-Pumpe 24 und ein erstes Puffer-Regelventil 25 angeordnet, wobei das erste Puffer-Regelventil 25 zwischen der ersten Puffervorrichtung 5 und der ersten Puffer-Pumpe 24 angeordnet ist. Die erste Puffer-Pumpe 24 und das erste Puffer-Regelventil 25 sind im ersten Puffer-Verbindungs-Rücklauf 23b angeordnet, wobei das erste Puffer-Regelventil 25 zur Temperatureinstellung des zwischen der Wärmepumpe 8 und der ersten Puffervorrichtung 5 zirkulierenden Erwärmungswassers E zusätzlich eine Verbindung zum ersten Puffer-Verbindungs-Vorlauf 23a hat. Die der Wärmepumpe 8 zugeführte Wärmeenergie wird in der Wärmepumpe 8 auf ein höheres Temperaturniveau gebracht und über die erste Puffer-Pumpe 24 und das erste Puffer-Regelventil 25 der ersten Puffervorrichtung 5 zugeführt. Die erste Puffer-Pumpe 24 sorgt ausgangsseitig (auf der Senkenseite der Wärmepumpe 8) für einen konstanten Durchfluss. Das erste Puffer-Regelventil 25 sorgt dafür, dass die Senkenseite stets mit der korrekten bzw. geeigneten Vorlauftemperatur versorgt wird.

In der ersten Erwärmungs-Verbindung 27 sind eine erste Erwärmungs-Pumpe 28 und ein erstes Erwärmungs-Regelventil 29 angeordnet, wobei das erste Erwärmungs-Regelventil 29 zwischen der ersten Puffervorrichtung 5 und der ersten Erwärmungs-Pumpe 28 angeordnet ist. Die erste Erwärmungs-Pumpe 28 ist im ersten Erwärmungs-Verbindungs-Rücklauf 27b angeordnet. Das erste Erwärmungs-Regelventil 29 ist im ersten Erwärmungs-Verbindungs-Vorlauf 27a angeordnet und hat zur Temperatureinstellung des dem ersten Wärmetauscher 9 zuzuführenden Erwärmungswassers E aus der ersten Puffervorrichtung 5 zusätzlich eine Verbindung zum ersten Erwärmungs-Verbindungs-Rücklauf 27b.

In der Anbindung der Heizungs-Verbindung 3 an den zweiten Wärmetauscher 14a der Erwärmungsvorrichtung 6 sind eine dritte Erwärmungs-Pumpe 33a und ein zweites Verteil-Regelventil 18b angeordnet, wobei die dritte Erwärmungs-Pumpe 33a zwischen dem zweiten Wärmetauscher 14a und dem Rückschlagventil 34a angeordnet ist, wobei das Rückschlagventil 34a zwischen der dritten Erwärmungs-Pumpe 33a und dem zweiten Verteil-Regelventil 18b angeordnet ist und wobei das zweite Verteil-Regelventil 18b zwischen dem Rückschlagventil 34a und dem Temperier-Regelventil 17 angeordnet ist. Die dritte Erwärmungs-Pumpe 33a ist im Heizungsrücklauf 3b angeordnet. Das zweite Verteil-Regelventil 18b sorgt dafür, dass dem zweiten Wärmetauscher 14a eine einstellbare oder voreingestellte Vorlauftemperatur des Heizwassers H zugeführt werden kann.

Der erste Wärmetauscher 9, die erste Erwärmungs-Pumpe 28, das erste Erwärmungs-Regelventil 29, der zweite Wärmetauscher 14a, die dritte Erwärmungs-Pumpe 33a, das Rückschlagventil 34a und das zweite Verteil-Regelventil 18b bilden gemeinsam ein sogenanntes Frischwassermodul, welches lastabhängig und kundenspezifisch gefertigt werden kann und welches kundenspezifisch mit einem Wärmemengenzähler, Doppelpumpenanlagen und weiteren technischen Apparaturen ausgestattet sein kann. Das erste Erwärmungs-Regelventil 29 und das zweite Verteil-Regelventil 18b dienen der Optimierung der momentan benötigten Heizungsvorlauftemperatur für die Warmwasserbereitung. Die erste Erwärmungs-Pumpe 28 und die dritte Erwärmungs-Pumpe 33a fördern lastabhängig den momentan benötigten Volumenstrom an Heizungsmedium (Erwärmungswasser E und Heizwasser H) für die Warmwasserbereitung.

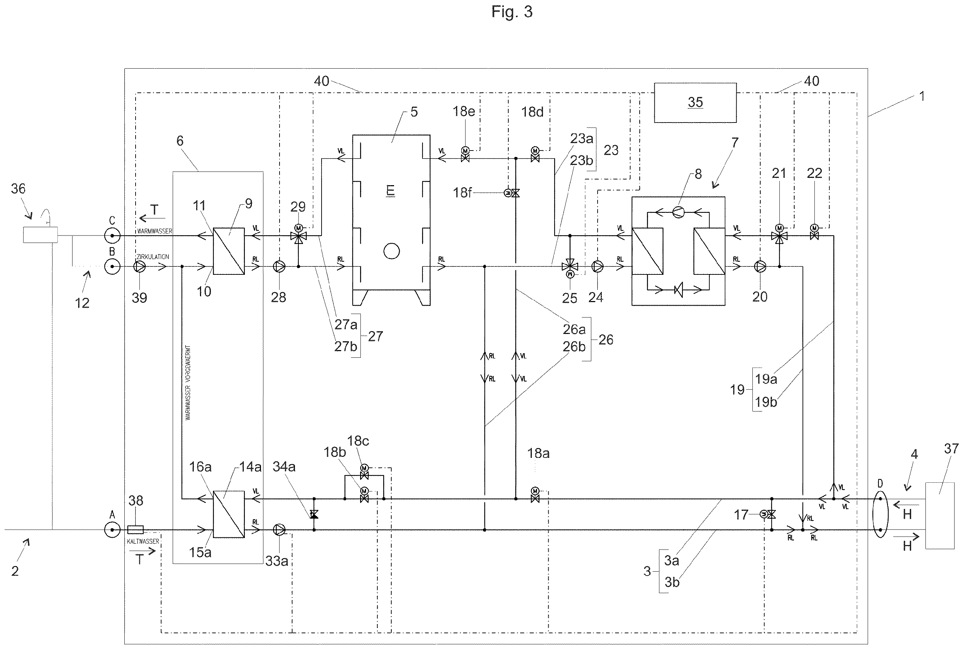

Figur 3 zeigt ein weiteres Ausführungsbeispiel einer vorgeschlagenen Warmwasserbereitungsanlage 1, die ausgehend von der Warmwasserbereitungsanlage 1 der Figur 2 weitere Komponenten umfasst.

Bei der hier dargestellten Warmwasserbereitungsanlage 1 ist eine Verteil-Verbindung 26 vorhanden, welche die Heizungs-Verbindung 3 mit der ersten Puffer-Verbindung 23 verbindet. Die Verteil-Verbindung 26 umfasst einen Verteil-Verbindungs-Vorlauf 26a und einen Verteil-Verbindungs-Rücklauf 26b. Der Verteil-Verbindungs-Vorlauf 26a verbindet den Heizungsvorlauf 3a mit dem ersten Puffer-Verbindungs-Vorlauf 23a und der Verteil-Verbindungs-Rücklauf 26b verbindet den Heizungsrücklauf 3b mit dem ersten Puffer-Verbindungs-Rücklauf 23b.

Zusätzlich umfasst die Warmwasserbereitungsanlage 1 mehrere Verteil-Regelventile 18a, 18b, 18c, 18d, 18e, 18f. Diese dienen der bedarfsgemäßen Verteilung der Energieströme aus der Wärmepumpenvorrichtung 7 bzw. aus dem Heizwasserkreislauf 4 oder einer Hauptheizungsanlage. Mit diesen Verteil-Regelventilen 18a, 18b, 18c, 18d, 18e, 18f können unter anderem auch ein Teillastbetrieb und ein Notbetrieb realisiert werden.

Konkret sind bei der gezeigten Warmwasserbereitungsanlage 1 im Heizungsvorlauf 3a ein erstes Verteil-Regelventil 18a, ein zweites Verteil-Regelventil 18b und ein drittes Verteil-Regelventil 18c angeordnet, wobei das zweite Verteil-Regelventil 18b und das dritte Verteil-Regelventil 18c parallel geschaltet sind. Regelventile sind üblicherweise für die Regelung von Volumenstrom-Bereichen optimiert. In diesem Zusammenhang ist das zweite Verteil-Regelventil 18b für die verhältnismäßig hohen Volumenströme aus der Heizungs-Verbindung 3 optimiert und das dritte Verteil-Regelventil 18c ist für die im Vergleich zu den Volumenströmen aus der Heizungs-Verbindung 3 geringeren Volumenströme der ersten Puffer-Verbindung 23 optimiert.

Die Parallelanordnung von zweitem Verteil-Regelventil 18b und drittem Verteil-Regelventil 18c ist zwischen dem Rückschlagventil 34a und dem ersten Verteil-Regelventil 18a angeordnet und das erste Verteil-Regelventil 18a ist zwischen der Parallelanordnung von zweitem Verteil-Regelventil 18b und drittem Verteil-Regelventil 18c und dem Temperier-Regelventil 17 angeordnet.

Im ersten Puffer-Verbindungs-Vorlauf 23a sind ein viertes Verteil-Regelventil 18d und ein fünftes Verteil-Regelventil 18e angeordnet und im Verteil-Verbindungs-Vorlauf 26a ist ein sechstes Verteil-Regelventil 18f angeordnet. Das fünfte Verteil-Regelventil 18e ist zwischen der ersten Puffervorrichtung 5 und dem vierten Verteil-Regelventil 18d angeordnet und das vierte Verteil-Regelventil 18d ist zwischen dem fünften Verteil-Regelventil 18e und dem ersten Puffer-Regelventil 25 angeordnet.

Der Verteil-Verbindungs-Vorlauf 26a ist zwischen dem vierten Verteil-Regelventil 18d und dem fünften Verteil-Regelventil 18e mit dem ersten Puffer-Verbindungs-Vorlauf 23a verbunden und zwischen dem ersten Verteil-Regelventil 18a und der Parallelanordnung von zweitem Verteil-Regelventil 18b und drittem Verteil-Regelventil 18c mit dem Heizungsvorlauf 3a verbunden.

Der Verteil-Verbindungs-Rücklauf 26b ist zwischen der ersten Puffervorrichtung 5 und dem ersten Puffer-Regelventil 25 mit dem ersten Puffer-Verbindungs-Rücklauf 23b verbunden und zwischen dem Rückschlagventil 34a und dem Temperier-Regelventil 17 mit dem Heizungsrücklauf 3b verbunden.

Die Warmwasserbereitungsanlage 1 umfasst eine Regelvorrichtung 35, die über strichpunktiert dargestellte Signalleitungen 40 mit den in der Warmwasserbereitungsanlage 1 vorhandenen steuerbaren oder regelbaren Pumpen (Zirkulations-Pumpe 39, erste Erwärmungs-Pumpe 28, erste Puffer-Pumpe 24, Wärmepumpen-Pumpe 20, dritte Erwärmungs-Pumpe 33a) und Ventilen (erstes Erwärmungs-Regelventil 29, erstes Puffer-Regelventil 25, Wärmepumpen-Regelventil 21, Trenn-Regelventil 22, Temperier-Regelventil 17, Verteil-Regelventile 18a, 18b, 18c, 18d, 18e, 18f) signalleitend verbunden ist, um diese anzusteuern oder zu regeln.

Außerdem ist die Regelvorrichtung 35 mit aus Gründen der Übersichtlichkeit hier nicht gezeigten Temperatursensoren signalleitend verbunden, um die von den Temperatursensoren gemessenen Temperaturen an die Regelvorrichtung 35 zu melden. So weisen der erste Wärmetauscher 9 und der zweite Wärmetauscher 14a jeweils vier Temperatursensoren auf, um die Temperaturen des jeweiligen Mediums (Erwärmungswasser E, Heizwasser H) an den Anschlüssen (Vorlauf und Rücklauf) des jeweiligen Hochtemperaturbereichs des ersten Wärmetauschers 9 und des zweiten Wärmetauschers 14a sowie die Temperaturen des jeweiligen Mediums am ersten Wärmetauschereingang 10 und am ersten Wärmetauscherausgang 11 des ersten Wärmetauschers 9 und am zweiten Wärmetauschereingang 15a und am zweiten Wärmetauscherausgang 16a des zweiten Wärmetauschers 14a an die Regelvorrichtung 35 melden zu können. Auch die Wärmepumpenvorrichtung 7 ist mit Temperatursensoren ausgestattet, so ist insbesondere ein Temperatursensor vorgesehen, um die Temperatur des über den Wärmepumpen-Verbindungs-Vorlauf 19a der Wärmepumpen-Verbindung 19 (welche die Wärmepumpenvorrichtung 7 mit der Heizungs-Verbindung 3 verbindet) in die Wärmepumpenvorrichtung 7 eingebrachten Mediums (Heizwasser H aus dem Heizwasserkreislauf 4) an die Regelvorrichtung 35 zu melden. Auf Basis der von den Temperatursensoren gemeldeten Temperaturwerte kann die Regelvorrichtung 35 entsprechende Regeleingriffe vornehmen.

Darüber hinaus ist die Regelvorrichtung 35 über eine Signalleitung 40 mit dem Wasserzähler 38 signalleitend verbunden. Der Wasserzähler 38 kann dadurch die momentanen Verbrauchswerte des über den Kaltwasseranschluss A in die Warmwasserbereitungsanlage 1 eingespeisten Trinkwassers T an die Regelvorrichtung 35 melden.

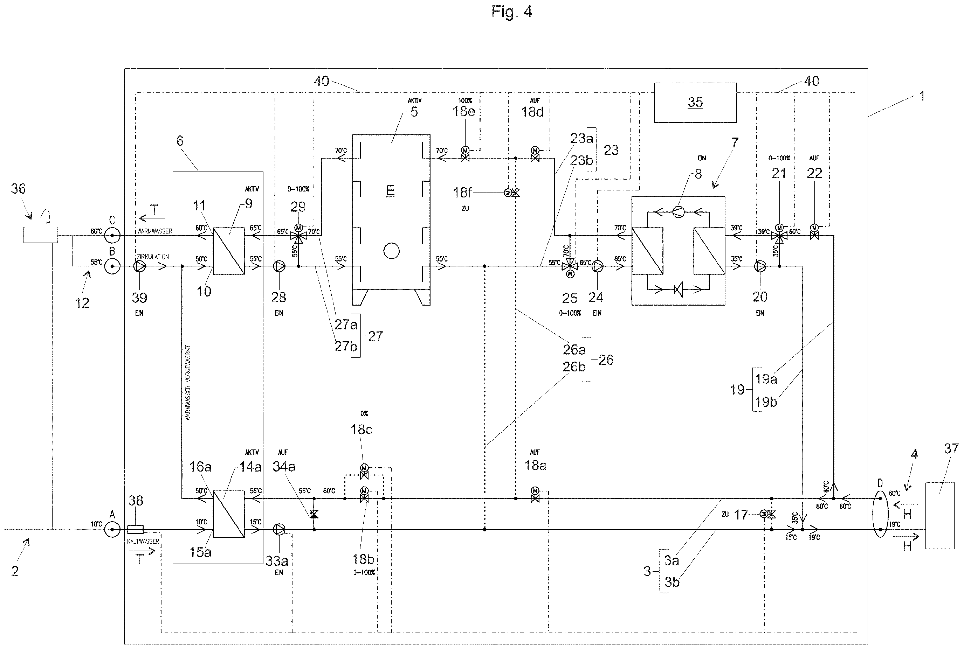

Die Figuren 4 bis 11 zeigen die Warmwasserbereitungsanlage 1 gemäß Figur 3 in verschiedenen Betriebszuständen. Die verschiedenen Betriebszustände können über die Regelvorrichtung 35 und die damit gesteuerten oder geregelten Ventilen (erstes Erwärmungs-Regelventil 29, erstes Puffer-Regelventil 25, Wärmepumpen-Regelventil 21, Trenn-Regelventil 22, Temperier-Regelventil 17, Verteil-Regelventile 18a, 18b, 18c, 18d, 18e, 18f) und Pumpen (Zirkulations-Pumpe 39, erste Erwärmungs-Pumpe 28, erste Puffer-Pumpe 24, Wärmepumpen-Pumpe 20, dritte Erwärmungs-Pumpe 33a) hervorgerufen werden.

Die Regelvorrichtung 35 kann beispielsweise mittels PID-Regler mit Sprungantwort darüber entscheiden, in welchen Betriebszustand die Warmwasserbereitungsanlage 1 versetzt werden soll (Warmwasser mit geringer Entnahme, Warmwasser mit hoher Entnahme, reine Warmwasserzirkulation, etc...). Das Produkt aus Kaltwasservolumenstrom des über den Kaltwasseranschluss A in die Warmwasserbereitungsanlage 1 eingespeisten Trinkwassers T und Warmwasserzirkulationsvolumenstrom des über den Zirkulationsanschluss B in die Warmwasserbereitungsanlage 1 zurückgespeisten Trinkwassers T kann im Frischwassermodul so verarbeitet werden, dass der Warmwasservolumenstrom des über den Warmwasseranschluss C von der Warmwasserbereitungsanlage 1 abgegebenen Trinkwassers T stets mit korrekter und einstellbarer Temperatur (z.B. 60-62°C) die Warmwasserbereitungsanlage 1 verlässt.

Nachfolgend werden nähere Angaben zu geeigneten Pumpen und Ventilen angegeben. Die beschriebenen Pumpen und Ventile sind aber nicht auf das Ausführungsbeispiel gemäß Figur 3 beschränkt, sondern diese Pumpen und Ventile können auch bei anderen Ausführungsbeispielen zum Einsatz kommen.

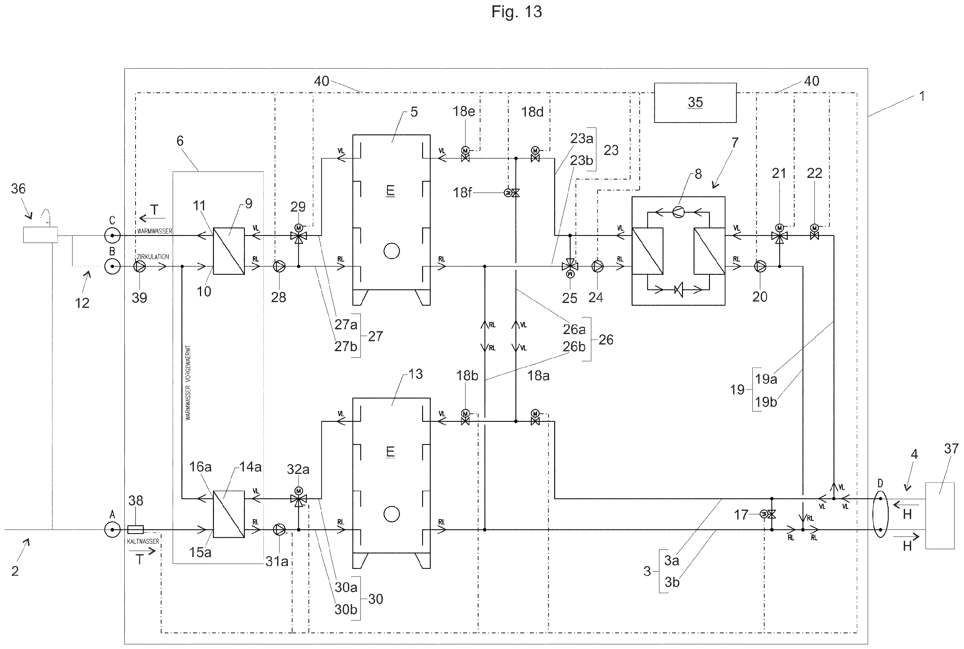

Weitere Angaben zu geeigneten Pumpen und Ventilen sind in der Figurenbeschreibung zu Figur 13 enthalten.

Bei der dritten Erwärmungs-Pumpe 33a kann es sich um eine elektronische, drehzahlgeregelte, hocheffiziente Heizungspumpe handeln, mit einer Regelungsart ferngeregelt 0-100% von übergeordneter Regelvorrichtung 35. Die Regelung mittels der Regelvorrichtung 35 kann sich beispielsweise über im zweiten Wärmetauscher 14a angeordnete Temperatursensoren (z.B. können im zweiten Wärmetauscher 14a vier Temperatursensoren angeordnet sein) die momentan benötigte Förderleistung der dritten Erwärmungs-Pumpe 33a errechnen und die dritte Erwärmungs-Pumpe 33a entsprechend ansteuern.

Beim zweiten Verteil-Regelventil 18b kann es sich um ein druckunabhängiges, voreinstellbares, Zwei-Weg-Regelventil handeln, das stetig geregelt wird (Weg zwischen den Ventilanschlüssen A-B 0-100%). Es kann als Drosselventil eingesetzt werden, dessen maximal möglicher Durchfluss begrenzt ist. Dieses Ventil dient dazu, um den zweiten Wärmetauscher 14a mit dem notwendigen Volumenstrom aus der Hauptheizung bzw. aus dem Heizwasserkreislauf 4 zu versorgen. Im Idealfall entspricht die Ladeleistung der momentanen Entladeleistung. Somit kann gewährleistet werden, dass das Heizwasser H maximal abgekühlt wird und kein heißes Heizwasser H in den Heizungsrücklauf 3b gelangen kann. Eine zu rasche Ladung begünstigt eine - nicht gewünschte - höhere Rücklauftemperaur. Der Ladevolumenstrom ist nach oben hin durch dieses Ventil begrenzt. Dadurch kann gewährleistet werden, dass bei Spitzenentnahmezeiten nicht nur die Warmwasserbereitung mit Energie aus der Hauptheizung bzw. aus dem Heizwasserkreislauf 4 versorgt wird.

Beim dritten Verteil-Regelventil 18c kann es sich um ein druckunabhängiges, voreinstellbares, Zwei-Weg-Regelventil handeln, das stetig geregelt wird (Weg zwischen den Ventilanschlüssen A-B 0-100%). Es kann als Drosselventil eingesetzt werden, dessen maximal möglicher Durchfluss begrenzt ist. Dieses Ventil dient dazu, um den zweiten Wärmetauscher 14a mit dem notwendigen Volumenstrom aus der Wärmepumpenvorrichtung 7 zu versorgen. Im Idealfall entspricht die Ladeleistung der momentanen Entladeleistung. Somit kann gewährleistet werden, dass das Heizwasser H maximal abgekühlt wird und kein heißes Heizwasser H in den Heizungsrücklauf 3b gelangen kann. Eine zu rasche Ladung begünstigt eine - nicht gewünschte - höhere Rücklauftemperaur. Der Ladevolumenstrom ist nach oben hin durch dieses Ventil begrenzt. Dadurch kann gewährleistet werden, dass bei Spitzenentnahmezeiten nicht nur der zweite Wärmetauscher 14a sondern auch die erste Puffervorrichtung 5 mit Energie aus der Wärmepumpenvorrichtung 7 versorgt wird. Da die Vorlauftemperatur aus der Hauptheizung bzw. aus dem Heizwasserkreislauf 4 kleiner als die Vorlauftemperatur aus der Wärmepumpenvorrichtung 7 ist, ergeben sich bei gleichbleibender Leistung unterschiedliche Volumenströme der beiden Versorgungsquellen. Aus diesem Grund ist es sinnvoll, an dieser Stelle zwei Regelventile (zweites Verteil-Regelventil 18b und drittes Verteil-Regelventil 18c) vorzusehen.

In den Figuren 4 bis 11 sind aktivierte Verbindungen, d.h. Verbindungen, über die im jeweiligen Betriebszustand ein Medium fließt oder zirkuliert, durchgezogen dargestellt. Nicht aktivierte Verbindungen, d.h. Verbindungen, über die im jeweiligen Betriebszustand kein Medium fließt oder zirkuliert, sind in diesen Figuren strichliert dargestellt.

Figur 4 zeigt einen sogenannten Regelbetrieb mit aktivierter Warmwasserbereitung und aktivierter Zirkulation. Unter Regelbetrieb wird der Normalbetriebszustand verstanden, d.h. jener Betriebszustand, bei dem die Warmwasserbereitung und die Zirkulation über die Wärmepumpenvorrichtung 7 und über den Heizwasserkreislauf 4 versorgt werden. Hierbei ist die Verteil-Verbindung 26 nicht aktiv (das sechste Verteil-Regelventil 18f ist geschlossen), sodass keine aktive Verbindung zwischen der Heizungs-Verbindung 3 und der ersten Puffer-Verbindung 23 besteht. Außerdem ist das dritte Verteil-Regelventil 18c geschlossen und das Temperier-Regelventil 17 ist ebenfalls geschlossen. Über den Heizungsvorlauf 3a wird in diesem Beispiel Heizwasser H mit einer Temperatur von 60°C in die Warmwasserbereitungsanlage 1 eingespeist. Bei der gezeigten hydraulischen Verschaltung und einer entsprechenden Ansteuerung oder Regelung der Ventile (erstes Erwärmungs-Regelventil 29, erstes Puffer-Regelventil 25, Wärmepumpen-Regelventil 21, Trenn-Regelventil 22, Temperier-Regelventil 17, Verteil-Regelventile 18a, 18b, 18c, 18d, 18e, 18f) und Pumpen (Zirkulations-Pumpe 39, erste Erwärmungs-Pumpe 28, erste Puffer-Pumpe 24, Wärmepumpen-Pumpe 20, dritte Erwärmungs-Pumpe 33a) wird in diesem Beispiel der Wärmepumpe 8 eingangsseitig über den Wärmepumpen-Verbindungs-Vorlauf 19a Heizwasser H mit einer Temperatur von 39°C zugeführt (die Temperatur des Heizwassers H wird im Wärmepumpen-Regelventil 21 von 60°C auf 39°C abgekühlt), das sich in der Wärmepumpe 8 auf 35°C abkühlt und in den Wärmepumpen-Verbindungs-Rücklauf 19b abgegeben wird. Das Temperaturniveau des Heizwassers H wird in der Wärmepumpe 8 angehoben, so dass die Wärmepumpe 8 ausgangsseitig Erwärmungswasser E mit einer Temperatur von 70°C bereitstellt, welches über den ersten Puffer-Verbindungs-Vorlauf 23a in die erste Puffervorrichtung 5 eingespeist wird. Das Erwärmungswasser E wird im ersten Erwärmungs-Regelventil 29 auf 65°C abgekühlt und über den ersten Erwärmungs-Verbindungs-Vorlauf 27a in den ersten Wärmetauscher 9 zur Erwärmung des Trinkwassers T eingespeist. Das im ersten Wärmetauscher 9 in diesem Beispiel auf 55°C abgekühlte Erwärmungswasser E wird über den ersten Erwärmungs-Verbindungs-Rücklauf 27b und über den ersten Puffer-Verbindungs-Rücklauf 23b wieder zur Wärmepumpe 8 zurückgeführt. Vor Eintritt in die Wärmepumpe 8 wird es im ersten Puffer-Regelventil 25 auf 65°C erwärmt.

In der Anbindung der Heizungs-Verbindung 3 an den zweiten Wärmetauscher 14a wird die Temperatur des Heizwassers H durch das zweite Verteil-Regelventil 18b von 60°C auf 55°C abgesenkt und mit dieser Temperatur dem zweiten Wärmetauscher 14a zur Erwärmung des Trinkwassers T zugeführt. Das im zweiten Wärmetauscher 14a in diesem Beispiel auf 15°C abgekühlte Heizwasser H wird an den Heizungsrücklauf 3b abgegeben. Dort vermischt es sich mit dem von der Wärmepumpe 8 in den Wärmepumpen-Verbindungs-Rücklauf 19b abgegebenem Heizwasser H und wird in diesem Beispiel mit einer Temperatur von 19°C in den Heizwasserkreislauf 4 zurückgeführt.

Kaltes Trinkwasser T mit einer Temperatur von 10°C wird über den zweiten Wärmetauschereingang 15a in den zweiten Wärmetauscher 14a eingebracht und dort auf 50°C erwärmt. Das erwärmte Trinkwasser T verlässt über den zweiten Wärmetauscherausgang 16a den zweiten Wärmetauscher 14a und tritt über den ersten Wärmetauschereingang 10 in den ersten Wärmetauscher 9, in dem es von 50°C auf 60°C erwärmt wird. Über den ersten Wärmetauscherausgang 11 verlässt das erwärmte Trinkwasser T den ersten Wärmetauscher 9 und wird über den Warmwasseranschluss C dem Warmwasserverbraucher 36 bereitgestellt.

Mit dem in Figur 4 gezeigten Regelbetrieb der Warmwasserbereitungsanlage 1 ist es möglich, Heizwasser H mit sehr niedrigen Temperaturen in den Heizkreislauf 4 zurückzuspeisen, indem durch die Regelvorrichtung 35 wenigstens ein Regelventil aus der Regelventilgruppe und/oder wenigstens eine Pumpe aus der Pumpengruppe derart geregelt wird bzw. werden, dass an den Heizwasserkreislauf 4 über den Heizungsrücklauf 3b der Heizungs-Verbindung 3 Heizwasser H mit einer Temperatur kleiner gleich etwa 35 °C zurückgespeist wird. Dabei kann vorgesehen sein, dass Heizwasser H mit einer Temperatur von etwa 15 °C bis etwa 35 °C, vorzugsweise etwa 19 °C, zurückgespeist wird.

Dies kann beispielsweise dadurch erreicht werden, dass die Regelvorrichtung 35 auf Basis der vom Temperatursensor am Rücklauf-Anschluss des Hochtemperaturbereichs des zweiten Wärmetauschers 14a (am Anschluss des zweiten Wärmetauschers 14a, der den zweiten Wärmetauscher 14a mit dem Heizungsrücklauf 3b der Heizungs-Verbindung 3 verbindet) gemeldeten Temperatur die im Heizungsrücklauf 3b angeordnete dritte Erwärmungs-Pumpe 33a und das im Heizungsvorlauf 3a der Heizungs-Verbindung 3 angeordnete zweite Verteil-Regelventil 18b derart ansteuert oder regelt, dass sich an diesem Temperatursensor eine Temperatur im Bereich von etwa 10 °C bis etwa 20 °C einstellt (im gezeigten Beispiel beträgt die Temperatur an diesem Temperatursensor 15 °C). Es kann auch vorgesehen sein, dass zusätzlich die vom Temperatursensor am zweiten Wärmetauscher-Ausgang 16a gemeldete Temperatur berücksichtigt wird, wobei die dritte Erwärmungs-Pumpe 33a und das zweite Verteil-Regelventil 18b derart angesteuert oder geregelt werden, dass sich an diesem Temperatursensor eine Temperatur im Bereich von etwa 45 °C bis etwa 55 °C einstellt (im gezeigten Beispiel beträgt die Temperatur an diesem Temperatursensor 50 °C). Es kann somit eine Regelung von dritter Erwärmungs-Pumpe 33a und zweitem Verteil-Regelventil 18b erfolgen, sodass die Temperatur am zweiten Wärmetauscher-Ausgang 16a einen vorgebbaren Wert von z.B. 50 °C beträgt und die Temperatur am hochtemperaturseitigen Rücklauf-Anschluss des zweiten Wärmetauschers 14a einen weiteren vorgebbaren Wert von z.B. 15 °C beträgt. Eine derartige Regelung kann zusätzlich unter der Vorgabe erfolgen, mit einem möglichst geringen Volumenstrom den vorgebbaren Wert für die Temperatur am zweiten Wärmetauscher-Ausgang 16a zu erzielen.

Außerdem regelt die Regelvorrichtung 35 das im Wärmepumpen-Verbindungs-Vorlauf 19a der Wärmepumpen-Verbindung 19 (welche die Wärmepumpenvorrichtung 7 mit der Heizungs-Verbindung 3 verbindet) angeordnete Wärmepumpen-Regelventil 21 auf Basis der vom Temperatursensor der Wärmepumpenvorrichtung 7 am Wärmepumpen-Verbindungs-Vorlauf 19a gemeldeten Temperatur derart, dass sich an diesem Temperatursensor eine Temperatur im Bereich von etwa 20 °C bis etwa 45 °C einstellt (im gezeigten Beispiel beträgt die Temperatur an diesem Temperatursensor 39 °C). Hierbei kann vorgesehen sein, dass die im Wärmepumpen-Verbindungs-Rücklauf 19b der Wärmepumpen-Verbindung 19 angeordnete Wärmepumpen-Pumpe 20 differenzdruckgeregelt ist und einen konstanten Volumenstrom über den Verdampfer der wenigstens einen Wärmepumpe 8 der Wärmepumpenvorrichtung 7 hält.

Dadurch ist es im gezeigten Beispiel möglich, dass auf 19 °C abgekühltes Heizwasser H über den Heizungsrücklauf 3b an den Heizwasserkreislauf 4 zurückgespeist wird.

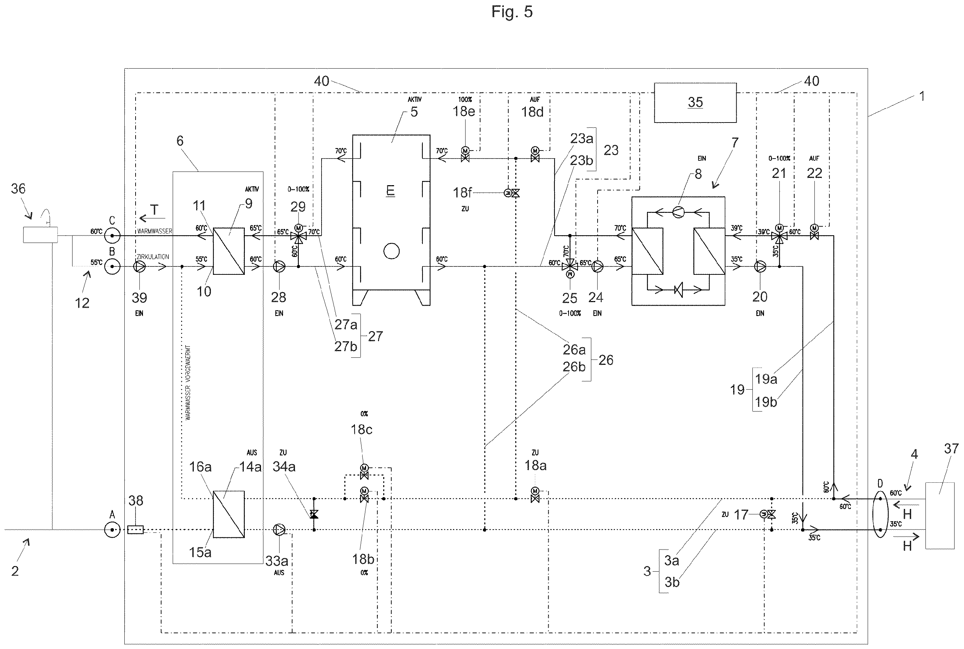

Figur 5 zeigt einen weiteren Betriebszustand, bei dem nur die Zirkulation aktiv ist. Konkret sind hier die Wärmepumpen-Verbindung 19, die erste Puffer-Verbindung 23 und die erste Erwärmungs-Verbindung 27 aktiv, wohingegen die Verteil-Verbindung 26 nicht aktiv ist. Das erste Verteil-Regelventil 18a, das zweite Verteil-Regelventil 18b, das dritte Verteil-Regelventil 18c und das Temperier-Regelventil 17 sind geschlossen. Damit ist auch der zweite Wärmetauscher 14a nicht aktiv. Auch die Verbindung zwischen dem zweiten Wärmetauscherausgang 16a und dem ersten Wärmetauschereingang 10 ist nicht aktiv. Die Zirkulations-Pumpe 39 ist aktiv und sorgt dafür, dass stets warmes Trinkwasser T mit einer Temperatur von in diesem Beispiel 60°C über den Warmwasseranschluss C dem Warmwasserverbraucher 36 bereitgestellt werden kann.

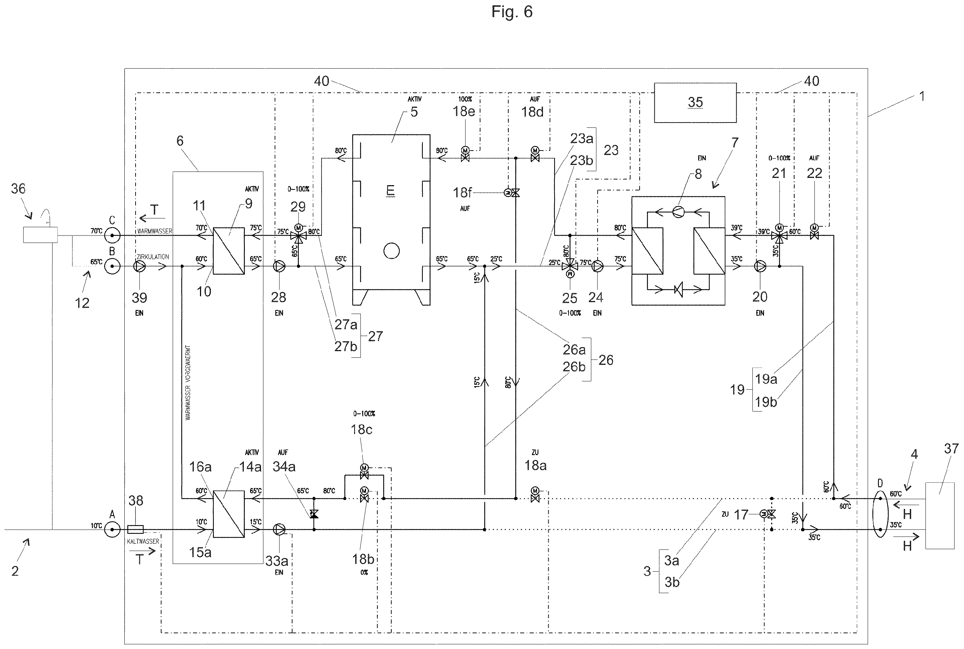

Figur 6 zeigt einen Betriebszustand, der für eine thermische Desinfektion geeignet ist. Im thermischen Desinfektionsfall wird die Leittemperatur des über den Warmwasseranschluss C bereitgestellten Warmwasservolumenstromes entsprechend den Vorgaben aus Berechnungen bis max. 80°C erhöht. Bei der thermischen Desinfektion ist davon auszugehen, dass der Volumenstrom an Warmwasser kontrolliert gering gehalten wird. Dies setzt voraus, dass das Personal das zur thermischen Desinfektion eingesetzt wird, entsprechend geschult ist.

In dem gezeigten Betriebszustand sind die Wärmepumpen-Verbindung 19, die erste Puffer-Verbindung 23, die erste Erwärmungs-Verbindung 27 und auch die Verteil-Verbindung 26 aktiv. Das Temperier-Regelventil 17, das erste Verteil-Regelventil 18a und das zweite Verteil-Regelventil 18b sind jedoch geschlossen. Im Heizungsrücklauf 3b ist der Abschnitt zwischen der Verbindung mit dem Verteil-Verbindungs-Rücklauf 26b und dem Wärmepumpen-Verbindungs-Rücklauf 19b nicht aktiv.

Durch die Wärmepumpenvorrichtung 7 wird ausgangsseitig Erwärmungswasser E mit einer Temperatur von 80°C bereitgestellt. Dieses wird einerseits über den ersten Puffer-Verbindungs-Vorlauf 23a in die erste Puffervorrichtung 5 eingespeist und andererseits über den Verteil-Verbindungs-Vorlauf 26a dem zweiten Wärmetauscher 14a bereitgestellt. Durch das dritte Verteil-Regelventil 18c und die dritte Erwärmungs-Pumpe 33a in Verbindung mit dem Rückschlagventil 34a wird die Temperatur vor Eintritt in den zweiten Wärmetauscher 14a auf 65°C gesenkt. Im zweiten Wärmetauscher 14a wird ein mit 10°C eingebrachtes Trinkwasser T auf 60°C erwärmt.

Das Erwärmungswasser E aus der ersten Puffervorrichtung 5 wird im ersten Erwärmungs-Regelventil 29 auf 75°C abgekühlt und über den ersten Erwärmungs-Verbindungs-Vorlauf 27a in den ersten Wärmetauscher 9 zur Erwärmung des Trinkwassers T eingespeist.

Im ersten Wärmetauscher 9 wird das vom zweiten Wärmetauscher 14a auf 60°C vorerwärmte Trinkwasser T weiter auf 70°C erwärmt und über den Warmwasseranschluss C dem Warmwasserverbraucher 36 bereitgestellt.

Insgesamt kommt es durch die hohen vorherrschenden Temperaturen zu einer thermischen Desinfektion der Komponenten der Warmwasserbereitungsanlage 1.

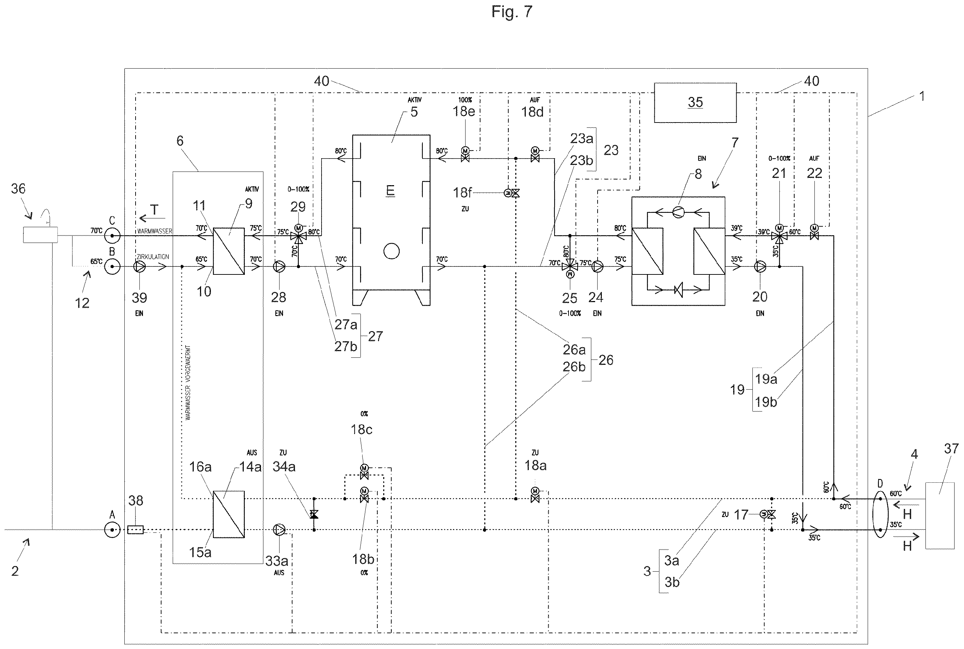

Figur 7 zeigt einen weiteren Betriebszustand, der für eine thermische Desinfektion geeignet ist. Im Unterschied zur Figur 6 ist hierbei die Verteil-Verbindung 26 nicht aktiv. Dadurch ist auch der zweite Wärmetauscher 14a nicht aktiv. Auch die Verbindung zwischen dem zweiten Wärmetauscherausgang 16a und dem ersten Wärmetauschereingang 10 ist nicht aktiv.

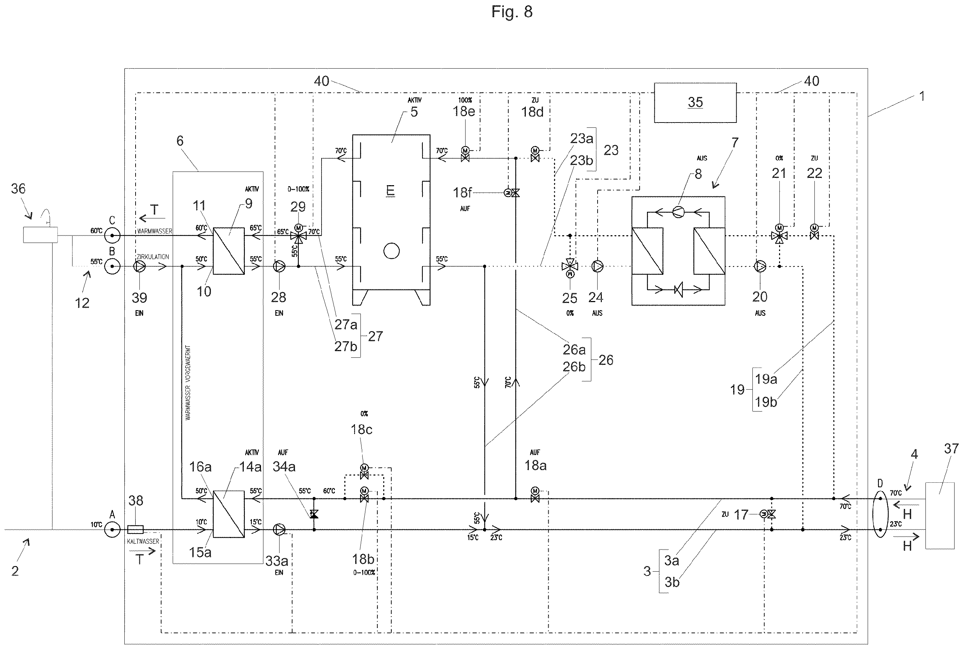

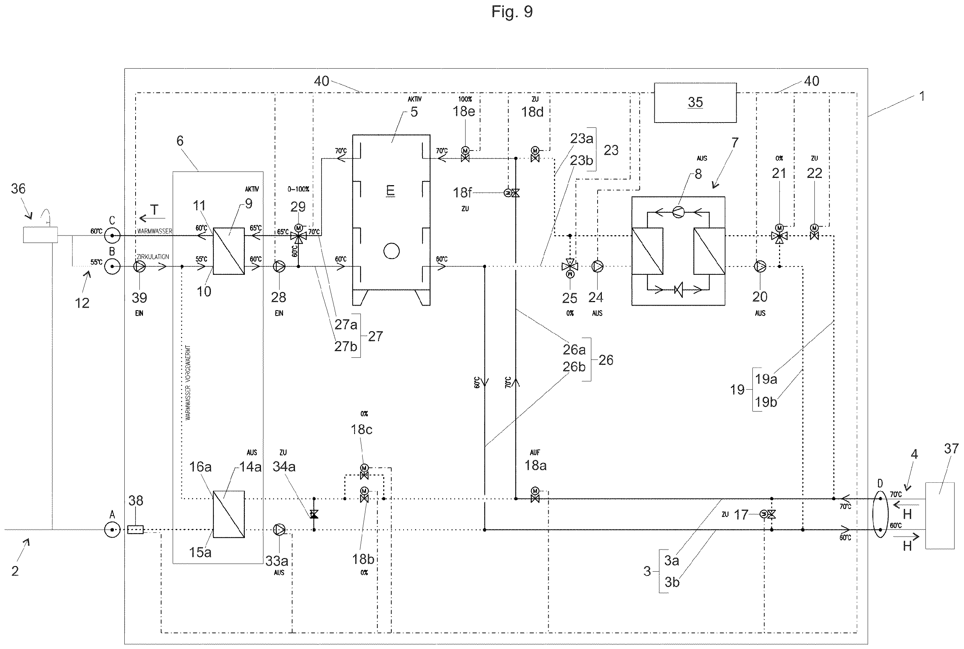

Die Figuren 8 und 9 zeigen Betriebszustände, bei denen die Wärmepumpenvorrichtung 7 nicht aktiv ist. Das Temperier-Regelventil 17, das Wärmepumpen-Regelventil 21, das Trenn-Regelventil 22, das erste Puffer-Regelventil 25, das dritte Verteil-Regelventil 18c und das vierte Verteil-Regelventil 18d sind geschlossen. Die Wärmepumpen-Pumpe 20 und die erste Puffer-Pumpe 24 sind nicht aktiv. Im Beispiel der Figur 9 ist zusätzlich das zweite Verteil-Regelventil 18b geschlossen und die dritte Erwärmungs-Pumpe 33a ist nicht aktiv, sodass hierbei auch der zweite Wärmetauscher 14a nicht aktiv ist (in diesem Fall ist dann auch die Verbindung zwischen dem zweiten Wärmetauscherausgang 16a und dem ersten Wärmetauschereingang 10 nicht aktiv).

In beiden Beispielen wird über die Heizungs-Verbindung 3 Heizwasser H mit einer Temperatur von 70°C in die Warmwasserbereitungsanlage 1 eingespeist. Damit kann auch ohne den Einsatz der Wärmepumpenvorrichtung 7 warmes Trinkwasser T mit einer Temperatur von 60°C über den Warmwasseranschluss C bereitgestellt werden. Voraussetzung dafür ist eine entsprechend hohe Vorlauftemperatur im Heizwasserkreislauf 4, welche z.B. durch Solar- oder Fernwärmebetrieb oder durch Wärmeabbau einer Wärmepumpenhauptheizung im Sommerbetrieb bereitgestellt werden kann.

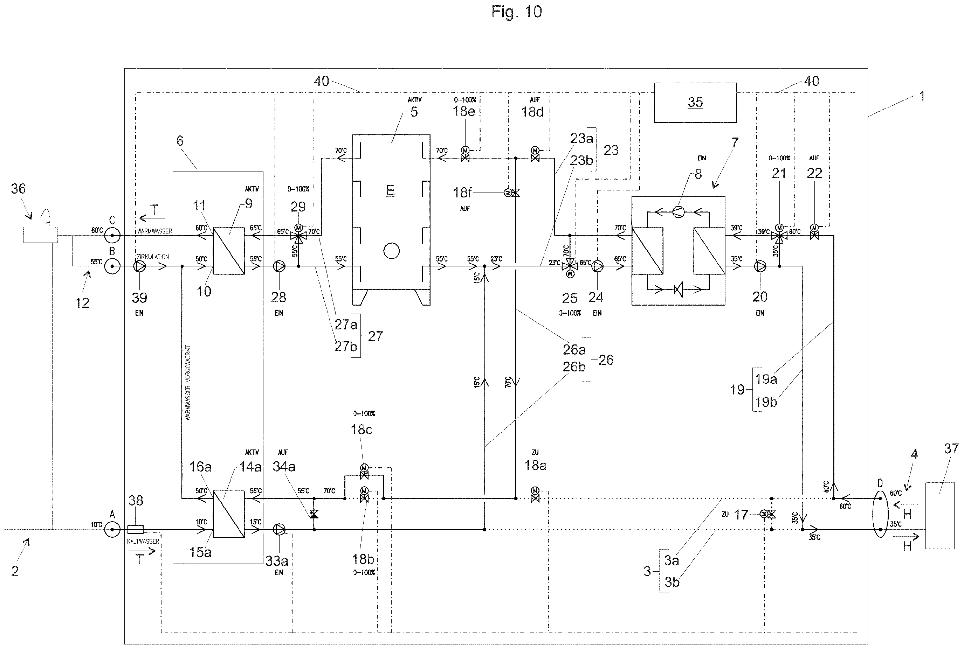

Figur 10 zeigt einen weiteren Betriebszustand, der insbesondere für eine geringe Warmwasserabnahme geeignet ist. Die hydraulische Verschaltung entspricht dem in Figur 6 gezeigten Betriebszustand mit dem Unterschied, dass von der Wärmepumpenvorrichtung 7 ausgangsseitig Erwärmungswasser E mit einer Temperatur von 70°C (anstatt 80°C wie in Figur 6) bereitgestellt wird. Dementsprechend geringer ist auch die Temperatur des über den Warmwasseranschluss C bereitgestellten erwärmten Trinkwassers T (60°C anstatt 70°C wie in Figur 6).

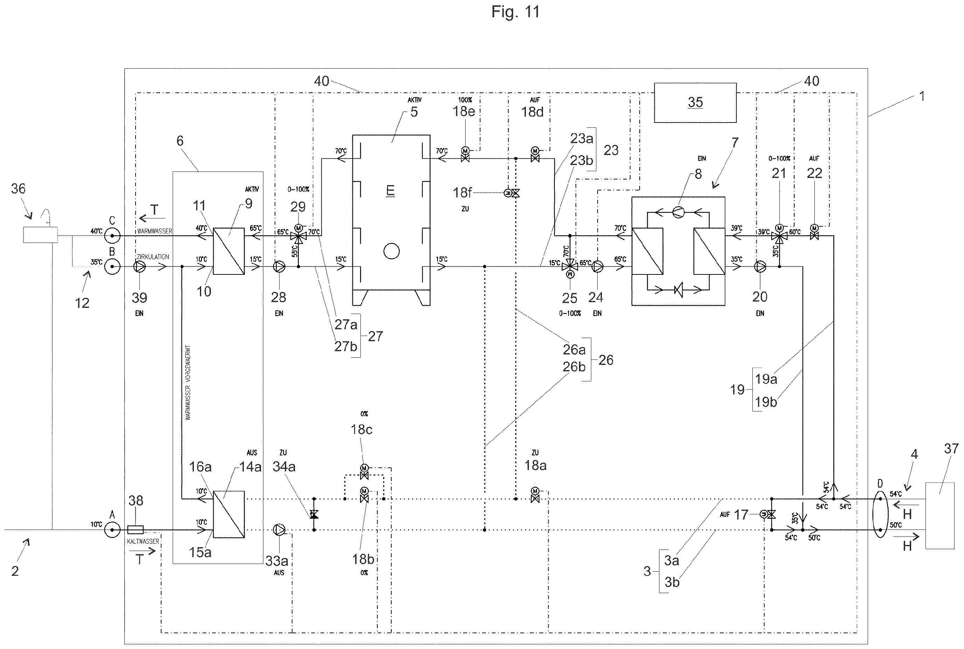

Figur 11 zeigt einen Betriebszustand mit der Bezeichnung Anfahrschaltung. Die hydraulische Verschaltung entspricht dem in Figur 4 gezeigten Betriebszustand (Regelbetrieb) mit dem Unterschied, dass die dritte Erwärmungs-Pumpe 33a nicht aktiv ist, das erste Verteil-Regelventil 18a und das zweite Verteil-Regelventil 18b geschlossen sind und das Temperier-Regelventil 17 geöffnet ist. Über das Temperier-Regelventil 17 kann warmes Heizwasser H aus dem Heizungsvorlauf 3a in den Heizungsrücklauf 3b zurückgespeist werden, um ein schnelleres Erhöhen der Temperatur des Heizwassers H im Heizwasserkreislauf 4 zu ermöglichen. Dieser Betriebszustand ist insbesondere dann günstig, wenn die Vorlauftemperatur im Heizungsvorlauf 3a einen vorgegebenen oder vorgebbaren Wert unterschreitet. Da während dieses Betriebszustandes das Trinkwasser T im zweiten Wärmetauscher 14a nicht erwärmt wird, wird hierbei Trinkwasser T mit einer reduzierten Temperatur von in diesem Beispiel 40°C über den Warmwasseranschluss C bereitgestellt.

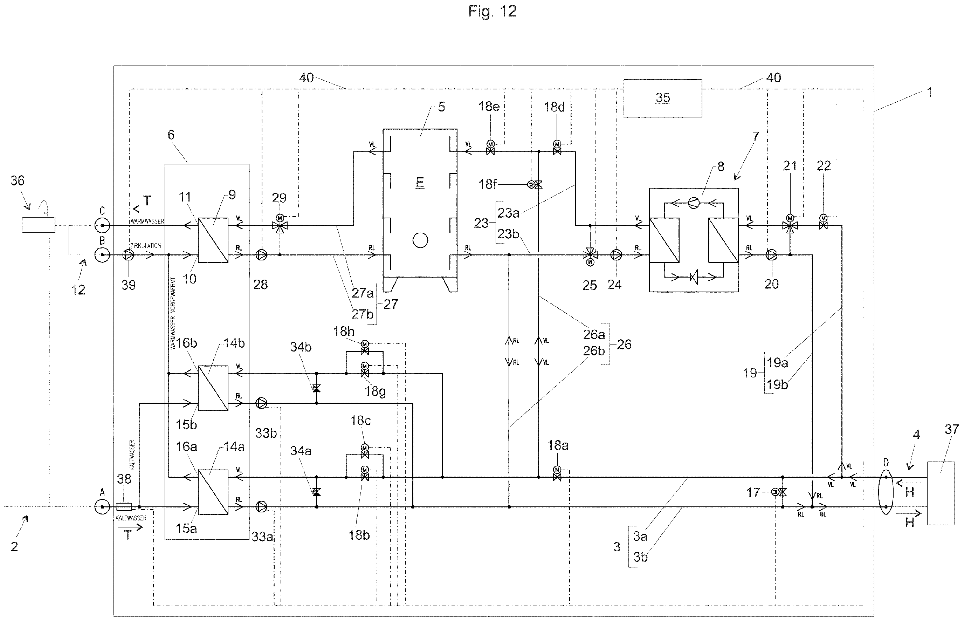

Figur 12 zeigt ein Ausführungsbeispiel einer Warmwasserbereitungsanlage 1, welche insbesondere für mittlere bis große Warmwasserleistungen geeignet ist. Ergänzend zu der in Figur 3 gezeigten Warmwasserbereitungsanlage 1 umfasst die hier gezeigte Warmwasserbereitungsanlage 1 einen weiteren zweiten Wärmetauscher 14b, der parallel zum zweiten Wärmetauscher 14a geschaltet ist.

Hochtemperaturseitig ist daher der weitere zweite Wärmetauscher 14b ebenso an die Heizungs-Verbindung 3 angebunden. In der Anbindung an die Heizungs-Verbindung 3 sind eine weitere dritte Erwärmungs-Pumpe 33b, ein weiteres Rückschlagventil 34b und eine Parallelanordnung von einem siebenten Verteil-Regelventil 18g und einem achten Verteil-Regelventil 18h angeordnet. Die weitere dritte Erwärmungs-Pumpe 33b ist zwischen dem weiteren zweiten Wärmetauscher 14b und dem weiteren Rückschlagventil 34b angeordnet und das weitere Rückschlagventil 34b ist zwischen der weiteren dritten Erwärmungs-Pumpe 33b und der Parallelanordnung von siebentem Verteil-Regelventil 18g und achtem Verteil-Regelventil 18h angeordnet.

Niedertemperaturseitig weist der weitere zweite Wärmetauscher 14b einen weiteren zweiten Wärmetauschereingang 15b auf, in den kaltes Trinkwasser T eingespeist werden kann. Im weiteren zweiten Wärmetauscher 14b erwärmtes Trinkwasser T kann über einen weiteren zweiten Wärmetauscherausgang 16b, der mit dem ersten Wärmetauschereingang 10 des ersten Wärmetauschers 9 verbunden ist, in den ersten Wärmetauscher 9 zur weiteren Erwärmung eingespeist werden.

Insgesamt kann damit über den Kaltwasseranschluss A in die Warmwasserbereitungsanlage 1 eingespeistes kaltes Trinkwasser T parallel und somit gleichzeitig in den zweiten Wärmetauschern 14a, 14b vorerwärmt werden. Das in den zweiten Wärmetauschern 14a, 14b vorerwärmte Trinkwasser T wird zusammengeführt und an den ersten Wärmetauscher 9 zur weiteren Erwärmung weitergeleitet.

Figur 13 zeigt ein weiteres Ausführungsbeispiel einer vorgeschlagenen Warmwasserbereitungsanlage 1.

Die hydraulische Verschaltung entspricht der in Figur 3 gezeigten Warmwasserbereitungsanlage 1 mit dem Unterschied, dass die in Figur 13 dargestellte Warmwasserbereitungsanlage 1 eine zweite Puffervorrichtung 13 in Form eines einzigen zweiten Pufferspeichers umfasst (je nach Lastanforderung könnte die zweite Puffervorrichtung 13 mehrere zweite Pufferspeicher umfassen).

Die zweite Puffervorrichtung 13 ist einerseits mit der Heizungs-Verbindung 3 und andererseits über eine zweite Erwärmungs-Verbindung 30 (umfassend einen zweiten Erwärmungs-Verbindungs-Vorlauf 30a und einen zweiten Erwärmungs-Verbindungs-Rücklauf 30b) mit der Erwärmungsvorrichtung 6 verbunden. Konkret verbinden der zweite Erwärmungs-Verbindungs-Vorlauf 30a und der zweite Erwärmungs-Verbindungs-Rücklauf 30b den Hochtemperaturbereich des zweiten Wärmetauschers 14a der Erwärmungsvorrichtung 6 mit der zweiten Puffervorrichtung 13.

Im mit der zweiten Puffervorrichtung 13 verbundenen Heizungsvorlauf 3a sind ein erstes Verteil-Regelventil 18a und ein zweites Verteil-Regelventil 18b angeordnet, wobei das erste Verteil-Regelventil 18a zwischen der zweiten Puffervorrichtung 13 und dem zweiten Verteil-Regelventil 18b angeordnet ist und wobei das zweite Verteil-Regelventil 18b zwischen dem ersten Verteil-Regelventil 18a und dem Temperier-Regelventil 17 angeordnet ist.

Wie im Ausführungsbeispiel der Figur 3 ist die erste Puffer-Verbindung 23 mit der Heizungs-Verbindung 3 über eine Verteil-Verbindung 26 (umfassend einen Verteil-Verbindungs-Vorlauf 26a und einen Verteil-Verbindungs-Rücklauf 26b) verbunden.

Der Verteil-Verbindungs-Vorlauf 26a ist zwischen dem vierten Verteil-Regelventil 18d und dem fünften Verteil-Regelventil 18e mit dem ersten Puffer-Verbindungs-Vorlauf 23a verbunden und zwischen dem ersten Verteil-Regelventil 18a und dem zweiten Verteil-Regelventil 18b mit dem Heizungsvorlauf 3a verbunden.

Der Verteil-Verbindungs-Rücklauf 26b ist zwischen der ersten Puffervorrichtung 5 und dem ersten Puffer-Regelventil 25 mit dem ersten Puffer-Verbindungs-Rücklauf 23b verbunden und zwischen der zweiten Puffervorrichtung 13 und dem Temperier-Regelventil 17 mit dem Heizungsrücklauf 3b verbunden.

Je nach Ansteuerung oder Regelung der betreffenden Ventile oder Pumpen kann somit Heizwasser H aus dem Heizwasserkreislauf 4, von der Wärmepumpenvorrichtung 7 bereitgestelltes Erwärmungswasser E oder eine Mischung von beiden in der zweiten Puffervorrichtung 13 als darin befindliches Erwärmungswasser E bereitgestellt werden.

Die im Ausführungsbeispiel der Figur 3 in der Heizungs-Verbindung 3 angeordneten dritte Erwärmungs-Pumpe 33a und das Rückschlagventil 34a sind ersetzt durch eine in der zweiten Erwärmungs-Verbindung 30 angeordnete zweite Erwärmungs-Pumpe 31a und ein in der zweiten Erwärmungs-Verbindung 30 angeordnetes zweites Erwärmungs-Regelventil 32a. Die zweite Erwärmungs-Pumpe 31a ist zwischen dem zweiten Wärmetauscher 14a und dem zweiten Erwärmungs-Regelventil 32a angeordnet und das zweite Erwärmungs-Regelventil 32a ist zwischen der zweiten Erwärmungs-Pumpe 31a und der zweiten Puffervorrichtung 13 angeordnet.

Die zweite Erwärmungs-Pumpe 31a ist im zweiten Erwärmungs-Verbindungs-Rücklauf 30b angeordnet. Das zweite Erwärmungs-Regelventil 32a ist im zweiten Erwärmungs-Verbindungs-Vorlauf 30a angeordnet und hat zur Temperatureinstellung des dem zweiten Wärmetauscher 14a zuzuführenden Erwärmungswassers E aus der zweiten Puffervorrichtung 13 zusätzlich eine Verbindung zum zweiten Erwärmungs-Verbindungs-Rücklauf 30b.

Nachfolgend werden nähere Angaben zu geeigneten Pumpen und Ventilen angegeben. Die beschriebenen Pumpen und Ventile sind aber nicht auf das Ausführungsbeispiel gemäß Figur 13 beschränkt, sondern diese Pumpen und Ventile können auch bei anderen Ausführungsbeispielen zum Einsatz kommen.

Bei der Wärmepumpen-Pumpe 20 kann es sich um eine elektronische, drehzahlgeregelte, hocheffiziente Heizungspumpe handeln, mit einer Regelungsart auf konstanten Differenzdruck. Dazu können Drucksensoren im Eingang und im Ausgang des Wärmetauschers quellenseitig der Wärmepumpe 8 (also im Verdampfer der Wärmepumpe 8) angeordnet sein. Damit kann stetig ein konstanter Durchfluss über diesen Wärmetauscher gewährleistet werden. Die unterschiedlichen Druckverhälnisse bei unterschiedlichen Ventilstellungen des Wärmepumpen-Regelventils 21 können dadurch ebenfalls kompensiert werden.

Bei der ersten Puffer-Pumpe 24 kann es sich um eine elektronische, drehzahlgeregelte, hocheffiziente Heizungspumpe handeln, mit einer Regelungsart auf konstanten Differenzdruck. Dazu können Drucksensoren im Eingang und im Ausgang des Wärmetauschers quellenseitig der Wärmepumpe 8 (also im Kondensator der Wärmepumpe 8) angeordnet sein. Damit kann stetig ein konstanter Durchfluss über diesen Wärmetauscher gewährleistet werden. Die unterschiedlichen Druckverhälnisse bei unterschiedlichen Ventilstellungen des Wärmepumpen-Regelventils 21 können dadurch ebenfalls kompensiert werden.

Bei der ersten Erwärmungs-Pumpe 28 kann es sich um eine elektronische, drehzahlgeregelte, hocheffiziente Heizungspumpe handeln, mit einer Regelungsart ferngeregelt 0-100% von übergeordneter Regelvorrichtung 35. Die Regelung mittels der Regelvorrichtung 35 kann sich beispielsweise über im ersten Wärmetauscher 9 angeordnete Temperatursensoren (z.B. können im ersten Wärmetauscher 9 vier Temperatursensoren angeordnet sein) die momentan benötigte Förderleistung der ersten Erwärmungs-Pumpe 28 errechnen und die erste Erwärmungs-Pumpe 28 entsprechend ansteuern.

Bei der zweiten Erwärmungs-Pumpe 31a kann es sich um eine elektronische, drehzahlgeregelte, hocheffiziente Heizungspumpe handeln, mit einer Regelungsart ferngeregelt 0-100% von übergeordneter Regelvorrichtung 35. Die Regelung mittels der Regelvorrichtung 35 kann sich beispielsweise über im zweiten Wärmetauscher 14a angeordnete Temperatursensoren (z.B. können im zweiten Wärmetauscher 14a vier Temperatursensoren angeordnet sein) die momentan benötigte Förderleistung der zweiten Erwärmungs-Pumpe 31a errechnen und die zweite Erwärmungs-Pumpe 31a entsprechend ansteuern.

Beim Temperier-Regelventil 17 kann es sich um ein Zwei-Weg-Motorventil oder um eine Zwei-Weg-Motorklappe mit Stellungsrückmeldung handeln, mit einer 2-Punkt-Regelung AUF/ZU (Weg zwischen den Ventilanschlüssen A-B 100% offen oder 100% geschlossen). Das Temperier-Regelventil 17 dient dem Anfahren der Hauptheizungsanlage. Damit kann verhindert werden, dass in der Rohrleitung abgekühltes Heizungswasser in die obere, heiße Zone der zweiten Puffervorrichtung 13 gelangt.

Beim ersten Verteil-Regelventil 18a kann es sich um ein Zwei-Weg-Motorventil oder um eine Zwei-Weg-Motorklappe mit Stellungsrückmeldung handeln, mit einer 2-Punkt-Regelung AUF/ZU (Weg zwischen den Ventilanschlüssen A-B 100% offen oder 100% geschlossen). Mit dem ersten Verteil-Regelventil 18a kann die Heizungs-Verbindung 3 von der Verteil-Verbindung 26 getrennt werden und Fehlzirkulationen im System können vermieden werden. Darüber hinaus dient das erste Verteil-Regelventil 18a dazu, verschiedene Betriebszustände der Warmwasserbereitungsanlage 1 zu realisieren.

Beim zweiten Verteil-Regelventil 18b kann es sich um ein druckunabhängiges, voreinstellbares, Zwei-Weg-Regelventil handeln, das stetig geregelt wird (Weg zwischen den Ventilanschlüssen A-B 0-100%). Es kann als Drosselventil eingesetzt werden, dessen maximal möglicher Durchfluss begrenzt ist. Dieses Ventil dient dazu, um die zweite Puffervorrichtung 13 mit dem minimalst möglichen Volumenstrom zu laden. Im Idealfall entspricht die Ladeleistung der momentanen Entladeleistung. Somit kann gewährleistet werden, dass sich in der unteren Zone der zweiten Puffervorrichtung 13 immer genügend abgekühltes Wasser befindet und kein heißes Wasser in den Heizungsrücklauf 3b gelangen kann. Eine zu rasche Ladung zerstört die Schichtung im Puffer und begünstigt eine - nicht gewünschte - höhere Rücklauftemperaur. Der Ladevolumenstrom ist nach oben hin durch das zweite Verteil-Regelventil 18b begrenzt. Dadurch kann gewährleistet werden, dass bei Spitzenentnahmezeiten nicht nur die Warmwasserbereitung mit Energie versorgt wird. Die Ladung der zweiten Puffervorrichtung 13 sollte aus oben angeführten Gründen so früh wie möglich beendigt werden.

Beim vierten Verteil-Regelventil 18d kann es sich um ein Zwei-Weg-Motorventil oder um eine Zwei-Weg-Motorklappe mit Stellungsrückmeldung handeln, mit einer 2-Punkt-Regelung AUF/ZU (Weg zwischen den Ventilanschlüssen A-B 100% offen oder 100% geschlossen). Mit dem vierten Verteil-Regelventil 18d kann die erste Puffer-Verbindung 23 von der Verteil-Verbindung 26 getrennt werden und Fehlzirkulationen im System können vermieden werden. Darüber hinaus dient das vierte Verteil-Regelventil 18d dazu, verschiedene Betriebszustände der Warmwasserbereitungsanlage 1 zu realisieren.

Beim fünften Verteil-Regelventil 18e kann es sich um ein druckunabhängiges, voreinstellbares, Zwei-Weg-Regelventil handeln, das stetig geregelt wird (Weg zwischen den Ventilanschlüssen A-B 0-100%). Es kann als Drosselventil eingesetzt werden, dessen maximal möglicher Durchfluss begrenzt ist. Dieses Ventil dient dazu, um die erste Puffervorrichtung 5 mit dem minimalst möglichen Volumenstrom zu laden. Im Idealfall entspricht die Ladeleistung der momentanen Entladeleistung. Somit kann gewährleistet werden, dass sich in der unteren Zone der ersten Puffervorrichtung 5 immer genügend abgekühltes Wasser befindet und kein heißes Wasser in den Rücklauf (erster Puffer-Verbindungs-Rücklauf 23b) gelangen kann. Eine zu rasche Ladung zerstört die Schichtung im Puffer und begünstigt eine - nicht gewünschte - höhere Rücklauftemperaur. Der Ladevolumenstrom ist nach oben hin durch das fünfte Verteil-Regelventil 18e begrenzt. Dadurch kann unter anderem gewährleistet werden, dass bei Spitzenentnahmezeiten und zum Beispiel bei Ausfall der Hauptheizung bzw. des Heizwasserkreislaufs 4 nicht nur die erste Puffervorrichtung 5 sondern auch die zweite Puffervorrichtung 13 mit Energie versorgt wird. Die Ladung der ersten Puffervorrichtung 5 sollte aus oben angeführten Gründen so früh wie möglich beendigt werden.

Beim sechsten Verteil-Regelventil 18f kann es sich um ein Zwei-Weg-Motorventil oder um eine Zwei-Weg-Motorklappe mit Stellungsrückmeldung handeln, mit einer 2-Punkt-Regelung AUF/ZU (Weg zwischen den Ventilanschlüssen A-B 100% offen oder 100% geschlossen). Mit dem sechsten Verteil-Regelventil 18f kann die Heizungs-Verbindung 3 von der ersten Puffer-Verbindung 23 getrennt werden und Fehlzirkulationen im System können vermieden werden. Darüber hinaus dient das sechste Verteil-Regelventil 18f dazu, verschiedene Betriebszustände der Warmwasserbereitungsanlage 1 zu realisieren.

Beim Wärmepumpen-Regelventil 21 kann es sich um ein Drei-Weg-Regelventil handeln, das stetig geregelt wird (Weg zwischen den Ventilanschlüssen A-AB 0-100% bzw. Weg zwischen den Ventilanschlüssen B-AB 0-100%). Es kann als Beimischventil eingesetzt werden. Dieses Ventil dient dazu, um der Wärmepumpe 8 stetig die benötigte Vorlauftemperatur zu liefern und um stetig die benötigte Temperaturspreizung (also die Differnz zwischen Vorlauf- und Rücklauftemperatur) zu halten.

Beim Trenn-Regelventil 22 kann es sich um ein Zwei-Weg-Motorventil oder um eine Zwei-Weg-Motorklappe mit Stellungsrückmeldung handeln, mit einer 2-Punkt-Regelung AUF/ZU (Weg zwischen den Ventilanschlüssen A-B 100% offen oder 100% geschlossen). Mit dem Trenn-Regelventil 22 kann die Heizungs-Verbindung 3 von der Wärmepumpe 8 getrennt werden und Fehlzirkulationen im System können vermieden werden.

Beim ersten Puffer-Regelventil 25 kann es sich um ein Drei-Weg-Regelventil handeln, das stetig geregelt wird (Weg zwischen den Ventilanschlüssen A-AB 0-100% bzw. Weg zwischen den Ventilanschlüssen B-AB 0-100%). Es kann als Beimischventil eingesetzt werden. Dieses Ventil dient dazu, um der Wärmepumpe 8 stetig die benötigte Vorlauftemperatur zu liefern und um stetig die benötigte Temperaturspreizung zu halten.

Beim ersten Erwärmungs-Regelventil 29 kann es sich um ein Drei-Weg-Regelventil handeln, das stetig geregelt wird (Weg zwischen den Ventilanschlüssen A-AB 0-100% bzw. Weg zwischen den Ventilanschlüssen B-AB 0-100%). Es kann als Beimischventil eingesetzt werden. Dieses Ventil dient dazu, um dem ersten Wärmetauscher 9 stetig die benötigte Vorlauftemperatur zu liefern und um stetig die benötigte Temperatursspreizung zu halten.

Beim zweiten Erwärmungs-Regelventil 32a kann es sich um ein Drei-Weg-Regelventil handeln, das stetig geregelt wird (Weg zwischen den Ventilanschlüssen A-AB 0-100% bzw. Weg zwischen den Ventilanschlüssen B-AB 0-100%). Es kann als Beimischventil eingesetzt werden. Dieses Ventil dient dazu, um dem zweiten Wärmetauscher 14a stetig die benötigte Vorlauftemperatur zu liefern und um stetig die benötigte Temperaturspreizung zu halten.

Wie im Ausführungsbeispiel gemäß Figur 3 umfasst die Warmwasserbereitungsanlage 1 auch eine Regelvorrichtung 35, die über strichpunktiert dargestellte Signalleitungen 40 mit den in der Warmwasserbereitungsanlage 1 vorhandenen steuerbaren oder regelbaren Pumpen (Zirkulations-Pumpe 39, erste Erwärmungs-Pumpe 28, erste Puffer-Pumpe 24, Wärmepumpen-Pumpe 20, zweite Erwärmungs-Pumpe 31a) und Ventilen (erstes Erwärmungs-Regelventil 29, erstes Puffer-Regelventil 25, Wärmepumpen-Regelventil 21, Trenn-Regelventil 22, Temperier-Regelventil 17, zweites Erwärmungs-Regelventil 32a, Verteil-Regelventile 18a, 18b, 18d, 18e, 18f) signalleitend verbunden ist, um diese anzusteuern oder zu regeln.

Außerdem ist die Regelvorrichtung 35 mit aus Gründen der Übersichtlichkeit hier nicht gezeigten Temperatursensoren signalleitend verbunden, um die von den Temperatursensoren gemessenen Temperaturen an die Regelvorrichtung 35 zu melden. So weisen der erste Wärmetauscher 9 und der zweite Wärmetauscher 14a jeweils vier Temperatursensoren auf, um die Temperaturen des jeweiligen Mediums (Erwärmungswasser E) an den Anschlüssen (Vorlauf und Rücklauf) des jeweiligen Hochtemperaturbereichs des ersten Wärmetauschers 9 und des zweiten Wärmetauschers 14a sowie die Temperaturen des jeweiligen Mediums am ersten Wärmetauschereingang 10 und am ersten Wärmetauscherausgang 11 des ersten Wärmetauschers 9 und am zweiten Wärmetauschereingang 15a und am zweiten Wärmetauscherausgang 16a des zweiten Wärmetauschers 14a an die Regelvorrichtung 35 melden zu können. Auch die Wärmepumpenvorrichtung 7 ist mit Temperatursensoren ausgestattet, so ist insbesondere ein Temperatursensor vorgesehen, um die Temperatur des über den Wärmepumpen-Verbindungs-Vorlauf 19a der Wärmepumpen-Verbindung 19 (welche die Wärmepumpenvorrichtung 7 mit der Heizungs-Verbindung 3 verbindet) in die Wärmepumpenvorrichtung 7 eingebrachten Mediums (Heizwasser H aus dem Heizwasserkreislauf 4) an die Regelvorrichtung 35 zu melden. Auf Basis der von den Temperatursensoren gemeldeten Temperaturwerte kann die Regelvorrichtung 35 entsprechende Regeleingriffe vornehmen.

Darüber hinaus ist die Regelvorrichtung 35 über eine Signalleitung 40 mit dem Wasserzähler 38 signalleitend verbunden. Der Wasserzähler 38 kann dadurch die momentanen Verbrauchswerte des über den Kaltwasseranschluss A in die Warmwasserbereitungsanlage 1 eingespeisten Trinkwassers T an die Regelvorrichtung 35 melden.

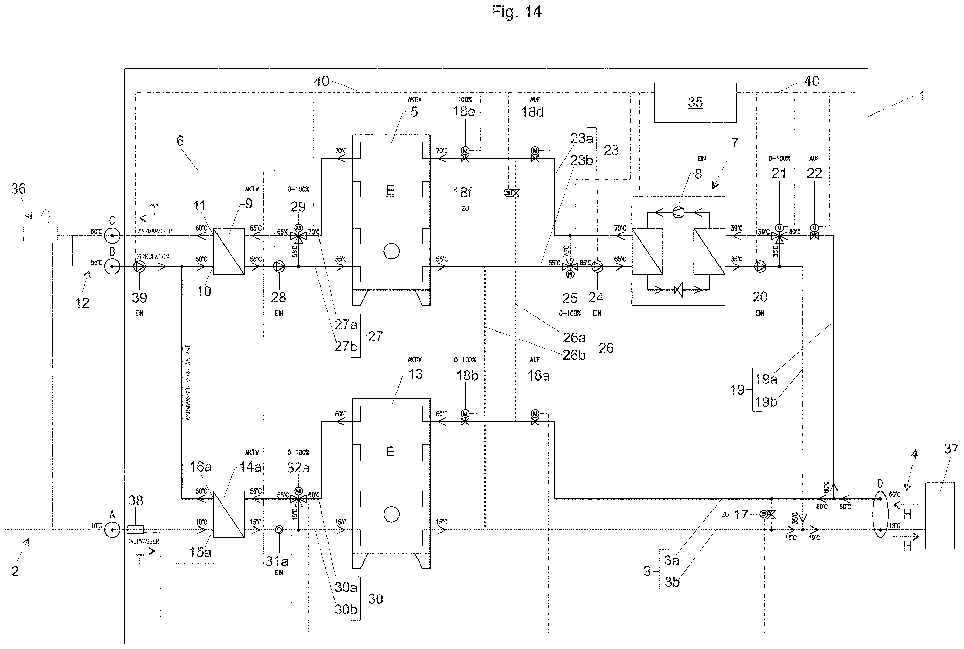

Die Figuren 14 bis 22 zeigen die Warmwasserbereitungsanlage 1 gemäß Figur 13 in verschiedenen Betriebszuständen. Die verschiedenen Betriebszustände können über die Regelvorrichtung 35 und die damit gesteuerten oder geregelten Ventilen (erstes Erwärmungs-Regelventil 29, erstes Puffer-Regelventil 25, Wärmepumpen-Regelventil 21, Trenn-Regelventil 22, Temperier-Regelventil 17, zweites Erwärmungs-Regelventil 32a, Verteil-Regelventile 18a, 18b, 18d, 18e, 18f) und Pumpen (Zirkulations-Pumpe 39, erste Erwärmungs-Pumpe 28, erste Puffer-Pumpe 24, Wärmepumpen-Pumpe 20, zweite Erwärmungs-Pumpe 31a) hervorgerufen werden.

In den Figuren 14 bis 22 sind aktivierte Verbindungen, d.h. Verbindungen, über die im jeweiligen Betriebszustand ein Medium fließt oder zirkuliert, durchgezogen dargestellt. Nicht aktivierte Verbindungen, d.h. Verbindungen, über die im jeweiligen Betriebszustand kein Medium fließt oder zirkuliert, sind in diesen Figuren strichliert dargestellt.

Die in den Figuren 14 bis 20 gezeigten Betriebszustände entsprechend den in den Figuren 4 bis 10 in Bezug auf die Warmwasserbereitungsanlage 1 der Figur 3 gezeigten Betriebszuständen.

So zeigt Figur 14 einen Regelbetrieb, in dem die Warmwasserbereitung und die Zirkulation aktiv sind und die Verteil-Verbindung 26 nicht aktiv ist. Somit wird in der ersten Puffervorrichtung 5 von der Wärmepumpenvorrichtung 7 erwärmtes Erwärmungswasser E bereitgestellt. In die zweite Puffervorrichtung 13 wird Heizwasser H aus dem Heizwasserkreislauf 4 eingespeist und in der zweiten Puffervorrichtung 13 als Erwärmungswasser E bereitgestellt.

Mit dem in Figur 14 gezeigten Regelbetrieb der Warmwasserbereitungsanlage 1 ist es möglich, Heizwasser H mit sehr niedrigen Temperaturen in den Heizkreislauf 4 zurückzuspeisen, indem durch die Regelvorrichtung 35 wenigstens ein Regelventil aus der Regelventilgruppe und/oder wenigstens eine Pumpe aus der Pumpengruppe derart geregelt wird bzw. werden, dass an den Heizwasserkreislauf 4 über den Heizungsrücklauf 3b der Heizungs-Verbindung 3 Heizwasser H mit einer Temperatur kleiner gleich etwa 35 °C zurückgespeist wird. Dabei kann vorgesehen sein, dass Heizwasser H mit einer Temperatur von etwa 15 °C bis etwa 35 °C, vorzugsweise etwa 19 °C, zurückgespeist wird.

Dies kann beispielsweise dadurch erreicht werden, dass die Regelvorrichtung 35 auf Basis der vom Temperatursensor am Rücklauf-Anschluss des Hochtemperaturbereichs des zweiten Wärmetauschers 14a (am Anschluss des zweiten Wärmetauschers 14a, der den zweiten Wärmetauscher 14a über den zweiten Erwärmungs-Verbindungs-Rücklauf 30b der zweiten Erwärmungs-Verbindung 30 mit der zweiten Puffervorrichtung 13 verbindet) gemeldeten Temperatur die im zweiten Erwärmungs-Verbindungs-Rücklauf 30b angeordnete zweite Erwärmungs-Pumpe 31a und das im zweiten Erwärmungs-Verbindungs-Vorlauf 30a der zweiten Erwärmungs-Verbindung 30 angeordnete zweite Erwärmungs-Regelventil 32a derart ansteuert oder regelt, dass sich an diesem Temperatursensor eine Temperatur im Bereich von etwa 10 °C bis etwa 20 °C einstellt (im gezeigten Beispiel beträgt die Temperatur an diesem Temperatursensor 15 °C). Es kann auch vorgesehen sein, dass zusätzlich die vom Temperatursensor am zweiten Wärmetauscher-Ausgang 16a gemeldete Temperatur berücksichtigt wird, wobei die zweite Erwärmungs-Pumpe 31a und das zweite Erwärmungs-Regelventil 32a derart angesteuert oder geregelt werden, dass sich an diesem Temperatursensor eine Temperatur im Bereich von etwa 45 °C bis etwa 55 °C einstellt (im gezeigten Beispiel beträgt die Temperatur an diesem Temperatursensor 50 °C). Es kann somit eine Regelung von zweiter Erwärmungs-Pumpe 31a und zweitem Erwärmungs-Regelventil 32a erfolgen, sodass die Temperatur am zweiten Wärmetauscher-Ausgang 16a einen vorgebbaren Wert von z.B. 50 °C beträgt und die Temperatur am hochtemperaturseitigen Rücklauf-Anschluss des zweiten Wärmetauschers 14a einen weiteren vorgebbaren Wert von z.B. 15 °C beträgt. Eine derartige Regelung kann zusätzlich unter der Vorgabe erfolgen, mit einem möglichst geringen Volumenstrom den vorgebbaren Wert für die Temperatur am zweiten Wärmetauscher-Ausgang 16a zu erzielen.

Außerdem regelt die Regelvorrichtung 35 das im Wärmepumpen-Verbindungs-Vorlauf 19a der Wärmepumpen-Verbindung 19 (welche die Wärmepumpenvorrichtung 7 mit der Heizungs-Verbindung 3 verbindet) angeordnete Wärmepumpen-Regelventil 21 auf Basis der vom Temperatursensor der Wärmepumpenvorrichtung 7 am Wärmepumpen-Verbindungs-Vorlauf 19a der Wärmepumpen-Verbindung 19 gemeldeten Temperatur derart, dass sich an diesem Temperatursensor eine Temperatur im Bereich von etwa 20 °C bis etwa 45 °C einstellt (im gezeigten Beispiel beträgt die Temperatur an diesem Temperatursensor 39 °C). Hierbei kann vorgesehen sein, dass die im Wärmepumpen-Verbindungs-Rücklauf 19b der Wärmepumpen-Verbindung 19 angeordnete Wärmepumpen-Pumpe 20 differenzdruckgeregelt ist und einen konstanten Volumenstrom über den Verdampfer der wenigstens einen Wärmepumpe 8 der Wärmepumpenvorrichtung 7 hält.

Dadurch ist es im gezeigten Beispiel möglich, dass auf 19 °C abgekühltes Heizwasser H über den Heizungsrücklauf 3b an den Heizwasserkreislauf 4 zurückgespeist wird.

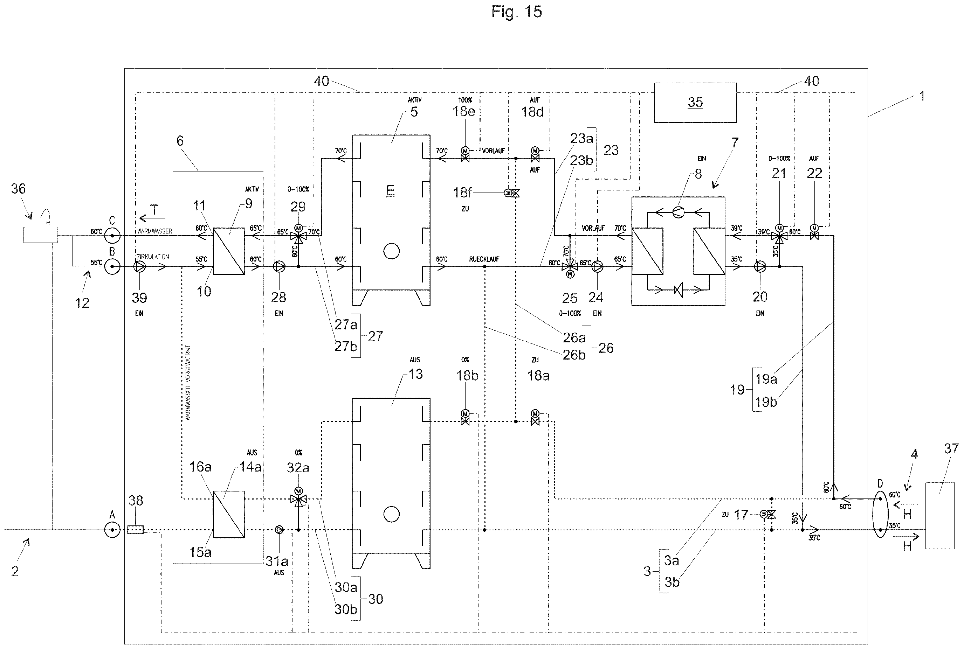

Figur 15 zeigt einen Betriebszustand, in dem nur die Zirkulation aktiv ist. Hierbei ist zusätzlich die Anbindung der zweiten Puffervorrichtung 13 an die Heizungs-Verbindung 3 nicht aktiv. Ebenso ist die zweite Erwärmungs-Verbindung 30 nicht aktiv, sodass auch der zweite Wärmetauscher 14a nicht aktiv ist. Auch die Verbindung zwischen dem zweiten Wärmetauscherausgang 16a und dem ersten Wärmetauschereingang 10 ist nicht aktiv.

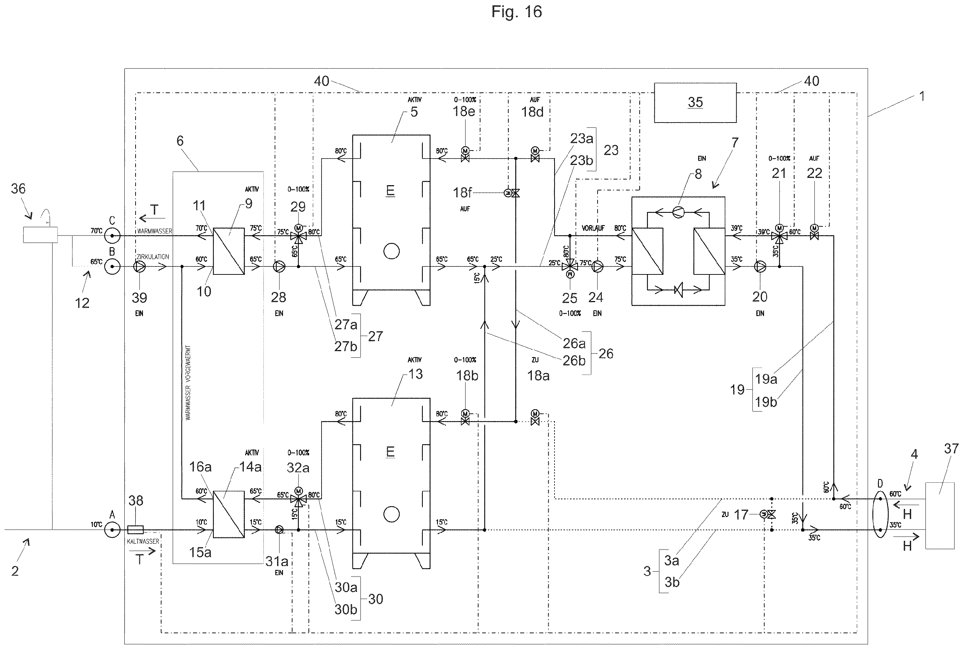

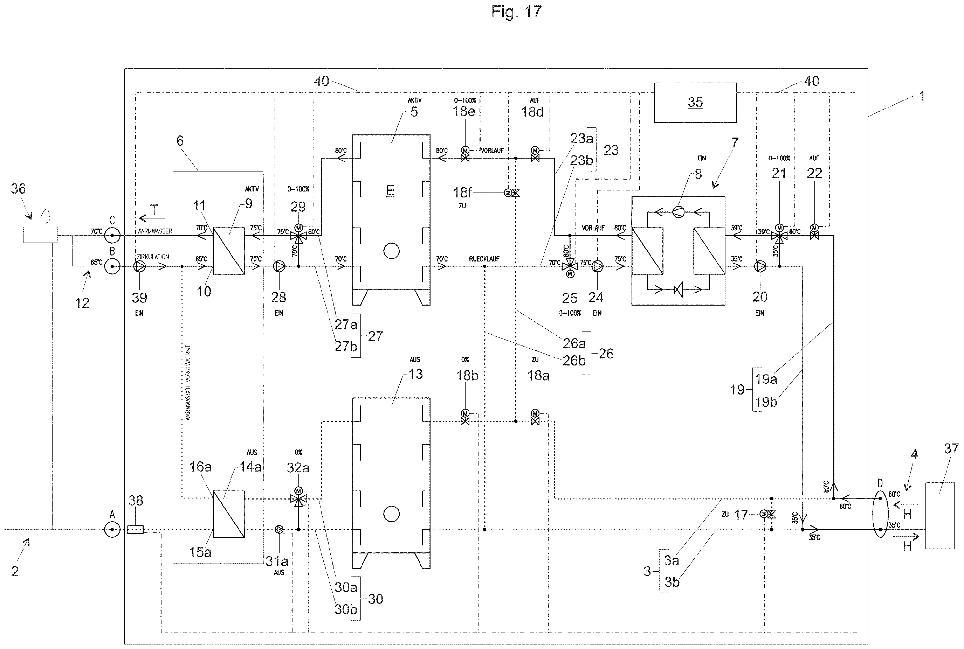

Die Figuren 16 und 17 zeigen Betriebszustände, die für eine thermische Desinfektion der Warmwasserbereitungsanlage 1 geeignet sind.

Im in der Figur 16 gezeigten Betriebszustand ist das im Heizungsvorlauf 3a angeordnete erste Verteil-Regelventil 18a geschlossen, wodurch der Abschnitt des Heizungsvorlaufs 3a zwischen der Verbindung mit dem Verteil-Verbindungs-Vorlauf 26a und dem Wärmepumpen-Verbindungs-Vorlauf 19a nicht aktiv ist. Im Heizungsrücklauf 3b ist der Abschnitt zwischen der Verbindung mit dem Verteil-Verbindungs-Rücklauf 26b und dem Wärmepumpen-Verbindungs-Rücklauf 19b nicht aktiv.

Im in der Figur 17 gezeigten Betriebszustand ist zusätzlich die Verteil-Verbindung 26 nicht aktiv, sodass die zweite Puffervorrichtung 13 auch nicht mit von der Wärmepumpenvorrichtung 7 bereitgestelltem Erwärmungswasser E beladen werden kann. Die zweite Puffervorrichtung 13 ist daher in diesem Betriebszustand nicht aktiv, ebenso wie der zweite Wärmetauscher 14a. Auch die Verbindung zwischen dem zweiten Wärmetauscherausgang 16a und dem ersten Wärmetauschereingang 10 ist nicht aktiv.

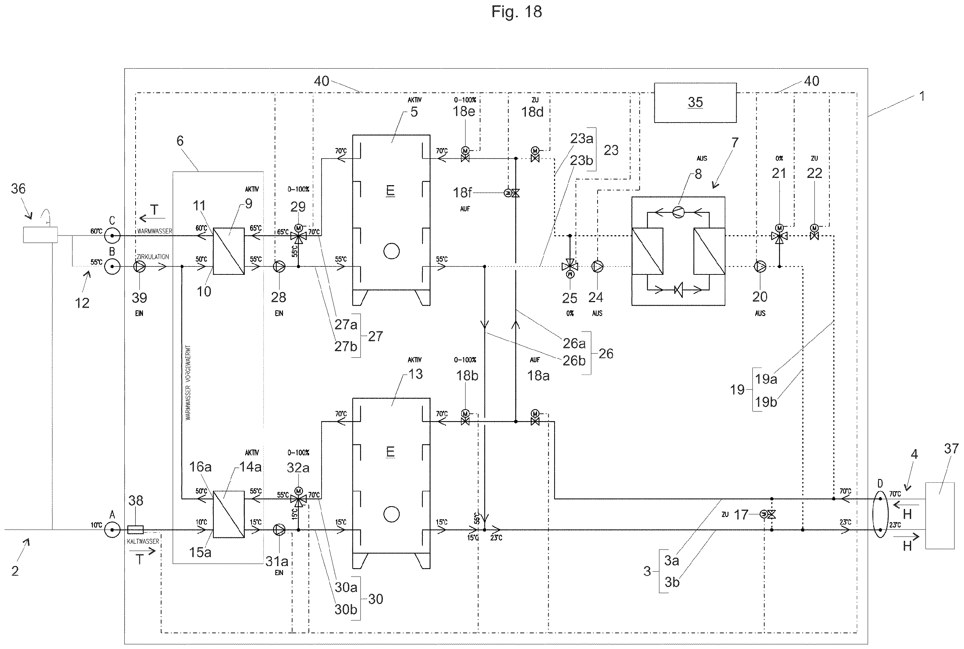

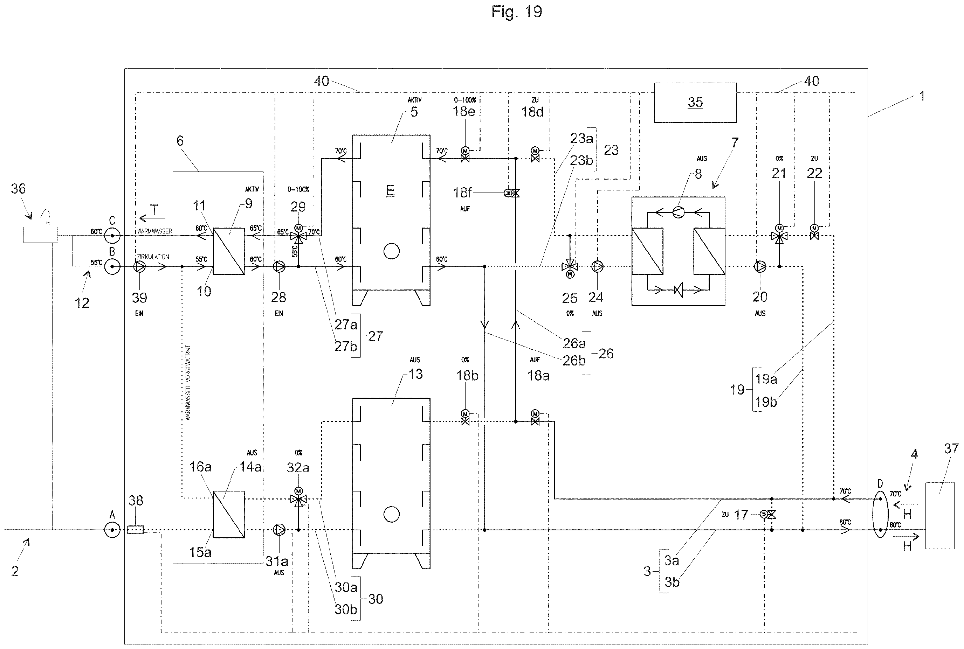

Die Figuren 18 und 19 zeigen Betriebszustände, bei denen die Wärmepumpenvorrichtung 7 nicht aktiv ist. Das Temperier-Regelventil 17, das Wärmepumpen-Regelventil 21, das Trenn-Regelventil 22, das erste Puffer-Regelventil 25 und das vierte Verteil-Regelventil 18d sind geschlossen. Die Wärmepumpen-Pumpe 20 und die erste Puffer-Pumpe 24 sind nicht aktiv. Im Beispiel der Figur 19 sind zusätzlich das zweite Verteil-Regelventil 18b und das zweite Erwärmungs-Regelventil 32a geschlossen und die zweite Erwärmungs-Pumpe 31a ist nicht aktiv, sodass hierbei auch die zweite Puffervorrichtung 13 und der zweite Wärmetauscher 14a nicht aktiv sind (in diesem Fall ist dann auch die Verbindung zwischen dem zweiten Wärmetauscherausgang 16a und dem ersten Wärmetauschereingang 10 nicht aktiv).

In beiden Beispielen wird über die Heizungs-Verbindung 3 Heizwasser H mit einer Temperatur von 70°C in die Warmwasserbereitungsanlage 1 eingespeist. Damit kann auch ohne den Einsatz der Wärmepumpenvorrichtung 7 warmes Trinkwasser T mit einer Temperatur von 60°C über den Warmwasseranschluss C bereitgestellt werden. Voraussetzung dafür ist eine entsprechend hohe Vorlauftemperatur im Heizwasserkreislauf 4, welche z.B. durch Solar- oder Fernwärmebetrieb oder durch Wärmeabbau einer Wärmepumpenhauptheizung im Sommerbetrieb bereitgestellt werden kann.

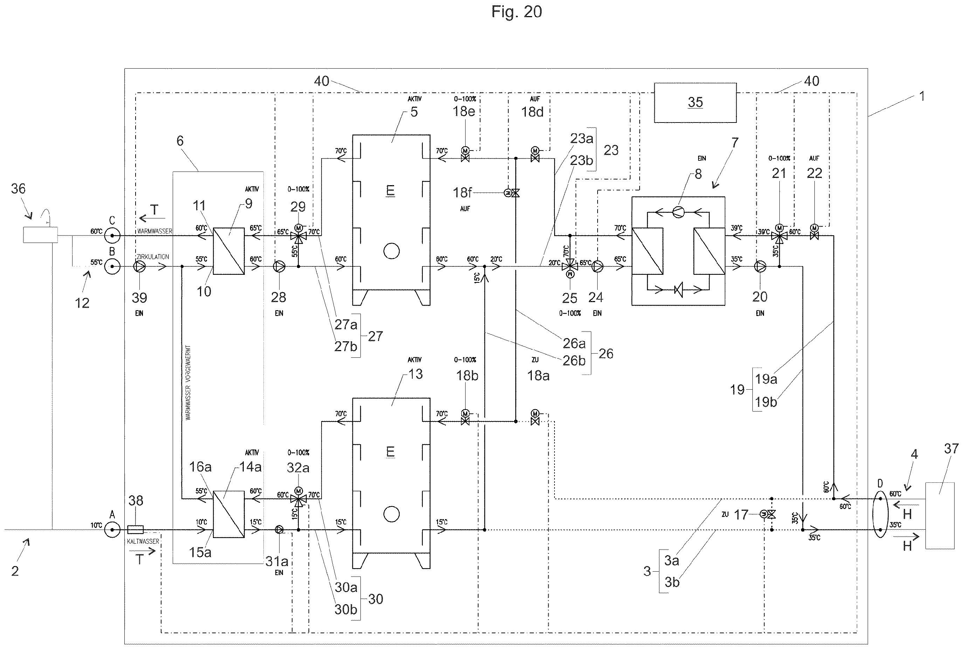

Figur 20 zeigt einen weiteren Betriebszustand, der insbesondere für eine geringe Warmwasserabnahme geeignet ist. Die hydraulische Verschaltung entspricht dem in Figur 16 gezeigten Betriebszustand mit dem Unterschied, dass von der Wärmepumpenvorrichtung 7 ausgangsseitig Erwärmungswasser E mit einer Temperatur von 70°C (anstatt 80°C wie in Figur 16) der ersten Puffervorrichtung 5 und der zweiten Puffervorrichtung 13 bereitgestellt wird. Dementsprechend geringer ist auch die Temperatur des über den Warmwasseranschluss C bereitgestellten erwärmten Trinkwassers T (60°C anstatt 70°C wie in Figur 16).

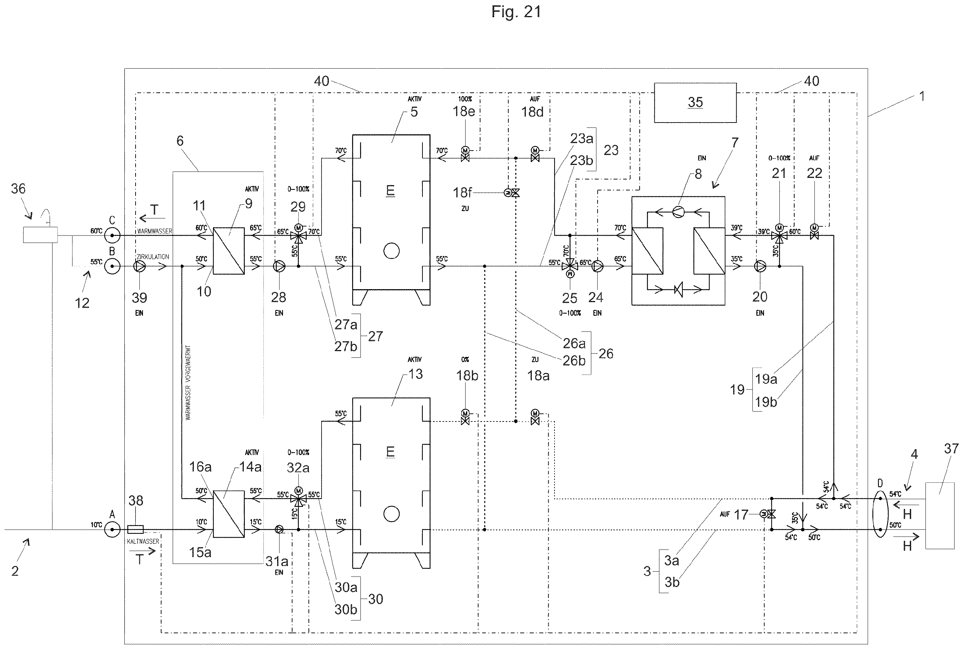

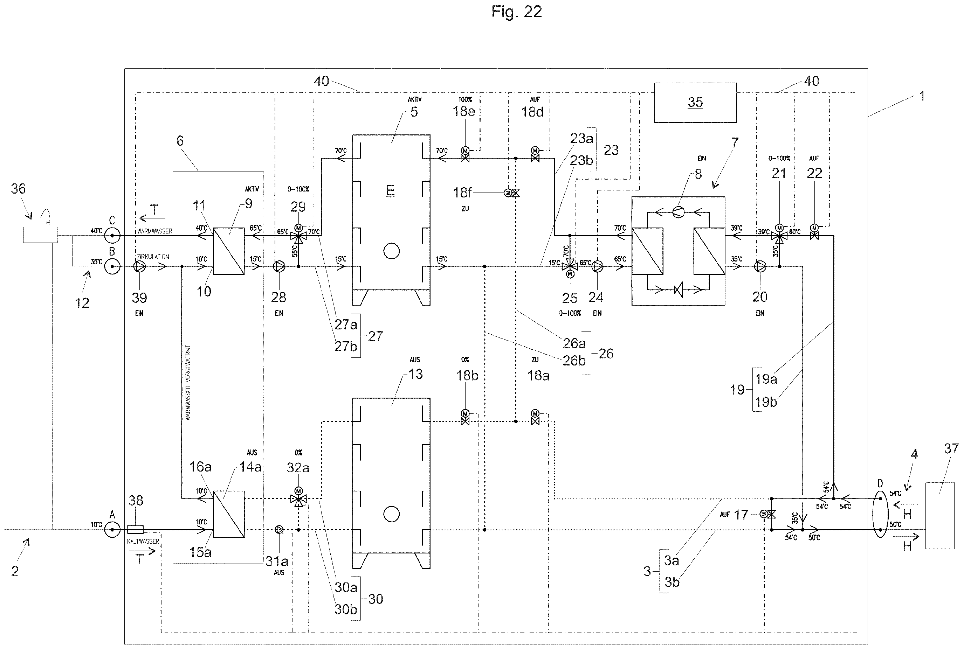

Die Figuren 21 und 22 zeigen zwei Betriebszustände, die ein sogenanntes Anfahren der Warmwasserbereitungsanlage 1 erleichtern. Die hydraulische Verschaltung des Betriebszustandes gemäß Figur 21 entspricht dem in Figur 14 (Regelbetrieb) gezeigten Betriebszustand mit dem Unterschied, dass das erste Verteil-Regelventil 18a und das zweite Verteil-Regelventil 18b geschlossen sind und das Temperier-Regelventil 17 geöffnet ist. Über das Temperier-Regelventil 17 kann warmes Heizwasser H aus dem Heizungsvorlauf 3a in den Heizungsrücklauf 3b zurückgespeist werden, um ein schnelleres Erhöhen der Temperatur des Heizwassers H im Heizwasserkreislauf 4 zu ermöglichen. Dieser Betriebszustand ist insbesondere dann günstig, wenn die Vorlauftemperatur im Heizungsvorlauf 3a einen vorgegebenen oder vorgebbaren Wert unterschreitet. Im gezeigten Beispiel ist die zweite Puffervorrichtung 13 mit Erwärmungswasser E mit einer Temperatur von 55°C beladen, sodass über den Warmwasseranschluss C Trinkwassers T mit einer Temperatur von 60°C bereitgestellt werden kann. Figur 22 zeigt ein Beispiel, in dem die zweite Puffervorrichtung 13 nicht mit warmem Erwärmungswasser E beladen ist und dementsprechend die zweite Erwärmungs-Pumpe 31a nicht aktiv ist und das zweite Erwärmungs-Regelventil 32a geschlossen ist. Da während dieses Betriebszustandes das Trinkwasser T im zweiten Wärmetauscher 14a nicht erwärmt wird, wird hierbei Trinkwasser T mit einer reduzierten Temperatur von in diesem Beispiel 40°C über den Warmwasseranschluss C bereitgestellt.

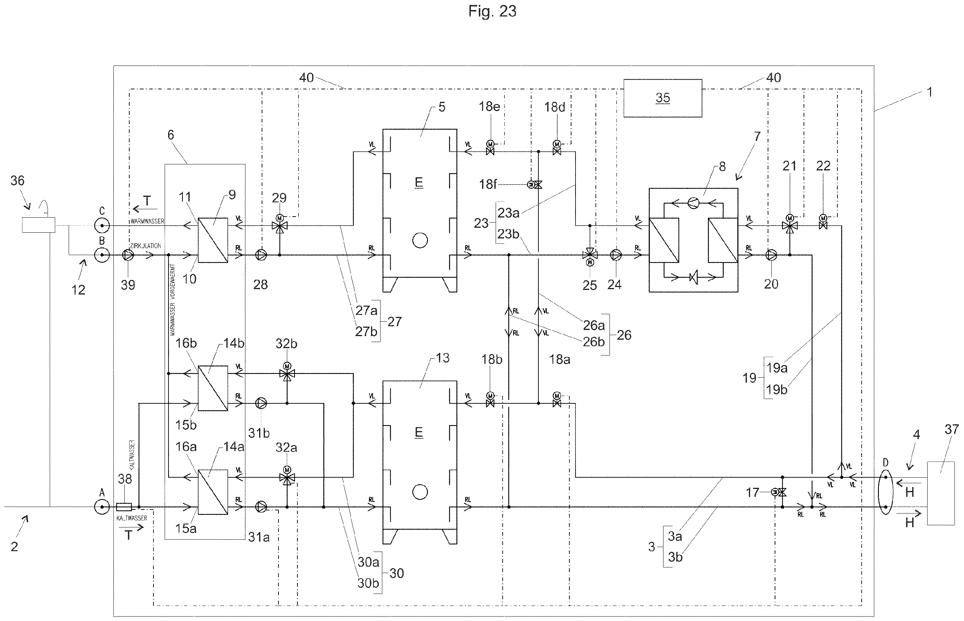

Figur 23 zeigt ein Ausführungsbeispiel einer Warmwasserbereitungsanlage 1, welche insbesondere für mittlere bis große Warmwasserleistungen geeignet ist. Ergänzend zu der in Figur 13 gezeigten Warmwasserbereitungsanlage 1 umfasst die hier gezeigte Warmwasserbereitungsanlage 1 einen weiteren zweiten Wärmetauscher 14b, der parallel zum zweiten Wärmetauscher 14a geschaltet ist.

Der weitere zweite Wärmetauscher 14b ist mit der zweiten Puffervorrichtung 13 verbunden, indem er hochtemperaturseitig an die zweite Erwärmungs-Verbindung 30 angebunden ist.

In der Anbindung an die Erwärmungs-Verbindung 30 sind eine weitere zweite Erwärmungs-Pumpe 31b und ein weiteres zweites Erwärmungs-Regelventil 32b angeordnet. Die weitere zweite Erwärmungs-Pumpe 31b ist zwischen dem weiteren zweiten Wärmetauscher 14b und dem weiteren zweiten Erwärmungs-Regelventil 32b angeordnet.

Niedertemperaturseitig weist der weitere zweite Wärmetauscher 14b einen weiteren zweiten Wärmetauschereingang 15b auf, in den kaltes Trinkwasser T eingespeist werden kann. Im weiteren zweiten Wärmetauscher 14b erwärmtes Trinkwasser T kann über einen weiteren zweiten Wärmetauscherausgang 16b, der mit dem ersten Wärmetauschereingang 10 des ersten Wärmetauschers 9 verbunden ist, in den ersten Wärmetauscher 9 zur weiteren Erwärmung eingespeist werden.

Insgesamt kann damit über den Kaltwasseranschluss A in die Warmwasserbereitungsanlage 1 eingespeistes kaltes Trinkwasser T parallel und somit gleichzeitig in den zweiten Wärmetauschern 14a, 14b vorerwärmt werden. Das in den zweiten Wärmetauschern 14a, 14b vorerwärmte Trinkwasser T wird zusammengeführt und an den ersten Wärmetauscher 9 zur weiteren Erwärmung weitergeleitet.

Je nach Ansteuerung oder Regelung der Pumpen und Ventile können selbstverständlich noch andere oder weitere Betriebszustände hervorgerufen werden. Um beispielsweise morgendliche Lastspitzen abzufangen, kann in den frühen Morgenstunden die Warmwasserbereitungsanlage 1 über die Wärmepumpenvorrichtung 7 in einen Hochtemperaturzustand versetzt werden. Dazu muss lediglich die zweite Puffervorrichtung 13 mit der Wärmepumpenvorrichtung 7 durchgeladen werden. Dies kann auch parallel zur Beladung der ersten Puffervorrichtung 5 geschehen.

Sollte die Wärmepumpenvorrichtung 7 oder dazugehörige Komponenten wie z.B. das Wärmepumpen-Regelventil 21, das Trenn-Regelventil 22, das erste Puffer-Regelventil 25 oder die erste Puffer-Pumpe 24 ausfallen, kann über die restlichen Regelventile in der Hydraulik der Warmwasserbereitungsanlage 1 ein Notbetrieb realisiert werden. Es kann dann die zweite Puffervorrichtung 13 sowie die erste Puffervorrichtung 5 mit dem Heizwasserkreislauf 4 bzw. mit einer Hauptheizungsanlage versorgt werden. Dadurch gelangt das Trinkwasser T zumindest temperiert und nicht völlig kalt zu den Verbrauchern. Die maximale Warmwassertemperatur ist dann abhängig von der Vorlauftemperatur und der Leistung des Heizwasserkreislaufs 4 bzw. der Hauptheizungsanlage.

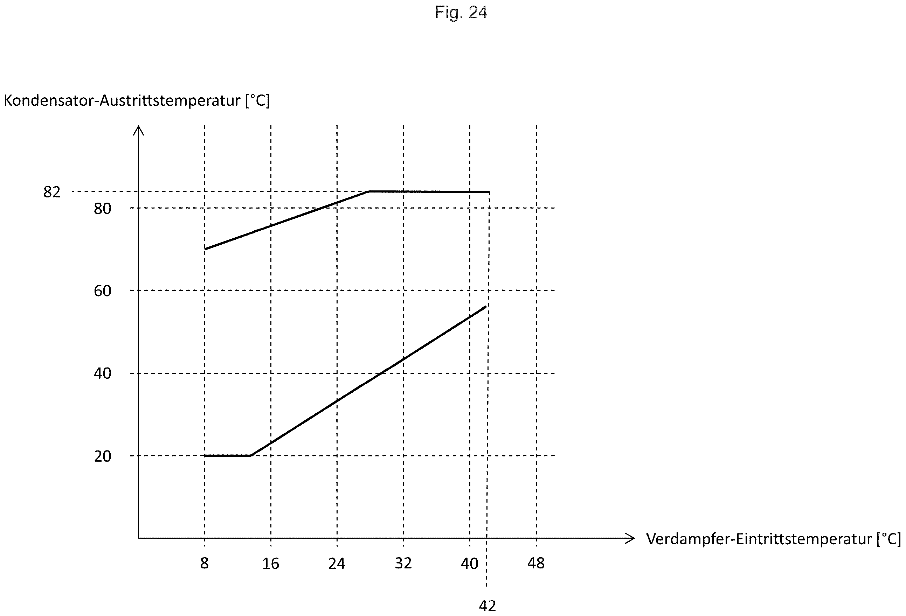

Figur 24 zeigt beispielhaft ein Temperaturdiagramm einer Hochtemperaturwärmepumpe. Die x-Achse stellt die Verdampfer-Eintrittstemperatur in °C dar und die y-Achse stellt den jeweils möglichen Bereich der Kondensator-Austrittstemperatur in °C dar (die untere Linie zeigt die minimale Kondensator-Austrittstemperatur in Abhängigkeit von der Verdampfer-Eintrittstemperatur und die obere Linie zeigt die maximale Kondensator-Austrittstemperatur in Abhängigkeit von der Verdampfer-Eintrittstemperatur). Wie dem Temperaturdiagramm entnommen werden kann, können mit der beispielhaften Hochtemperaturwärmepumpe Verdampfer-Eintrittstemperaturen größer 8°C auf über 70°C am Kondensator der Hochtemperaturwärmepumpe angehoben werden. Im Bereich einer Verdampfer-Eintrittstemperatur von 8°C bis 28°C erfolgt ausgehend von 70°C eine kontinuierliche Erhöhung der maximalen Kondensator-Austrittstemperatur auf etwa 82°C. Die Hochtemperaturwärmepumpe kann auch Verdampfer-Eintrittstemperaturen größer 28°C auf eine maximale Kondensator-Austrittstemperatur von etwa 82°C anheben. Der Arbeitsbereich der gezeigten Hochtemperaturwärmepumpe in Bezug auf die Verdampfer-Eintrittstemperatur erstreckt sich bis zu einer Temperatur von etwa 42°C.

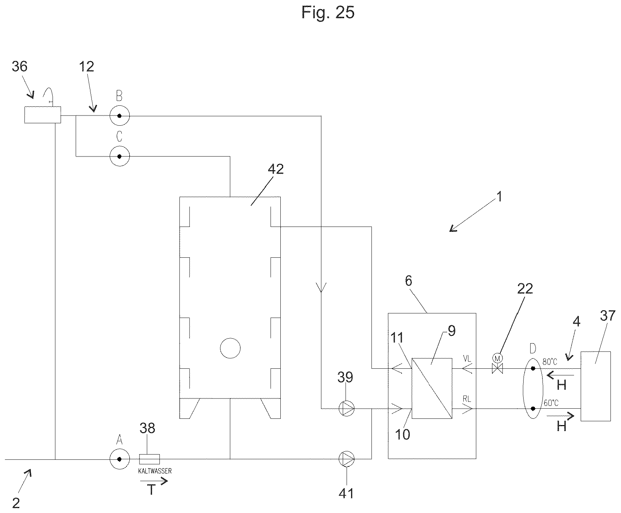

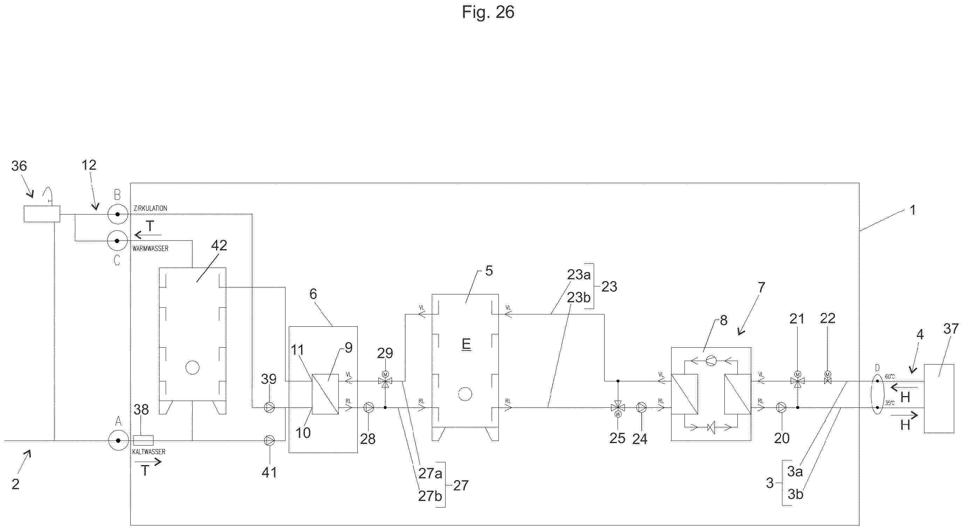

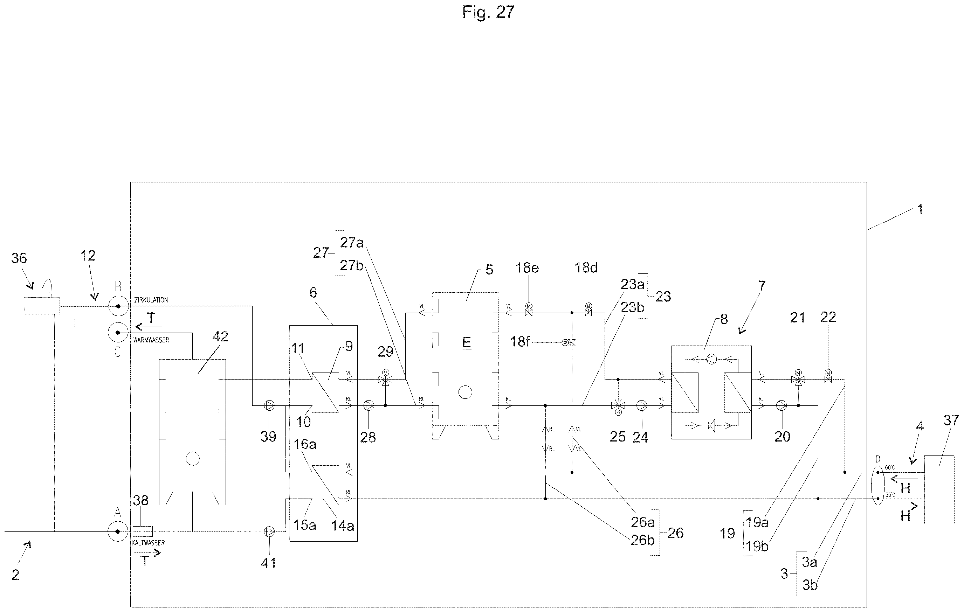

Figur 25 zeigt eine herkömmliche Warmwasserbereitungsanlage 1 und die Figuren 26 und 27 zeigen zwei Möglichkeiten, die herkömmliche Warmwasserbereitungsanlage 1 zu einer vorgeschlagenen Warmwasserbereitungsanlage 1 nachzurüsten.

Die in Figur 25 gezeigte, herkömmliche Warmwasserbereitungsanlage 1 ist über einen Kaltwasseranschluss A an einen Trinkwasserkreislauf 2 und über einen Heizkreislaufanschluss D an einen Heizwasserkreislauf 4 eines Fernwärmeversorgers 37 angeschlossen. Über einen Warmwasseranschluss C stellt die Warmwasserbereitungsanlage 1 erwärmtes Trinkwasser T aus dem Trinkwasserkreislauf 2 bereit. Über einen Zirkulationsanschluss B ist die Warmwasserbereitungsanlage 1 mit einem Zirkulationskreislauf 12 verbunden. Die Warmwasserbereitungsanlage 1 umfasst eine Erwärmungsvorrichtung 6 mit einem ersten Wärmetauscher 9, der hochtemperaturseitig mit dem Heizwasserkreislauf 4 verbunden ist. In der Verbindung mit dem Heizwasserkreislauf 4 ist ein Trenn-Regelventil 22 angeordnet. Niedertemperaturseitig weist der erste Wärmetauscher 9 einen ersten Wärmetauschereingang 10 und einen ersten Wärmetauscherausgang 11 auf. Über den ersten Wärmetauschereingang 10 wird mittels einer Kaltwasser-Pumpe 41 kaltes Trinkwasser T aus dem Trinkwasserkreislauf 2 in den ersten Wärmetauscher 9 eingebracht. Zusätzlich wird mittels einer Zirkulations-Pumpe 39 warmes Trinkwasser T aus dem Zirkulationskreislauf 12 über den ersten Wärmetauschereingang 10 in den ersten Wärmetauscher 9 eingebracht. Der erste Wärmetauscherausgang 11 ist mit einer dritten Puffervorrichtung 42 verbunden, in der vom ersten Wärmetauscher 9 erwärmtes Trinkwasser T gespeichert wird. Die dritte Puffervorrichtung 42 ist mit dem Warmwasseranschluss C verbunden und kann somit über den Warmwasseranschluss C warmes Trinkwasser T an Warmwasserverbraucher 36 bereitstellen.

Figur 26 zeigt eine Ausführungsvariante, wie die in Figur 25 gezeigte, herkömmliche Warmwasserbereitungsanlage 1 zu einer vorgeschlagenen Warmwasserbereitungsanlage 1 nachgerüstet werden kann. Im Unterschied zur Warmwasserbereitungsanlage 1 gemäß Figur 25 ist hierbei die Erwärmungsvorrichtung 6 nicht über den Heizkreislaufanschluss D direkt mit dem Heizwasserkreislauf 4 verbunden. Stattdessen verbindet hier eine Heizungs-Verbindung 3 den Heizwasserkreislauf 4 mit einer Wärmepumpenvorrichtung 7 umfassend eine Wärmepumpe 8, die als Hochtemperaturwärmepumpe ausgebildet ist. Die Wärmepumpenvorrichtung 7 ist über eine erste Puffer-Verbindung 23 mit einer ersten Puffervorrichtung 5 verbunden, in der von der Wärmepumpenvorrichtung 7 erwärmtes Erwärmungswasser E gepuffert wird. Der erste Wärmetauscher 9 ist nun hochtemperaturseitig über eine erste Erwärmungs-Verbindung 27 mit der ersten Puffervorrichtung 5 verbunden.

Die hydraulische Verschaltung der in Figur 26 gezeigten Warmwasserbereitungsanlage 1 entspricht grundsätzlich der in Figur 22 gezeigten hydraulischen Verschaltung mit dem Unterschied, dass hierbei kein geöffnetes Temperier-Regelventil 17 zwischen Heizungsvorlauf 3a und Heizungsrücklauf 3b angeordnet ist und dass das von der Erwärmungsvorrichtung 6 erwärmte Trinkwasser T nicht direkt, sondern über eine dritte Puffervorrichtung 42 bereitgestellt wird.

Figur 27 zeigt eine weitere Ausführungsvariante, wie die in Figur 25 gezeigte, herkömmliche Warmwasserbereitungsanlage 1 zu einer vorgeschlagenen Warmwasserbereitungsanlage 1 nachgerüstet werden kann. Im Unterschied zur Warmwasserbereitungsanlage 1 gemäß Figur 26 umfasst hierbei die Erwärmungsvorrichtung 6 zusätzlich zum ersten Wärmetauscher 9 noch einen zweiten Wärmetauscher 14a, der hochtemperaturseitig an die Heizungs-Verbindung 3 angebunden ist. Der zweite Wärmetauscher 14a umfasst einen zweiten Wärmetauschereingang 15a und einen zweiten Wärmetauscherausgang 16a. Über den zweiten Wärmetauschereingang 15a wird kaltes Trinkwasser T aus dem Trinkwasserkreislauf 2 in den zweiten Wärmetauscher 14a eingebracht und darin erwärmt. Der zweite Wärmetauscherausgang 16a ist mit dem ersten Wärmetauschereingang 10 des ersten Wärmetauschers 9 verbunden, sodass im zweiten Wärmetauscher 14a vorerwärmtes Trinkwasser T in den ersten Wärmetauscher 9 zur weiteren Erwärmung eingespeist werden kann. Zur bedarfsgemäßen Verteilung von Heizwasser H und Erwärmungswasser E ist eine Verteil-Verbindung 26 vorgesehen, welche die erste Puffer-Verbindung 23 mit der Heizungs-Verbindung 3 verbindet, und im ersten Puffer-Verbindungs-Vorlauf 23a und im Verteil-Verbindungs-Vorlauf 26a sind insgesamt drei Verteil-Regelventile 18d, 18e und 18f angeordnet.

Die hydraulische Verschaltung der in Figur 27 gezeigten Warmwasserbereitungsanlage 1 entspricht grundsätzlich der in Figur 3 gezeigten hydraulischen Verschaltung mit dem Unterschied, dass hierbei das von der Erwärmungsvorrichtung 6 erwärmte Trinkwasser T nicht direkt, sondern über eine dritte Puffervorrichtung 42 bereitgestellt wird.

### Bezugszeichenliste:

- 1: Warmwasserbereitungsanlage
- 2: Trinkwasserkreislauf
- 3: Heizungs-Verbindung
- 3a: Heizungsvorlauf
- 3b: Heizungsrücklauf
- 4: Heizwasserkreislauf
- 5: erste Puffervorrichtung
- 6: Erwärmungsvorrichtung
- 7: Wärmepumpenvorrichtung
- 8: Wärmepumpe
- 9: erster Wärmetauscher
- 10: erster Wärmetauschereingang
- 11: erster Wärmetauscherausgang
- 12: Zirkulationskreislauf
- 13: zweite Puffervorrichtung
- 14a, 14b: zweiter Wärmetauscher
- 15a, 15b: zweiter Wärmetauschereingang
- 16a, 16b: zweiter Wärmetauscherausgang
- 17: Temperier-Regelventil
- 18a: erstes Verteil-Regelventil
- 18b: zweites Verteil-Regelventil
- 18c: drittes Verteil-Regelventil
- 18d: viertes Verteil-Regelventil
- 18e: fünftes Verteil-Regelventil
- 18f: sechstes Verteil-Regelventil
- 18g: siebentes Verteil-Regelventil
- 18h: achtes Verteil-Regelventil
- 19: Wärmepumpen-Verbindung
- 19a: Wärmepumpen-Verbindungs-Vorlauf
- 19b: Wärmepumpen-Verbindungs-Rücklauf
- 20: Wärmepumpen-Pumpe
- 21: Wärmepumpen-Regelventil
- 22: Trenn-Regelventil
- 23: erste Puffer-Verbindung
- 23a: erster Puffer-Verbindungs-Vorlauf
- 23b: erster Puffer-Verbindungs-Rücklauf
- 24: erste Puffer-Pumpe
- 25: erstes Puffer-Regelventil
- 26: Verteil-Verbindung
- 26a: Verteil-Verbindungs-Vorlauf
- 26b: Verteil-Verbindungs-Rücklauf
- 27: erste Erwärmungs-Verbindung
- 27a: erster Erwärmungs-Verbindungs-Vorlauf
- 27b: erster Erwärmungs-Verbindungs-Rücklauf
- 28: erste Erwärmungs-Pumpe
- 29: erstes Erwärmungs-Regelventil
- 30: zweite Erwärmungs-Verbindung
- 30a: zweiter Erwärmungs-Verbindungs-Vorlauf
- 30b: zweiter Erwärmungs-Verbindungs-Rücklauf
- 31a, 31b: zweite Erwärmungs-Pumpe
- 32a, 32b: zweites Erwärmungs-Regelventil
- 33a, 33b: dritte Erwärmungs-Pumpe
- 34a, 34b: Rückschlagventil
- 35: Regelvorrichtung
- 36: Warmwasserverbraucher
- 37: Fernwärmeversorger
- 38: Wasserzähler
- 39: Zirkulations-Pumpe
- 40: Signalleitung
- 41: Kaltwasser-Pumpe
- 42: dritte Puffervorrichtung
- T: Trinkwasser
- E: Erwärmungswasser
- H: Heizwasser
- VL: Vorlauf
- RL: Rücklauf
- A: Kaltwasseranschluss
- B: Zirkulationsanschluss
- C: Warmwasseranschluss
- D: Heizkreislaufanschluss

## Patentansprüche

1. Warmwasserbereitungsanlage (1) zur Erwärmung von Trinkwasser (T) eines mit der Warmwasserbereitungsanlage (1) verbindbaren oder verbundenen Trinkwasserkreislaufs (2), wobei die Warmwasserbereitungsanlage (1) über eine Heizungs-Verbindung (3) mit einem Heizwasserkreislauf (4) verbindbar ist, mit einer ersten Puffervorrichtung (5) zum Puffern von Erwärmungswasser (E) und mit einer mit dem Trinkwasserkreislauf (2) verbindbaren Erwärmungsvorrichtung (6), wobei die Erwärmungsvorrichtung (6) - zum Erwärmen des Trinkwassers (T) durch die Wärme des Erwärmungswassers (E) - mit der ersten Puffervorrichtung (5) verbunden ist, wobei die Warmwasserbereitungsanlage (1) eine mit der Heizungs-Verbindung (3) verbundene Wärmepumpenvorrichtung (7) umfassend wenigstens eine Wärmepumpe (8) umfasst, wobei die Wärmepumpenvorrichtung (7) mit der ersten Puffervorrichtung (5) verbunden ist, **dadurch gekennzeichnet, dass** die Erwärmungsvorrichtung (6) zusätzlich mit der Heizungs-Verbindung (3) verbunden ist, wobei die Erwärmungsvorrichtung (6) zwei Wärmetauscher umfasst, die einerseits die Temperatur eines Heizwassers (H) des Heizwasserkreislaufs (4) und andererseits die Temperatur des Erwärmungswassers (E) nutzen, um das die Erwärmungsvorrichtung (6) durchlaufende Trinkwasser (T) zu erwärmen.

2. Warmwasserbereitungsanlage nach Anspruch 1, **dadurch gekennzeichnet, dass** die wenigstens eine Wärmepumpe (8) als Hochtemperaturwärmepumpe (8) ausgebildet ist.

3. Warmwasserbereitungsanlage nach Anspruch 1 oder 2, **dadurch gekennzeichnet, dass** die wenigstens eine Wärmepumpe (8) derart ausgebildet ist, eine Eingangstemperatur von größer oder gleich 20°C, vorzugsweise 39°C, auf eine Ausgangstemperatur von größer oder gleich 70°C, vorzugsweise 80°C, zu heben.

4. Warmwasserbereitungsanlage nach einem der Ansprüche 1 bis 3, **dadurch gekennzeichnet, dass** einer der beiden Wärmetauscher (9, 14a, 14b, 17a, 17b) hochtemperaturseitig mit der ersten Puffervorrichtung (5) verbunden ist und niedertemperaturseitig mit dem Trinkwasserkreislauf (2) verbindbar oder verbunden ist.

5. Warmwasserbereitungsanlage nach einem der Ansprüche 1 bis 4, **dadurch gekennzeichnet, dass** die Erwärmungsvorrichtung (6) einen ersten Wärmetauscher (9) umfasst, wobei der erste Wärmetauscher (9) hochtemperaturseitig mit der ersten Puffervorrichtung (5) verbunden ist, wobei der erste Wärmetauscher (9) niedertemperaturseitig einen ersten Wärmetauschereingang (10) und einen ersten Wärmetauscherausgang (11) aufweist, wobei über den ersten Wärmetauschereingang (10) zu erwärmendes Trinkwasser (T) aus dem Trinkwasserkreislauf (2) in den ersten Wärmetauscher (9) einbringbar ist, wobei über den ersten Wärmetauscherausgang (11) vom ersten Wärmetauscher (9) erwärmtes Trinkwasser (T) in den Trinkwasserkreislauf (2) einspeisbar ist, wobei vorzugsweise der erste Wärmetauschereingang (10) mit einem Zirkulationskreislauf (12) verbindbar oder verbunden ist.

6. Warmwasserbereitungsanlage nach Anspruch 5, **dadurch gekennzeichnet, dass** die Erwärmungsvorrichtung (6) wenigstens einen zweiten Wärmetauscher (14a, 14b) umfasst, wobei der wenigstens eine zweite Wärmetauscher (14a,14b) niedertemperaturseitig einen zweiten Wärmetauschereingang (15a, 15b) und einen zweiten Wärmetauscherausgang (16a, 16b) aufweist, wobei der wenigstens eine zweite Wärmetauschereingang (15a, 15b) mit dem Trinkwasserkreislauf (2) verbindbar oder verbunden ist, wobei über den zweiten Wärmetauschereingang (15a,15b) kaltes Trinkwasser (T) aus dem Trinkwasserkreislauf (2) in den wenigstens einen zweiten Wärmetauscher (14a,14b) einbringbar ist, wobei der zweite Wärmetauscherausgang (16a,16b) mit dem ersten Wärmetauschereingang (10) verbunden ist, wobei über den ersten Wärmetauscherausgang (11) vom ersten Wärmetauscher (9) und vom wenigstens einen zweiten Wärmetauscher (14a,14b) erwärmtes Trinkwasser (T) in den Trinkwasserkreislauf (2) einspeisbar ist.

7. Warmwasserbereitungsanlage nach einem der Ansprüche 1 bis 6, **dadurch gekennzeichnet, dass** die Warmwasserbereitungsanlage (1) eine zweite Puffervorrichtung (13) zum Puffern von Erwärmungswasser (E) umfasst, wobei die zweite Puffervorrichtung (13) einerseits mit der Erwärmungsvorrichtung (6) verbunden ist und andererseits mit der Heizungs-Verbindung (3) verbunden ist.

8. Warmwasserbereitungsanlage nach Anspruch 6 und 7, **dadurch gekennzeichnet, dass** der wenigstens eine zweite Wärmetauscher (14a,14b) hochtemperaturseitig mit der zweiten Puffervorrichtung (13) verbunden ist.

9. Warmwasserbereitungsanlage nach Anspruch 6, **dadurch gekennzeichnet, dass** der wenigstens eine zweite Wärmetauscher (14a,14b) hochtemperaturseitig mit der Heizungs-Verbindung (3) verbunden ist.

10. Warmwasserbereitungsanlage nach einem der Ansprüche 1 bis 9, **dadurch gekennzeichnet, dass** die Heizungs-Verbindung (3) einen Heizungsvorlauf (3a) und einen Heizungsrücklauf (3b) umfasst, wobei vorzugsweise der Heizungsvorlauf (3a) über ein Temperier-Regelventil (17) und/oder über ein Rückschlagventil (34a) mit dem Heizungsrücklauf (3b) verbunden ist, wobei vorzugsweise in der Heizungs-Verbindung (3), vorzugsweise im Heizungsvorlauf (3a), wenigstens ein Verteil-Regelventil (18a, 18b, 18c, 18g, 18h) angeordnet ist.

11. Warmwasserbereitungsanlage nach Anspruch 10, **dadurch gekennzeichnet, dass** die Wärmepumpenvorrichtung (7) über eine Wärmepumpen-Verbindung (19) mit der Heizungs-Verbindung (3) verbunden ist, wobei in der Wärmepumpen-Verbindung (19) eine Wärmepumpen-Pumpe (20) und ein Wärmepumpen-Regelventil (21) angeordnet sind, wobei vorzugsweise in der Wärmepumpen-Verbindung (19) zusätzlich ein Trenn-Regelventil (22) angeordnet ist.

12. Warmwasserbereitungsanlage nach Anspruch 10 oder 11, **dadurch gekennzeichnet, dass** die Wärmepumpenvorrichtung (7) über eine erste Puffer-Verbindung (23) mit der ersten Puffervorrichtung (5) verbunden ist, wobei in der ersten Puffer-Verbindung (23) eine erste Puffer-Pumpe (24) und ein erstes Puffer-Regelventil (25) angeordnet sind, wobei vorzugsweise in der ersten Puffer-Verbindung (23) zusätzlich wenigstens ein Verteil-Regelventil (18d,18e) angeordnet ist, wobei vorzugsweise die erste Puffer-Verbindung (23) über eine Verteil-Verbindung (26) mit der Heizungs-Verbindung (3) verbunden ist, wobei in der Verteil-Verbindung (26) wenigstens ein Verteil-Regelventil (18f) angeordnet ist.

13. Warmwasserbereitungsanlage nach einem der Ansprüche 10 bis 12, **dadurch gekennzeichnet, dass** die erste Puffervorrichtung (5) über eine erste Erwärmungs-Verbindung (27) mit der Erwärmungsvorrichtung (6) verbunden ist, wobei in der ersten Erwärmungs-Verbindung (27) eine erste Erwärmungs-Pumpe (28) und ein erstes Erwärmungs-Regelventil (29) angeordnet sind.

14. Warmwasserbereitungsanlage nach Anspruch 5 und 13, **dadurch gekennzeichnet, dass** der erste Wärmetauscher (9) hochtemperaturseitig über die erste Erwärmungs-Verbindung (27) mit der ersten Puffervorrichtung (5) verbunden ist, wobei vorzugsweise der erste Wärmetauschereingang (10) mit einem Zirkulationskreislauf (12) umfassend eine Zirkulations-Pumpe (39) verbindbar oder verbunden ist.

15. Warmwasserbereitungsanlage nach Anspruch 8 und 14, **dadurch gekennzeichnet, dass** der wenigstens eine zweite Wärmetauscher (14a, 14b) hochtemperaturseitig über eine zweite Erwärmungs-Verbindung (30) mit der zweiten Puffervorrichtung (13) verbunden ist, wobei in der zweiten Erwärmungs-Verbindung (30) wenigstens eine zweite Erwärmungs-Pumpe (31a,31b) und wenigstens ein zweites Erwärmungs-Regelventil (32a,32b) angeordnet sind.

16. Warmwasserbereitungsanlage nach Anspruch 9 und 14, **dadurch gekennzeichnet, dass** der wenigstens eine zweite Wärmetauscher (14a,14b) hochtemperaturseitig mit der Heizungs-Verbindung (3) verbunden ist, wobei in der Heizungs-Verbindung (3) wenigstens eine dritte Erwärmungs-Pumpe (33a,33b) und wenigstens ein Verteil-Regelventil (18b, 18c, 18g, 18h) angeordnet sind.

17. Warmwasserbereitungsanlage nach einem der Ansprüche 10 bis 16, **dadurch gekennzeichnet, dass** die Warmwasserbereitungsanlage (1) eine Regelvorrichtung (35) umfasst, wobei die Regelvorrichtung (35) mit wenigstens einem Regelventil aus einer Regelventil-Gruppe umfassend eines oder mehrere der folgenden Regelventile: Temperier-Regelventil (17), wenigstens ein Verteil-Regelventil (18a, 18b, 18c, 18d, 18e, 18f, 18g, 18h), Wärmepumpen-Regelventil (21),Trenn-Regelventil (22), erstes Puffer-Regelventil (25), erstes Erwärmungs-Regelventil (29), wenigstens ein zweites Erwärmungs-Regelventil (32a,32b) signalleitend verbunden ist, und mit wenigstens einer Pumpe aus einer Pumpengruppe umfassend eine oder mehrere der folgenden Pumpen: Wärmepumpen-Pumpe (20), erste Puffer-Pumpe (24), erste Erwärmungs-Pumpe (28), Zirkulations-Pumpe (39), wenigstens eine zweite Erwärmungs-Pumpe (31a,31b), wenigstens eine dritte Erwärmungs-Pumpe (33a,33b) signalleitend verbunden ist, wobei durch die Regelvorrichtung (35) wenigstens ein Regelventil aus der Regelventilgruppe und/oder wenigstens eine Pumpe aus der Pumpengruppe ansteuerbar ist.

18. Verfahren zum Betreiben einer mit einem Trinkwasserkreislauf (2) und mit einem Heizwasserkreislauf (4) verbundenen Warmwasserbereitungsanlage (1) nach einem der Ansprüche 1 bis 17, **dadurch gekennzeichnet, dass** der Wärmepumpenvorrichtung (7) aus dem Heizwasserkreislauf (4) Heizwasser (H) mit einer Temperatur von mindestens 20 °C, vorzugsweise 28 °C bis 65 °C, besonders bevorzugt 60 °C, zugeführt wird.

19. Verfahren zum Betreiben einer mit einem Trinkwasserkreislauf (2) und mit einem Heizwasserkreislauf (4) verbundenen Warmwasserbereitungsanlage (1) nach Anspruch 17, **dadurch gekennzeichnet, dass** der Wärmepumpenvorrichtung (7) aus dem Heizwasserkreislauf (4) über den Heizungsvorlauf (3a) der Heizungs-Verbindung (3) Heizwasser (H) mit einer Temperatur von mindestens 20 °C, vorzugsweise 28 °C bis 65 °C, besonders bevorzugt 60 °C, zugeführt wird, wobei durch die Regelvorrichtung (35) wenigstens ein Regelventil aus der Regelventilgruppe und/oder wenigstens eine Pumpe aus der Pumpengruppe derart geregelt wird bzw. werden, dass an den Heizwasserkreislauf (4) über den Heizungsrücklauf (3b) der Heizungs-Verbindung (3) Heizwasser (H) mit einer Temperatur kleiner gleich 35 °C zurückgespeist wird, wobei vorzugsweise durch die Regelvorrichtung (35) wenigstens ein Regelventil aus der Regelventilgruppe und/oder wenigstens eine Pumpe aus der Pumpengruppe derart geregelt wird bzw. werden, dass an den Heizwasserkreislauf (4) über den Heizungsrücklauf (3b) der Heizungs-Verbindung (3) Heizwasser (H) mit einer Temperatur von 15 °C bis 35 °C, vorzugsweise 19 °C, zurückgespeist wird.

## Claims

1. Hot water heating system (1) for heating drinking water (T) of a drinking water circuit (2) connectable or connected to the hot water heating system (1), wherein the hot water heating system (1) is connectable to a hot water circuit (4) via a heating connection (3), with a first buffer device (5) for buffering heating water (E) and with a heating device (6) connectable to the drinking water circuit (2), wherein the heating device (6) - for heating the drinking water (T) through the heat of the heating water (E) - is connected to the first buffer device (5), wherein the hot water heating system (1) comprises a heat pump device (7) connected to the heating connection (3) and comprising at least one heat pump (8), wherein the heat pump device (7) is connected to the first buffer device (5), **characterized in that** the heating device (6) is additionally connected to the heating connection (3), wherein the heating device (6) comprises two heat exchangers, which use the temperature of a hot water (H) of the hot water circuit (4) on the one hand and the temperature of the heating water (E) on the other hand in order to heat the drinking water (T) passing through the heating device (6).

2. Hot water heating system according to claim 1, **characterized in that** the at least one heat pump (8) is formed as a high-temperature heat pump (8).

3. Hot water heating system according to claim 1 or 2, **characterized in that** the at least one heat pump (8) is formed so as to raise an inlet temperature higher than or equal to 20°C, preferably 39°C, to an outlet temperature higher than or equal to 70°C, preferably 80°C.

4. Hot water heating system according to one of claims 1 to 3, **characterized in that** one of the two heat exchangers (9, 14a, 14b, 17a, 17b) is connected to the first buffer device (5) on the high-temperature side and is connectable or connected to the drinking water circuit (2) on the low-temperature side.

5. Hot water heating system according to one of claims 1 to 4, **characterized in that** the heating device (6) comprises a first heat exchanger (9), wherein the first heat exchanger (9) is connected to the first buffer device (5) on the high-temperature side, wherein the first heat exchanger (9) has a first heat exchanger inlet (10) and a first heat exchanger outlet (11) on the low-temperature side, wherein drinking water (T) to be heated can be introduced into the first heat exchanger (9) from the drinking water circuit (2) via the first heat exchanger inlet (10), wherein drinking water (T) heated by the first heat exchanger (9) can be fed into the drinking water circuit (2) via the first heat exchanger outlet (11), wherein the first heat exchanger inlet (10) is preferably connectable or connected to a circulation circuit (12).

6. Hot water heating system according to claim 5, **characterized in that** the heating device (6) comprises at least one second heat exchanger (14a, 14b), wherein the at least one second heat exchanger (14a, 14b) has a second heat exchanger inlet (15a, 15b) and a second heat exchanger outlet (16a, 16b) on the low-temperature side, wherein the at least one second heat exchanger inlet (15a, 15b) is connectable or connected to the drinking water circuit (2), wherein cold drinking water (T) can be introduced into the at least one second heat exchanger (14a, 14b) from the drinking water circuit (2) via the second heat exchanger inlet (15a, 15b), wherein the second heat exchanger outlet (16a, 16b) is connected to the first heat exchanger inlet (10), wherein drinking water (T) heated by the first heat exchanger (9) and by the at least one second heat exchanger (14a, 14b) can be fed into the drinking water circuit (2) via the first heat exchanger outlet (11).

7. Hot water heating system according to one of claims 1 to 6, **characterized in that** the hot water heating system (1) comprises a second buffer device (13) for buffering heating water (E), wherein the second buffer device (13) is connected to the heating device (6) on the one hand and is connected to the heating connection (3) on the other hand.

8. Hot water heating system according to claim 6 and 7, **characterized in that** the at least one second heat exchanger (14a, 14b) is connected to the second buffer device (13) on the high-temperature side.

9. Hot water heating system according to claim 6, **characterized in that** the at least one second heat exchanger (14a, 14b) is connected to the heating connection (3) on the high-temperature side.

10. Hot water heating system according to one of claims 1 to 9, **characterized in that** the heating connection (3) comprises a heating flow line (3a) and a heating return line (3b), wherein the heating flow line (3a) is preferably connected to the heating return line (3b) via a temperature-control regulating valve (17) and/or via a non-return valve (34a), wherein at least one distribution regulating valve (18a, 18b, 18c, 18g, 18h) is preferably arranged in the heating connection (3), preferably in the heating flow line (3a).

11. Hot water heating system according to claim 10, **characterized in that** the heat pump device (7) is connected to the heating connection (3) via a heat pump connection (19), wherein a heat pump pump (20) and a heat pump regulating valve (21) are arranged in the heat pump connection (19), wherein an isolation regulating valve (22) is preferably additionally arranged in the heat pump connection (19).

12. Hot water heating system according to claim 10 or 11, **characterized in that** the heat pump device (7) is connected to the first buffer device (5) via a first buffer connection (23), wherein a first buffer pump (24) and a first buffer regulating valve (25) are arranged in the first buffer connection (23), wherein at least one distribution regulating valve (18d, 18e) is preferably additionally arranged in the first buffer connection (23), wherein the first buffer connection (23) is preferably connected to the heating connection (3) via a distribution connection (26), wherein at least one distribution regulating valve (18f) is arranged in the distribution connection (26).

13. Hot water heating system according to one of claims 10 to 12, **characterized in that** the first buffer device (5) is connected to the heating device (6) via a first heating connection (27), wherein a first heating pump (28) and a first heating regulating valve (29) are arranged in the first heating connection (27).

14. Hot water heating system according to claim 5 and 13, **characterized in that** the first heat exchanger (9) is connected to the first buffer device (5) on the high-temperature side via the first heating connection (27), wherein the first heat exchanger inlet (10) is preferably connectable or connected to a circulation circuit (12) comprising a circulation pump (39).

15. Hot water heating system according to claim 8 and 14, **characterized in that** the at least one second heat exchanger (14a, 14b) is connected to the second buffer device (13) on the high-temperature side via a second heating connection (30), wherein at least one second heating pump (31a, 31b) and at least one second heating regulating valve (32a, 32b) are arranged in the second heating connection (30).

16. Hot water heating system according to claim 9 and 14, **characterized in that** the at least one second heat exchanger (14a, 14b) is connected to the heating connection (3) on the high-temperature side, wherein at least one third heating pump (33a, 33b) and at least one distribution regulating valve (18b, 18c, 18g, 18h) are arranged in the heating connection (3).

17. Hot water heating system according to one of claims 10 to 16, **characterized in that** the hot water heating system (1) comprises a regulating device (35), wherein the regulating device (35) is connected in a signal-carrying manner to at least one regulating valve from a regulating valve group comprising one or more of the following regulating valves: temperature-control regulating valve (17), at least one distribution regulating valve (18a, 18b, 18c, 18d, 18e, 18f, 18g, 18h), heat pump regulating valve (21), isolation regulating valve (22), first buffer regulating valve (25), first heating regulating valve (29), at least one second heating regulating valve (32a, 32b), and is connected in a signal-carrying manner to at least one pump from a pump group comprising one or more of the following pumps: heat pump pump (20), first buffer pump (24), first heating pump (28), circulation pump (39), at least one second heating pump (31a, 31b), at least one third heating pump (33a, 33b), wherein at least one regulating valve from the regulating valve group and/or at least one pump from the pump group can be actuated by the regulating device (35).

18. Method of operating a hot water heating system (1) according to one of claims 1 to 17 connected to a drinking water circuit (2) and to a hot water circuit (4), **characterized in that** the heat pump device (7) is supplied with hot water (H) with a temperature of at least 20°C, preferably 28°C to 65°C, particularly preferably 60°C, from the hot water circuit (4).

19. Method of operating a hot water heating system (1) according to claim 17 connected to a drinking water circuit (2) and to a hot water circuit (4), **characterized in that** the heat pump device (7) is supplied with hot water (H) with a temperature of at least 20°C, preferably 28°C to 65°C, particularly preferably 60°C, from the hot water circuit (4) via the heating flow line (3a) of the heating connection (3), wherein at least one regulating valve from the regulating valve group and/or at least one pump from the pump group is or are regulated by the regulating device (35) such that hot water (H) with a temperature lower than or equal to 35°C is fed back to the hot water circuit (4) via the heating return line (3b) of the heating connection (3), wherein at least one regulating valve from the regulating valve group and/or at least one pump from the pump group is or are preferably regulated by the regulating device (35) such that hot water (H) with a temperature of from 15°C to 35°C, preferably 19°C, is fed back to the hot water circuit (4) via the heating return line (3b) of the heating connection (3).

## Revendications

1. Installation de préparation d'eau chaude (1) destinée à réchauffer de l'eau potable (T) d'un circuit d'eau potable (2) pouvant être raccordé ou raccordé à l'installation de préparation d'eau chaude (1), dans laquelle l'installation de préparation d'eau chaude (1) peut être raccordée à un circuit d'eau très chaude (4) par l'intermédiaire d'un raccordement de chauffage (3), avec un premier dispositif de mise en tampon (5) destiné à mettre en tampon de l'eau de réchauffage (E) et avec un dispositif de réchauffage (6) pouvant être raccordé au circuit d'eau potable (2), dans laquelle le dispositif de réchauffage (6) - destiné à réchauffer l'eau potable (T) par la chaleur de l'eau de réchauffage (E) - est raccordé au premier dispositif de mise en tampon (5), dans laquelle l'installation de préparation d'eau chaude (1) comprend un dispositif de pompe à chaleur (7) raccordé au raccordement de chauffage (3) comprenant au moins une pompe à chaleur (8), dans laquelle le dispositif de pompe à chaleur (7) est raccordé au premier dispositif de mise en tampon (5), **caractérisée en ce que**
le dispositif de réchauffage (6) est raccordé en supplément au raccordement de chauffage (3), dans laquelle le dispositif de réchauffage (6) comprend deux échangeurs de chaleur, qui utilisent d'une part la température d'une eau très chaude (H) du circuit d'eau très chaude (4) et d'autre part la température de l'eau de réchauffage (E) pour réchauffer l'eau potable (T) traversant le dispositif de réchauffage (6).

2. Installation de préparation d'eau chaude selon la revendication 1, **caractérisée en ce que** l'au moins une pompe à chaleur (8) est réalisée en tant que pompe à chaleur à haute température (8).

3. Installation de préparation d'eau chaude selon la revendication 1 ou 2, **caractérisée en ce que** l'au moins une pompe à chaleur (8) est réalisée de manière à élever une température d'entrée supérieure ou égale à 20 °C, de préférence à 39 °C, à une température de sortie supérieure ou égale à 70 °C, de préférence à 80 °C.

4. Installation de préparation d'eau chaude selon l'une quelconque des revendications 1 à 3, **caractérisée en ce que** un des deux échangeurs de chaleur (9, 14a, 14b, 17a, 17b) est raccordé côté haute température au premier dispositif de mise en tampon (5) et peut être raccordé ou est raccordé côté basse température au circuit d'eau potable (2).

5. Installation de préparation d'eau chaude selon l'une quelconque des revendications 1 à 4, **caractérisée en ce que** le dispositif de réchauffage (6) comprend un premier échangeur de chaleur (9), dans laquelle le premier échangeur de chaleur (9) est raccordé côté haute température au premier dispositif de mise en tampon (5), dans laquelle le premier échangeur de chaleur (9) présente côté basse température une première entrée d'échangeur de chaleur (10) et une première sortie d'échangeur de chaleur (11), dans laquelle de l'eau potable (T) à réchauffer provenant du circuit d'eau potable (2) peut être introduite dans le premier échangeur de chaleur (9) par l'intermédiaire de la première d'échangeur de chaleur (10), dans laquelle de l'eau potable (T) réchauffée par le premier échangeur de chaleur (9) peut être injectée dans le circuit d'eau potable (2) par l'intermédiaire de la première sortie d'échangeur de chaleur (11), dans laquelle de préférence la première entrée d'échangeur de chaleur (10) peut être raccordée ou est raccordée à un circuit de circulation (12).

6. Installation de préparation d'eau chaude selon la revendication 5, **caractérisée en ce que** le dispositif de réchauffage (6) comprend au moins un deuxième échangeur de chaleur (14a, 14b), dans laquelle l'au moins un deuxième échangeur de chaleur (14a, 14b) présente côté basse température une deuxième entrée d'échangeur de chaleur (15a, 15b) et une deuxième sortie d'échangeur de chaleur (16a, 16b), dans laquelle l'au moins une deuxième entrée d'échangeur de chaleur (15a, 15b) peut être raccordée ou est raccordée au circuit d'eau potable (2), dans laquelle de l'eau potable (T) froide provenant du circuit d'eau potable (2) peut être introduite dans l'au moins un deuxième échangeur de chaleur (14a, 14b) par l'intermédiaire de la deuxième entrée d'échangeur de chaleur (15a, 15b), dans laquelle la deuxième sortie d'échangeur de chaleur (16a, 16b) est raccordée à la première entrée d'échangeur de chaleur (10), dans laquelle de l'eau potable (T) réchauffée par le premier échangeur de chaleur (9) et l'au moins un deuxième échangeur de chaleur (14a, 14b) peut être injectée dans le circuit d'eau potable (2) par l'intermédiaire de la première sortie d'échangeur de chaleur (11).

7. Installation de préparation d'eau chaude selon l'une quelconque des revendications 1 à 6, **caractérisée en ce que** l'installation de préparation d'eau chaude (1) comprend un deuxième dispositif de mise en tampon (13) destiné à mettre en tampon de l'eau de réchauffage (E), dans laquelle le deuxième dispositif de mise en tampon (13) est raccordé d'une part au dispositif de réchauffage (6) et est raccordé d'autre part au raccordement de chauffage (3).

8. Installation de préparation d'eau chaude selon la revendication 6 et 7, **caractérisée en ce que** l'au moins un deuxième échangeur de chaleur (14a, 14b) est raccordé côté haute température au deuxième dispositif de mise en tampon (13).

9. Installation de préparation d'eau chaude selon la revendication 6, **caractérisée en ce que** l'au moins un deuxième échangeur de chaleur (14a, 14b) est raccordé côté haute température au raccordement de chauffage (3).

10. Installation de préparation d'eau chaude selon l'une quelconque des revendications 1 à 9, **caractérisée en ce que** le raccordement de chauffage (3) comprend une arrivée de chauffage (3a) et un retour de chauffage (3b), dans laquelle de préférence l'arrivée de chauffage (3a) est raccordée au retour de chauffage (3b) par l'intermédiaire d'une soupape de régulation de thermorégulation (17) et/ou par l'intermédiaire d'une soupape anti-retour (34a), dans laquelle au moins une soupape de régulation de répartition (18a, 18b, 18c, 18g, 18h) est disposée de préférence dans le raccordement de chauffage (3), de préférence dans l'arrivée de chauffage (3a).

11. Installation de préparation d'eau chaude selon la revendication 10, **caractérisée en ce que** le dispositif de pompe à chaleur (7) est raccordé au raccordement de chauffage (3) par l'intermédiaire d'un raccordement de pompe à chaleur (19), dans laquelle une pompe de pompe à chaleur (20) et une soupape de régulation de pompe à chaleur (21) sont disposées dans le raccordement de pompe à chaleur (19), dans laquelle de préférence en supplément une soupape de régulation de coupure (22) est disposée de préférence dans le raccordement de pompe à chaleur (19).

12. Installation de préparation d'eau chaude selon la revendication 10 ou 11, **caractérisée en ce que** le dispositif de pompe à chaleur (7) est raccordé au premier dispositif de mise en tampon (5) par l'intermédiaire d'un premier raccordement de mise en tampon (23), dans laquelle une première pompe de mise en tampon (24) et une première soupape de régulation de mise en tampon (25) sont disposées dans le premier raccordement de mise en tampon (23), dans laquelle en supplément au moins une soupape de régulation de répartition (18d, 18e) est disposée de préférence dans le premier raccordement de mise en tampon (23), dans laquelle de préférence le premier raccordement de mise en tampon (23) est raccordé au raccordement de chauffage (3) par l'intermédiaire d'un raccordement de répartition (26), dans laquelle au moins une soupape de régulation de répartition (18f) est disposée dans le raccordement de répartition (26).

13. Installation de préparation d'eau chaude selon l'une quelconque des revendications 10 à 12, **caractérisée en ce que** le premier dispositif de mise en tampon (5) est raccordé au dispositif de réchauffage (6) par l'intermédiaire d'un premier raccordement de réchauffage (27), dans laquelle une première pompe de réchauffage (28) et une première soupape de régulation de réchauffage (29) sont disposées dans le premier raccordement de réchauffage (27).

14. Installation de préparation d'eau chaude selon la revendication 5 et 13, **caractérisée en ce que** le premier échangeur de chaleur (9) est raccordé au premier dispositif de mise en tampon (5) côté haute température par l'intermédiaire du premier raccordement de réchauffage (27), dans laquelle de préférence la première entrée d'échangeur de chaleur (10) peut être raccordée ou est raccordée à un circuit de circulation (12) comprenant une pompe de circulation (39).

15. Installation de préparation d'eau chaude selon la revendication 8 et 14, **caractérisée en ce que** l'au moins un deuxième échangeur de chaleur (14a, 14b) est raccordé au deuxième dispositif de mise en tampon (13) côté haute température par l'intermédiaire d'un deuxième raccordement de réchauffage (30), dans laquelle au moins une deuxième pompe de réchauffage (31a, 31b) et au moins une deuxième soupape de régulation de réchauffage (32a, 32b) sont disposées dans le deuxième raccordement de réchauffage (30).

16. Installation de préparation d'eau chaude selon la revendication 9 et 14, **caractérisée en ce que** l'au moins un deuxième échangeur de chaleur (14a, 14b) est raccordé côté haute température au raccordement de chauffage (3), dans laquelle au moins une troisième pompe de réchauffage (33a, 33b) et au moins une soupape de régulation de répartition (18b, 18c, 18g, 18h) sont disposées dans le raccordement de chauffage (3).

17. Installation de préparation d'eau chaude selon l'une quelconque des revendications 10 à 16, **caractérisée en ce que** l'installation de préparation d'eau chaude (1) comprend un dispositif de régulation (35), dans laquelle le dispositif de régulation (35) est raccordé avec acheminement de signaux à au moins une soupape de régulation issue d'un groupe de soupapes de régulation comprenant une ou plusieurs des soupapes de régulation suivantes : soupape de régulation de thermorégulation (17), au moins une soupape de régulation de répartition (18a, 18b, 18c, 18d, 18e, 18f, 18g, 18h), une soupape de régulation de pompe à chaleur (21), une soupape de régulation de coupure (22), une première soupape de régulation de mise en tampon (25), une première soupape de régulation de réchauffage (29), au moins une deuxième soupape de régulation de réchauffage (32a, 32b), et est raccordé avec acheminement de signaux à au moins une pompe issue d'un groupe de pompes comprenant une ou plusieurs des pompes suivantes : pompe de pompe à chaleur (20), une première pompe de mise en tampon (24), une première pompe de réchauffage (28), une pompe de circulation (39), au moins une deuxième pompe de réchauffage (31a, 31b), au moins une troisième pompe de réchauffage (33a, 33b), dans laquelle au moins une soupape de régulation issue du groupe de soupapes de régulation et/ou une pompe issue du groupe de pompes peuvent être pilotées par le dispositif de régulation (35).

18. Procédé pour faire fonctionner une installation de préparation d'eau chaude (1) selon l'une quelconque des revendications 1 à 17 raccordée à un circuit d'eau potable (2) et à un circuit d'eau très chaude (4), **caractérisé en ce que** de l'eau chaude (H) avec une température d'au moins 20 °C, de préférence de 28 °C à 65 °C, de manière particulièrement préférée de 60 °C, est amenée au dispositif de pompe à chaleur (7) depuis le circuit d'eau très chaude (4).

19. Procédé pour faire fonctionner une installation de préparation d'eau chaude (1) selon la revendication 17 raccordée à un circuit d'eau potable (2) et à un circuit d'eau très chaude (4), **caractérisé en ce que** de l'eau très chaude (H) avec une température d'au moins 20 °C, de préférence de 28 °C à 65 °C, de manière particulièrement préférée de 60 °C, est amenée au dispositif de pompe à chaleur (7) depuis le circuit d'eau très chaude (4) par l'intermédiaire de l'arrivée de chauffage (3a) du raccordement de chauffage (3), dans lequel au moins une soupape de régulation issue du groupe de soupapes de régulation et/ou au moins une pompe issue du groupe de pompes sont régulées par le dispositif de régulation (35) de telle manière que de l'eau très chaude (H) avec une température inférieure ou égale à 35 °C est réinjectée sur le circuit d'eau très chaude (4) par l'intermédiaire du retour de chauffage (3b) du raccordement de chauffage (3), dans lequel de préférence au moins une soupape de régulation issue du groupe de soupapes de régulation et/ou au moins une pompe issue du groupe de pompes sont régulées de préférence par le dispositif de régulation (35) de telle manière que de l'eau très chaude (H) avec une température de 15 °C à 35 °C, de préférence de 19 °C, est réinjectée sur le circuit d'eau très chaude (4) par l'intermédiaire du retour de chauffage (3b) du raccordement de chauffage (3).
